(19) Europäisches Patentamt
European Patent Office
Office européen des brevets

(11) **EP 4 711 432 A1**

(12) **EUROPEAN PATENT APPLICATION**
published in accordance with Art. 153(4) EPC

(43) Date of publication:
**18.03.2026 Bulletin 2026/12**

(21) Application number: **24803529.7**

(22) Date of filing: **09.05.2024**

(51) International Patent Classification (IPC):
***C09J 7/38*** (2018.01) ***B32B 27/00*** (2006.01)
***C08L 33/04*** (2006.01) ***C08L 101/00*** (2006.01)
***C09J 7/22*** (2018.01) ***C09J 109/06*** (2006.01)
***C09J 133/00*** (2006.01) ***C09J 133/02*** (2006.01)
***C09J 133/04*** (2006.01) ***C09J 133/06*** (2006.01)
***C09J 133/14*** (2006.01) ***C09J 153/02*** (2006.01)

(52) Cooperative Patent Classification (CPC):
**B32B 27/00; C08L 33/04; C08L 101/00; C09J 7/22; C09J 7/38; C09J 109/06; C09J 133/00; C09J 133/02; C09J 133/04; C09J 133/06; C09J 133/14; C09J 153/02**

(86) International application number:
**PCT/JP2024/017302**

(87) International publication number:
**WO 2024/232420 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.05.2023 JP 2023078815**
**13.06.2023 JP 2023096939**
**13.10.2023 JP 2023177797**

(71) Applicant: **Sekisui Chemical Co., Ltd.**
**Osaka-shi, Osaka 530-8565 (JP)**

(72) Inventors:
- **SHIMOJITOSHO, Akira**
**Inukami-gun, Shiga 522-0314 (JP)**
- **OGATA, Yudai**
**Mishima-gun, Osaka 618-0021 (JP)**
- **SATOU, Fumiya**
**Mishima-gun, Osaka 618-0021 (JP)**
- **KAWAHARA, Ryousuke**
**Inukami-gun, Shiga 522-0314 (JP)**
- **OGATA, Nagisa**
**Mishima-gun, Osaka 618-0021 (JP)**
- **TANIMOTO, Takayuki**
**Mishima-gun, Osaka 618-0021 (JP)**
- **FUKUOKA, Ayane**
**Mishima-gun, Osaka 618-0021 (JP)**

(74) Representative: **Cabinet Beau de Loménie**
**103, rue de Grenelle / CS 90800**
**75340 Paris Cedex 07 (FR)**

# (54) ADHESIVE TAPE, CHEMICAL SOLUTION TANK, AND METHOD FOR PRODUCING CHEMICAL SOLUTION TANK

(57) The present invention provides an adhesive tape that has excellent holding performance and low potential for contaminating adherends and that can facilitate fluororesin bonding. The present invention also aims to provide a chemical tank including the adhesive tape attached thereto. The present invention also aims to provide a method for producing a chemical tank using the adhesive tape. Provided is an adhesive tape, including: a substrate; and a first adhesive layer adjacent to one surface of the substrate, the substrate including a fluororesin-containing resin film, the first adhesive layer containing a base polymer (P1) and a tackifier resin, the base polymer (P1) including at least one selected from the group consisting of a (meth)acrylic copolymer and a styrene elastome

EP 4 711 432 A1

FIG.1

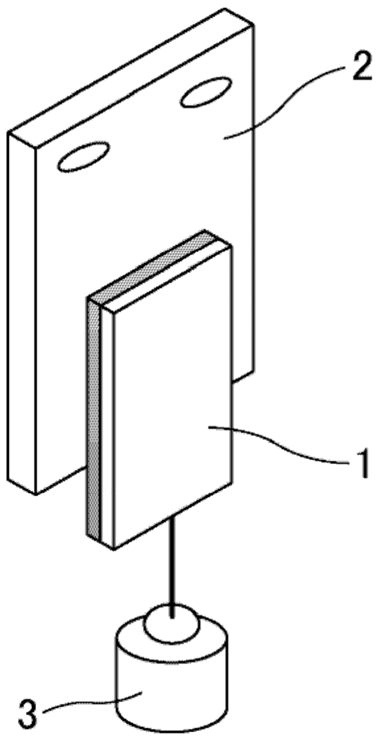

## Description

TECHNICAL FIELD

The present invention relates to an adhesive tape. The present invention also relates to a chemical tank including the adhesive tape attached thereto. The present invention also relates to a method for producing a chemical tank using the adhesive tape.

BACKGROUND ART

Adhesive tapes have been widely used to fix components in electronic devices. Specifically, for example, adhesive tapes are used to bond a cover panel for protecting a surface of a portable electronic device to a touch panel module or display panel module, or to bond a touch panel module to a display panel module. These adhesive tapes for fixing electronic device components are required to have high adhesion, as well as functions such as heat resistance, heat conductivity, and shock resistance according to the environment in which the tape is used (e.g., Patent Literatures 1 to 3).

CITATION LIST

- Patent Literature

Patent Literature 1: JP 2015-052050 A
Patent Literature 2: JP 2015-021067 A
Patent Literature 3: JP 2015-120876 A

SUMMARY OF INVENTION

- Technical problem

In recent years, the demand for fluororesins has been increasing owing to their excellent heat resistance, chemical resistance, low-dielectric properties, and water repellency. For example, tetrafluoroethylene copolymers (PTFE), which have high mechanical strength and excellent processability, are used in a wide range of fields including electric wire coverings and building materials.

Fluororesins are generally bonded to different materials. However, bonding them using common adhesive tapes is difficult because adhesive tapes tend not to exhibit adhesion on fluororesins. Thus, a fluororesin is usually bonded to a different material by, for example, a method of performing adhesion-promoting treatment on the surface of the fluororesin and applying liquid adhesive to the fluororesin, a method of attaching via an adhesive tape including silicone adhesive, or a method of performing alkali hydrophilization treatment on the surface of the fluororesin and thereby enhancing the adhesion of the adhesive. Unfortunately, the use of liquid adhesive complicates the process. The use of silicone adhesive may contaminate adherends due to the volatilization or permeation of low-molecular components. The alkali hydrophilization treatment generates liquid waste which may cause environmental pollution.

The present invention provides an adhesive tape that has excellent holding performance and low potential for contaminating adherends and that can facilitate fluororesin bonding. The present invention also aims to provide a chemical tank including the adhesive tape attached thereto. The present invention also provides a method for producing a chemical tank using the adhesive tape.

- Solution to problem

The disclosure 1 relates to an adhesive tape, including: a substrate; and a first adhesive layer adjacent to one surface of the substrate, the substrate including a fluororesin-containing resin film, the first adhesive layer containing a base polymer (P1) and a tackifier resin, the base polymer (P1) including at least one selected from the group consisting of a (meth)acrylic copolymer and a styrene elastomer.

The disclosure 2 relates to the adhesive tape according to the disclosure 1, wherein the adhesive tape includes the substrate, the first adhesive layer, an intermediate layer, and a second adhesive layer in this order, the second adhesive layer contains a base polymer (P2), and the base polymer (P2) includes at least one selected from the group consisting of a (meth)acrylic copolymer and a styrene elastomer.

The disclosure 3 relates to the adhesive tape according to the disclosure 2, wherein the second adhesive layer

has a probe tack value of 20 N/5 mmφ or less as measured at 23°C, a pressuring pressure of 98 gf, a pressuring speed of 100 mm/sec, a pressuring time of 10 seconds, and a withdrawal speed of 5 mm/sec.

The disclosure 4 relates to the adhesive tape according to the disclosure 1, wherein the adhesive tape includes the substrate, the first adhesive layer, and a hot-melt adhesive layer in this order.

The disclosure 5 relates to the adhesive tape according to the disclosure 1, 2, 3, or 4, wherein the (meth)acrylic copolymer in the base polymer (P1) contains a structural unit derived from an alkyl (meth)acrylate containing a C4-C12 alkyl group at an ester end and at least one structural unit selected from the group consisting of a structural unit derived from a carboxy group-containing (meth)acrylate and a structural unit derived from a hydroxy group-containing (meth) acrylate.

The disclosure 6 relates to the adhesive tape according to the disclosure 5, wherein the alkyl (meth)acrylate containing a C4-C12 alkyl group at an ester end includes an alkyl (meth)acrylate containing a C6-C8 alkyl group at an ester end.

The disclosure 7 relates to the adhesive tape according to the disclosure 5 or 6, wherein the alkyl (meth)acrylate containing a C4-C12 alkyl group at an ester end includes n-heptyl (meth)acrylate.

The disclosure 8 relates to the adhesive tape according to the disclosure 6 or 7, wherein in the (meth)acrylic copolymer, a structural unit derived from the alkyl (meth)acrylate containing a C6-C8 alkyl group at an ester end is contained in a proportion of 50% by mass or more and 99.5% by mass or less.

The disclosure 9 relates to the adhesive tape according to the disclosure 1, 2, 3, 4, 5, 6, 7, or 8, wherein the tackifier resin includes a tackifier resin (T1) that contains at least one structural unit (A) selected from the group consisting of a structural unit (A-1), a structural unit (A-1'), a structural unit (A-2), a structural unit (A-2'), a structural unit (A-3), a structural unit (A-3'), a structural unit (A-4), and a structural unit (A-4') that are represented by the following formulas.

The disclosure 10 relates to the adhesive tape according to the disclosure 9, wherein the tackifier resin (T1) further contains a structural unit (B) derived from at least one monomer (b) selected from the group consisting of a terpene monomer and a vinyl monomer.

The disclosure 11 relates to the adhesive tape according to the disclosure 9 or 10, wherein the tackifier resin (T1) is contained in an amount of 5 parts by mass or more and 50 parts by mass or less relative to 100 parts by mass of the base polymer (P1).

The disclosure 12 relates to the adhesive tape according to the disclosure 1, 2, 3, 4, 5, 6, 7, 8, 9, 10, or 11, wherein the tackifier resin includes at least one tackifier resin (T2) selected from the group consisting of a rosin ester resin, a terpene resin, a terpene phenol resin, and a petroleum resin.

The disclosure 13 relates to the adhesive tape according to the disclosure 12, wherein the tackifier resin (T2) includes a rosin ester resin.

The disclosure 14 relates to the adhesive tape according to the disclosure 12 or 13, wherein the tackifier resin (T2) has a softening temperature of 50°C or higher and 200°C or lower.

The disclosure 15 relates to the adhesive tape according to the disclosure 1, 2, 3, 4, 5, 6, 7, 8, 9, 10, 11, 12, 13, or 14, wherein the first adhesive layer contains no organosilicon compound or contains an organosilicon compound in a proportion of 3.0% by mass or less.

The disclosure 16 relates to the adhesive tape according to the disclosure 1, 2, 3, 4, 5, 6, 7, 8, 9, 10, 11, 12, 13, 14, or 15, wherein the first adhesive layer has a 180° peeling force at 23°C for the substrate of 2.5 N/25 mm or greater.

The disclosure 17 relates to the adhesive tape according to the disclosure 1, 2, 3, 4, 5, 6, 7, 8, 9, 10, 11, 12, 13, 14, 15, or 16, wherein the first adhesive layer has a loss tangent (tanδ) that has a peak in a temperature range from -30°C to 15°C as measured by dynamic viscoelasticity measurement at a frequency of 10 Hz.

The disclosure 18 relates to the adhesive tape according to the disclosure 17, wherein the first adhesive layer has a shear storage modulus at 25°C of $1.0 \times 10^4$ Pa or greater and $5.0 \times 10^5$ Pa or less as measured by dynamic viscoelasticity measurement at a frequency of 10 Hz, and has a loss tangent (tanδ) that has a peak in a temperature range from -30°C to 15°C as measured by dynamic viscoelasticity measurement at a frequency of 10 Hz.

The disclosure 19 relates to the adhesive tape according to the disclosure 1, 2, 3, 4, 5, 6, 7, 8, 9, 10, 11, 12, 13, 14, 15, 16, 17, or 18, wherein the first adhesive layer has a gel fraction of 15% by mass or greater and 70% by mass or less.

The disclosure 20 relates to the adhesive tape according to the disclosure 1, 2, 3, 4, 5, 6, 7, 8, 9, 10, 11, 12, 13, 14, 15, 16, 17, 18, or 19, wherein the first adhesive layer has a thickness of 20 μm or greater and 500 μm or less.

The disclosure 21 relates to the adhesive tape according to the disclosure 1, 2, 3, 4, 5, 6, 7, 8, 9, 10, 11, 12, 13, 14, 15, 16, 17, 18, 19, or 20, wherein the fluororesin-containing resin film includes at least one selected from the group consisting of a fluororesin-impregnated glass cloth and a laminate film including a fluororesin layer and a glass cloth layer.

The disclosure 22 relates to the adhesive tape according to the disclosure 1, 2, 3, 4, 5, 6, 7, 8, 9, 10, 11, 12, 13, 14, 15, 16, 17, 18, 19, 20, or 21, wherein the substrate has a thickness of 50 μm or greater and 5,000 μm or less.

The disclosure 23 relates to the adhesive tape according to the disclosure 2 or 3, wherein the second adhesive layer has a 180° peeling force at 23°C for SUS of 8.0 N/25 mm or less.

The disclosure 24 relates to the adhesive tape according to the disclosure 2, 3, or 23, wherein the second

adhesive layer has a thickness of 20 μm or greater and 500 μm or less.

The disclosure 25 relates to the adhesive tape according to the disclosure 2, 3, 23, or 24, wherein the intermediate layer contains at least one selected from the group consisting of a polyester resin, a polyimide resin, a polyolefin resin, a polyurethane resin, a glass fiber, a carbon fiber, and a metal.

The disclosure 26 relates to the adhesive tape according to the disclosure 2, 3, 23, 24, or 25, wherein the intermediate layer has a foam structure.

The disclosure 27 relates to the adhesive tape according to the disclosure 4, wherein the adhesive tape has a 180° peeling force at 23°C for SUS of 5.0 N/25 mm or greater when the hot-melt adhesive layer is pressure-bonded to SUS at 0.1 MPa for 10 minutes in an environment at 150°C.

The disclosure 28 relates to the adhesive tape according to the disclosure 4 or 27, wherein the hot-melt adhesive layer contains a base polymer (P3), and the base polymer (P3) contains at least one selected from the group consisting of a (meth)acrylic copolymer, a styrene elastomer, an ethylene-vinyl acetate copolymer, a chloroprene rubber, a nitrile rubber, a polyurethane resin, a polyamide resin, a polyolefin resin, a polyester resin, and an epoxy resin.

The disclosure 29 relates to the adhesive tape according to the disclosure 1, 2, 3, 4, 5, 6, 7, 8, 9, 10, 11, 12, 13, 14, 15, 16, 17, 18, 19, 20, 21, 22, 23, 24, 25, 26, 27, or 28, which is used for protecting an adherend.

The disclosure 30 relates to the adhesive tape according to the disclosure 29, which is used for protecting an adherend from a chemical liquid.

The disclosure 31 relates to the adhesive tape according to the disclosure 30, which is used for lining a tank body of a chemical tank for a semiconductor or of a chemical tank for a chemical industry.

The disclosure 32 relates to a chemical tank including: a tank body; and the adhesive tape according to the disclosure 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, or 31 attached to an inner surface of the tank body.

The disclosure 33 relates to a method for producing a chemical tank for a semiconductor or a chemical tank for a chemical industry, the method including a step of attaching the adhesive tape according to the disclosure 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, or 31 to an inner surface of a tank body of a chemical tank.

[Chem. 1]

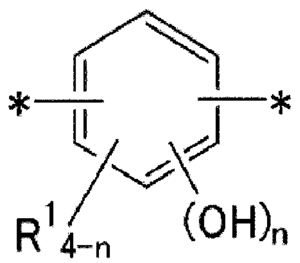

(A-1)

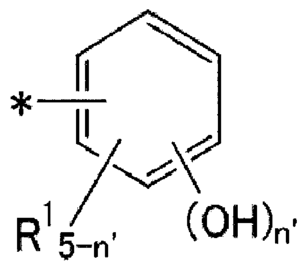

(A-1')

[Chem. 2]

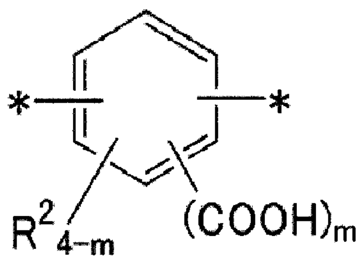

(A-2)

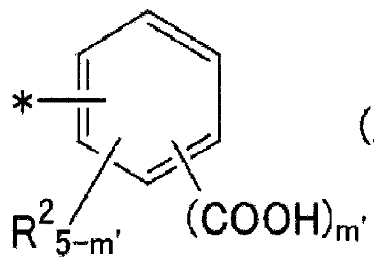

(A-2')

[Chem. 3]

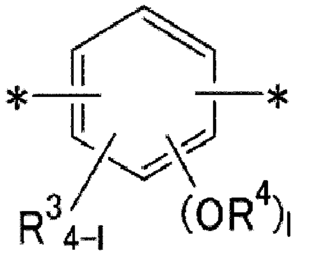

(A-3)

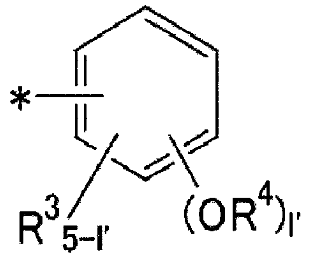

(A-3')

[Chem. 4]

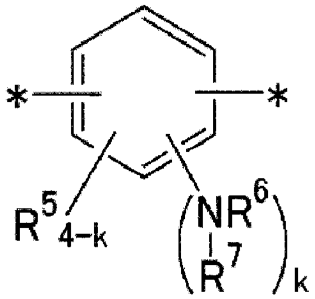

(A-4)

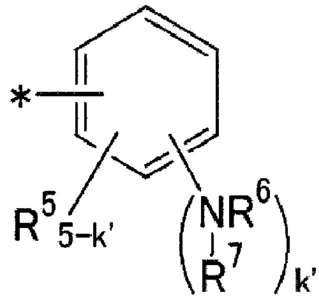

(A-4')

In the formulas, $R^1$ to $R^7$ each represent a hydrogen atom, an aliphatic hydrocarbon group, an aromatic hydrocarbon group, a polar functional group, an aliphatic hydrocarbon group containing a polar functional group, or an aromatic hydrocarbon group containing a polar functional group; n and l each represent an integer of 2 or greater and 4 or less; n' and l' each represent an integer of 2 or greater and 5 or less; m and k each represent an integer of 1 or greater and 4 or less; m' and k' each represent an integer of 1 or greater and 5 or less; and * represents a linking moiety.

The present invention is described in detail below.

The present inventors considered an adhesive tape including a substrate and an adhesive layer adjacent to the substrate, wherein the substrate includes a fluororesin-containing resin film, the adhesive layer contains a (meth)acrylic copolymer and/or a styrene elastomer as a base polymer, and the adhesive layer contains a tackifier resin. As a result, the inventors found out that the adhesive tape can have excellent holding performance and low potential for contaminating adherends and facilitate fluororesin bonding. The present invention is thus completed.

The "(meth)acrylic" herein refers to acrylic or methacrylic. The "base polymer" herein refers to a polymer that constitutes 50% by mass or more of the polymers having a weight average molecular weight of 50,000 or greater in the adhesive layer.

The adhesive tape of the present invention includes a substrate.

The substrate includes a fluororesin-containing resin film. With the substrate including a fluororesin-containing resin film, the adhesive tape of the present invention can easily bond a fluororesin to a different material.

Examples of the fluororesin contained in the fluororesin-containing resin film include polytetrafluoroethylene (PTFE), perfluoroalkoxy alkanes (PFA), perfluoroethylenepropene copolymers (FEP), ethylenetetrafluoroethylene copolymers (ETFE), polyvinylidene fluoride (PVDF), polyvinyl fluoride (PVF), polychlorotrifluoroethylene (PCTFE), and ethylenechlorotrifluoroethylene copolymers (ECTFE). In particular, PTFE is preferred because it has excellent heat resistance and excellent chemical resistance.

The fluororesin-containing resin film may be any film and may include at least one selected from the group consisting of a fluororesin-impregnated glass cloth film and a laminate film including a fluororesin layer and a glass cloth layer. When the fluororesin-containing resin film includes at least one selected from the group consisting of a fluororesin-impregnated glass cloth film and a laminate film including a fluororesin layer and a glass cloth layer, the substrate and the first adhesive layer have more interfaces therebetween and can be more reliably bonded to each other.

Examples of the fluororesin-impregnated glass cloth film include PTFE-Impregnated Glass Cloth Sheet (available from Chukoh Chemical Industries, Ltd.).

Examples of the laminate film including a fluororesin layer and a glass cloth layer include Glass Backed Sheet (available from Yodogawa Hu-Tech Co., Ltd.).

The lower limit of the thickness of the substrate is preferably 20 μm, and the upper limit thereof is preferably 5,000 μm. When the thickness of the substrate is 20 μm or greater, a sufficient thickness of fluororesin can be bonded to an adherend, so that the resulting adhesive tape can be more suitable for purposes such as adherend protection. When the thickness of the substrate is 5,000 μm or less, the adhesive tape can be easily made into a roll, leading to improved

production efficiency. The lower limit of the thickness of the substrate is more preferably 40 μm, and the upper limit thereof is more preferably 3,000 μm.

The thickness herein can be measured using a dial thickness gauge (e.g., ABS Digimatic Indicator available from Mitutoyo Corporation).

The adhesive tape of the present invention includes a first adhesive layer adjacent to one surface of the substrate.

The first adhesive layer contains a base polymer (P1).

The base polymer (P1) contains one selected from the group consisting of a (meth)acrylic copolymer and a styrene elastomer. With the first adhesive layer containing one selected from the group consisting of a (meth)acrylic copolymer and a styrene elastomer, the resulting adhesive tape can have lower potential for contaminating adherends. In particular, the base polymer (P1) preferably contains a (meth)acrylic copolymer because it can form a crosslinked structure and thereby further improve the holding performance of the resulting adhesive tape.

The (meth)acrylic copolymer preferably contains a structural unit derived from an alkyl (meth)acrylate.

The alkyl (meth)acrylate preferably includes an alkyl (meth)acrylate containing a C4-C12 alkyl group at an ester end. In other words, the (meth)acrylic copolymer preferably contains a structural unit derived from an alkyl (meth)acrylate containing a C4-C12 alkyl group at an ester end. When the (meth)acrylic copolymer contains a structural unit derived from an alkyl (meth)acrylate containing a C4-C12 alkyl group at an ester end, the (meth)acrylic copolymer has a lower glass transition temperature (Tg). As a result, the later-described shear storage modulus at 25°C of the adhesive layer as measured by dynamic viscoelasticity measurement at a frequency of 10 Hz (hereinafter also simply referred to as "the shear storage modulus at 25°C of the first adhesive layer") can be moderately lowered, and the flexibility of the first adhesive layer can be further improved. The first adhesive layer thus can have improved adhesion to fluororesins and also more closely adhere to the substrate.

The (meth)acrylate herein refers to acrylate or methacrylate.

The "alkyl (meth)acrylate containing an alkyl group at an ester end" herein refers to a (meth)acrylate containing an alkyl group bound to an oxygen atom of an ester bond.

Examples of the alkyl (meth)acrylate containing a C4-C12 alkyl group at an ester end include n-butyl (meth)acrylate, tert-butyl (meth)acrylate, 2-ethylhexyl (meth)acrylate, n-hexyl (meth)acrylate, n-heptyl (meth)acrylate, n-octyl (meth)acrylate, isooctyl (meth)acrylate, n-nonyl (meth)acrylate, isononyl (meth)acrylate, 1-methylheptyl (meth)acrylate, and lauryl (meth)acrylate. In particular, to further improve the adhesion of the adhesive tape (particularly adhesion to fluororesins), the alkyl (meth)acrylate containing a C4-C12 alkyl group at an ester end preferably includes an alkyl (meth)acrylate containing a C6-C8 alkyl group at an ester end, more preferably n-heptyl (meth)acrylate. Each of these alkyl (meth)acrylates containing a C4-C12 alkyl group at an ester end may be used alone, or two or more of them may be used in combination.

Generally, an alkyl (meth)acrylate containing an odd-carbon-number alkyl group at an ester end tends to have a lower glass transition temperature (Tg) because of poor packing of the molecules thereof. Thus, when the (meth)acrylic copolymer contains a structural unit derived from n-heptyl (meth)acrylate, packing of the alkyl groups present at the ester ends in the (meth)acrylic copolymer can be further suppressed, leading to an even lower glass transition temperature (Tg) of the (meth)acrylic copolymer. As a result, the shear storage modulus at 25°C of the first adhesive layer can be moderately lowered, and the flexibility of the first adhesive layer can be further improved. The first adhesive layer thus can have improved adhesion to fluororesins and also more closely adhere to the substrate.

In the (meth)acrylic copolymer, the lower limit of the proportion of the structural unit derived from an alkyl (meth)acrylate containing a C4-C12 alkyl group at an ester end is preferably 50% by mass. When the proportion of the structural unit derived from an alkyl (meth)acrylate containing a C4-C12 alkyl group at an ester end is 50% by mass or more, the (meth)acrylic copolymer has a lower glass transition temperature (Tg). As a result, the later-described shear storage modulus at 25°C of the adhesive layer is moderately lowered, and the flexibility of the first adhesive layer can be further improved. The first adhesive layer thus can more closely adhere to the substrate. The lower limit of the proportion of the structural unit derived from an alkyl (meth)acrylate containing a C4-C12 alkyl group at an ester end is more preferably 90% by mass, still more preferably 95% by mass.

The upper limit of the proportion of the structural unit derived from an alkyl (meth)acrylate containing a C4-C12 alkyl group at an ester end may be 99.99% by mass, but from the standpoint of the bulk cohesion of the first adhesive layer, the upper limit is preferably 99% by mass.

In the (meth)acrylic copolymer, the lower limit of the proportion of a structural unit derived from the alkyl (meth)acrylate containing a C6-C8 alkyl group at an ester end is preferably 50% by mass. When the proportion of the structural unit derived from the alkyl (meth)acrylate containing a C6-C8 alkyl group at an ester end is 50% by mass or more, the (meth)acrylic copolymer has a lower glass transition temperature (Tg). As a result, the later-described shear storage modulus at 25°C of the adhesive layer is moderately lowered, and the flexibility of the first adhesive layer can be further improved. The first adhesive layer thus can more closely adhere to the substrate. The lower limit of the proportion of the structural unit derived from the alkyl (meth)acrylate containing a C6-C8 alkyl group at an ester end is more preferably 85% by mass, still more preferably 90% by mass.

From the standpoint of the bulk cohesion of the first adhesive layer, the upper limit of the proportion of the structural unit derived from an alkyl (meth)acrylate containing a C4-C12 alkyl group at an ester end is preferably 99.5% by mass, more preferably 99% by mass.

The alkyl (meth)acrylate may include a different alkyl (meth)acrylate other than the alkyl (meth)acrylate containing a C4-C12 alkyl group at an ester end. Examples of the different alkyl (meth)acrylate include methyl (meth) acrylate, ethyl (meth)acrylate, propyl (meth)acrylate, myristyl (meth)acrylate, cetyl (meth)acrylate, stearyl (meth)acrylate, cyclohexyl (meth)acrylate, isobornyl (meth)acrylate, an ester of 5,7,7-trimethyl-2-(1,3,3-trimethylbutyl)octanol-1 and (meth)acrylic acid, an ester of (meth)acrylic acid and an alcohol having one or two methyl groups in a linear backbone and having a total carbon number of 18, behenyl (meth)acrylate, and arachidyl (meth)acrylate. Each of these different alkyl (meth)acrylates may be used alone, or two or more of them may be used in combination.

The (meth)acrylic copolymer preferably further contains a structural unit derived from a polar functional group-containing monomer. When the (meth)acrylic copolymer contains a structural unit derived from a polar functional group-containing monomer, the first adhesive layer can have high bulk cohesion, and the resulting adhesive tape can have further improved adhesion and holding performance.

The polar functional group has reactivity such as cross-linking reactivity. The polar functional group is preferably at least one selected from the group consisting of a carboxy group, a hydroxy group, an amino group, and an epoxy group. In particular, to further contribute to improvement of the adhesion or holding performance of the resulting adhesive tape, the polar functional group is more preferably at least one selected from the group consisting of a carboxy group and a hydroxy group. The (meth)acrylic copolymer preferably contains at least one structural unit selected from the group consisting of a structural unit derived from a carboxy group-containing (meth)acrylate and a structural unit derived from a hydroxy group-containing (meth)acrylate.

Example of the carboxy group-containing monomer include (meth)acrylic acid.

Examples of the hydroxy group-containing monomer include 4-hydroxybutyl (meth)acrylate, 2-hydroxypropyl (meth)acrylate, and 2-hydroxyethyl (meth)acrylate.

Example of the epoxy group-containing monomer include glycidyl (meth)acrylate.

Each of these polar functional group-containing monomers may be used alone, or two or more of them may be in combination.

In the (meth)acrylic copolymer, the lower limit of the proportion of the structural unit derived from a carboxy group-containing monomer is preferably 0.01% by mass, and the upper limit thereof is preferably 7.0% by mass. When the proportion of the structural unit derived from a carboxy group-containing monomer is in the range, the bulk cohesion of the first adhesive layer can be appropriately adjusted, so that the resulting adhesive tape can have better adhesion and better holding performance. The lower limit of the proportion of the structural unit derived from a carboxy group-containing monomer is more preferably 0.05% by mass, and the upper limit thereof is more preferably 5.0% by mass.

In the (meth)acrylic copolymer, the lower limit of the proportion of the structural unit derived from a hydroxy group-containing monomer is preferably 0.01% by mass, and the upper limit thereof is preferably 3.0% by mass. When the proportion of the structural unit derived from a hydroxy group-containing monomer is in the range, the bulk cohesion of the first adhesive layer can be appropriately adjusted, so that the resulting adhesive tape can have better adhesion and better holding performance. The lower limit of the proportion of the structural unit derived from a hydroxy group-containing monomer is more preferably 0.05% by mass, and the upper limit thereof is more preferably 2.0% by mass.

In the (meth)acrylic copolymer, the lower limit of the total proportion of the structural units derived from a polar functional group-containing monomer is preferably 0.01% by mass, and the upper limit thereof is preferably 10.0% by mass. When the total proportion of the structural units derived from a polar functional group-containing monomer is in the range, the bulk cohesion of the first adhesive layer can be appropriately adjusted, so that the resulting adhesive tape can have better adhesion and better holding performance. The lower limit of the total proportion of the structural units derived from a polar functional group-containing monomer is more preferably 0.1% by mass, and the upper limit thereof is more preferably 7.0% by mass.

As necessary, the (meth)acrylic copolymer may contain a structural unit derived from a different copolymerizable monomer other than the above-described structural unit derived from an alkyl (meth)acrylate and the above-described structural unit derived from a polar functional group-containing monomer. Examples of the different monomer include benzyl (meth)acrylate, 2-butoxyethyl (meth)acrylate, 2-phenoxyethyl (meth)acrylate, tetrahydrofurfuryl (meth)acrylate, and polypropylene glycol mono(meth)acrylate. Examples of the different monomer also include various monomers used for common acrylic polymers, such as vinyl carboxylates (e.g., vinyl acetate) and styrene. Each of these different monomers may be used alone, or two or more of them may be used in combination.

The lower limit of the weight average molecular weight (Mw) of the (meth)acrylic copolymer is preferably 200,000, and the upper limit thereof is preferably 2,000,000. When the weight average molecular weight (Mw) of the (meth)acrylic copolymer is 200,000 or greater, the first adhesive layer can have improved bulk cohesion, and the resulting adhesive tape can have further improved adhesion and holding performance. When the weight average molecular weight (Mw) of the (meth)acrylic copolymer is 2,000,000 or less, the first adhesive layer can more closely adhere to the substrate. The lower

limit of the weight average molecular weight (Mw) of the (meth)acrylic copolymer is more preferably 300,000, and the upper limit thereof is more preferably 1,600,000. The lower limit is still more preferably 500,000, and the upper limit is still more preferably 1,200,000.

The lower limit of the ratio of the weight average molecular weight (Mw) to the number average molecular weight (Mn) of the (meth)acrylic copolymer (molecular weight distribution, Mw/Mn) is preferably 1.05, and the upper limit thereof is preferably 10.0. When the molecular weight distribution (Mw/Mn) of the (meth)acrylic copolymer is 1.05 or greater, the first adhesive layer can have further improved flexibility, and the resulting adhesive tape can have further improved adhesion to fluororesins. When the molecular weight distribution (Mw/Mn) of the (meth)acrylic copolymer is 10.0 or less, the proportion of low-molecular components is low, so that the first adhesive layer can have improved bulk cohesion, and the resulting adhesive tape can have further improved adhesion and holding performance. The upper limit of the molecular weight distribution (Mw/Mn) of the (meth)acrylic copolymer is more preferably 8.0, still more preferably 6.0, further more preferably 4.0.

The weight average molecular weight (Mw) and the number average molecular weight (Mn) herein refer to the weight average molecular weights measured in terms of standard polystyrene by gel permeation chromatography (GPC). Specifically, the (meth)acrylic copolymer is diluted 50-fold with tetrahydrofuran (THF), and the dilute is passed through a filter (material: polytetrafluoroethylene, pore size: 0.2 μm). The obtained filtrate is supplied to a gel permeation chromatograph (e.g., 2690 Separations Module, available from Waters) and subjected to GPC measurement at a sample flow rate of 1 mL/min and a column temperature of 40°C. The molecular weight of the (meth)acrylic copolymer in terms of polystyrene is measured, and the weight average molecular weight (Mw) and the number average molecular weight (Mn) are determined. The column may be GPC KF-802.5L (available from Showa Denko K.K.), for example. The detector may be a differential refractometer, for example. The molecular weight distribution (Mw/Mn) can be determined using the obtained weight average molecular weight (Mw) and number average molecular weight (Mn).

The weight average molecular weight (Mw) and the molecular weight distribution (Mw/Mn) of the (meth)acrylic copolymer may be adjusted to the above range by adjusting the composition, polymerization method, or polymerization conditions of the (meth)acrylic copolymer, for example.

The lower limit of the glass transition temperature (Tg) of the (meth)acrylic copolymer is preferably -70°C, and the upper limit thereof is preferably -30°C. When the glass transition temperature of the (meth)acrylic copolymer is in the range, the later-described shear storage modulus at 25°C of the first adhesive layer can be easily adjusted to an appropriate range, so that the resulting adhesive tape can have better adhesion to fluororesins and better holding performance. The lower limit of the glass transition temperature (Tg) of the (meth)acrylic copolymer is more preferably -60°C, and the upper limit thereof is more preferably -40°C.

The glass transition temperature herein can be measured using a differential scanning calorimeter (e.g., SII Exstar 6000/DSC 6220, available from Hitachi High-Tech Science Corporation) in a nitrogen atmosphere at a temperature increase rate of 10°C/min. The value obtained in the first run can be used as the glass transition temperature.

The (meth)acrylic copolymer can be synthesized using a conventionally known polymerization method including radically reacting, in the presence of a polymerization initiator, the monomers from which the structural units described above are derived. Examples of the polymerization method include solution polymerization (boiling point polymerization or constant temperature polymerization), emulsion polymerization, suspension polymerization, and bulk polymerization. In particular, solution polymerization is preferred because it allows easy synthesis.

In the case of using solution polymerization as the polymerization method, examples of a reaction solvent include ethyl acetate, toluene, methyl ethyl ketone, methyl sulfoxide, ethanol, acetone, and diethyl ether. Each of these reaction solvents may be used alone, or two or more of them may be used in combination.

Examples of the polymerization initiator include organic peroxides and azo compounds.

Examples of the organic peroxides include 1,1-bis(t-hexylperoxy)-3,3,5-trimethylcyclohexane, t-hexyl peroxypivalate, t-butyl peroxypivalate, 2,5-dimethyl-2,5-bis(2-ethylhexanoylperoxy)hexane, t-hexyl peroxy-2-ethylhexanoate, t-butyl peroxy-2-ethylhexanoate, t-butyl peroxyisobutyrate, t-butyl peroxy-3,5,5-trimethylhexanoate, and t-butyl peroxylaurate.

Examples of the azo compounds include azobisisobutyronitrile and azobiscyclohexanecarbonitrile.

Each of these polymerization initiators may be used alone, or two or more of them may be used in combination.

The styrene elastomer is not limited as long as it is a block copolymer that includes a block derived from a styrene monomer and a block derived from a conjugated diene monomer, has rubber elasticity at room temperature, and includes a hard segment and a soft segment. Here, the block derived from a styrene monomer is a hard segment, and the block derived from a conjugated diene monomer is a soft segment.

Examples of the styrene monomer include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-butoxystyrene, vinylbenzyldimethylamine, (4-vinylbenzyl) dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinylpyridine,

diphenylethylene, and diphenylethylene containing a tertiary amino group. Preferred among these is styrene because it is industrially easily available.

Examples of the diphenylethylene containing a tertiary amino group include 1-(4-N,N-dimethylaminophenyl)-1-phenylethylene.

Each of these styrene monomers may be used alone, or two or more of them may be used in combination.

Examples of the conjugated diene monomer include isoprene, 1,3-butadiene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. Preferred among these are 1,3-butadiene and isoprene, which have high polymerization reactivity and are industrially easily available.

Each of these conjugated diene monomers may be used alone, or two or more of them may be used in combination.

Specific examples of the styrene elastomer include styrene-isoprene-styrene (SIS) block copolymers, styrene-butadiene-styrene (SBS) block copolymers, and styrene-chloroprene-styrene block copolymers. In particular, for the resulting adhesive tape to easily exhibit high adhesion and not to be easily peeled off from an adherend even when immersed in an alkaline chemical liquid, SIS block copolymers and SBS block copolymers are preferred, and SIS block copolymers are more preferred. Each of these styrene elastomers may be used alone, or two or more of them may be in combination.

The styrene elastomer may include a diblock copolymer of the block derived from a styrene monomer and the block derived from a conjugated diene monomer in addition to a triblock copolymer of the block derived from a styrene monomer and the block derived from a conjugated diene monomer.

The lower limit of the percentage of the diblock copolymer (hereinafter also referred to as "the diblock proportion") in the styrene elastomer is preferably 50% by mass. When the diblock proportion is 50% by mass or more, the first adhesive layer can more closely adhere to an adherend, and the resulting adhesive tape can have further improved adhesion. Moreover, the shear storage modulus at 25°C of the first adhesive layer can be moderately lowered, and the flexibility of the first adhesive layer can be further improved. The first adhesive layer thus can have improved adhesion to fluororesins and also more closely adhere to the substrate. The lower limit of the diblock proportion is more preferably 70% by mass.

To further improve the cohesion of the first adhesive layer, the upper limit of the diblock proportion is preferably 90% by mass.

The diblock proportion can be calculated from the peak area ratio of the copolymers measured by gel permeation chromatography (GPC).

The upper limit of the amount of the block derived from a styrene monomer (hereinafter also referred to as "the styrene content") is preferably 20% by mass. When the styrene content is 20% by mass or less, the first adhesive layer is not excessively hard and can more closely adhere to an adherend, and the resulting adhesive tape can have further improved adhesion. The upper limit of the styrene content is more preferably 16% by weight.

To further improve the cohesion of the first adhesive layer, the lower limit of the styrene content is preferably 8% by mass.

The styrene content can be calculated from the peak area ratio of the blocks measured by $^1$H-NMR.

The lower limit of the weight average molecular weight of the styrene elastomer is preferably 50,000, and the upper limit thereof is preferably 600,000. When the weight average molecular weight of the styrene elastomer is 50,000 or greater, the first adhesive layer can have increased bulk strength, and the resulting adhesive tape can have further improved adhesion. When the weight average molecular weight of the styrene elastomer is 600,000 or less, the compatibility of the styrene elastomer with other components can be further improved. The lower limit of the weight average molecular weight of the styrene elastomer is more preferably 100,000, and the upper limit thereof is more preferably 500,000

The lower limit of the proportion of the base polymer (P1) in the first adhesive layer is preferably 30% by mass, and the upper limit thereof is preferably 99.5% by mass. When the proportion of the base polymer (P1) is in the range, the first adhesive layer can have further improved adhesion to fluororesins. The lower limit of the proportion of the base polymer (P1) is more preferably 40% by mass, and the upper limit thereof is more preferably 99% by mass. The lower limit is still more preferably 50% by mass, and the upper limit is still more preferably 95% by mass.

The adhesive layer contains a tackifier resin.

The tackifier resin preferably includes a tackifier resin (T1) containing at least one structural unit (A) selected from the group consisting of a structural unit (A-1), a structural unit (A-1'), a structural unit (A-2), a structural unit (A-2'), a structural unit (A-3), a structural unit (A-3'), a structural unit (A-4), and a structural unit (A-4') that are represented by the formulas above. When the first adhesive layer contains the tackifier resin (T1), the first adhesive layer can have higher adhesion particularly to low-polar adherends (e.g., fluororesins) and can also more closely adhere to the substrate.

In particular, to greatly enhance the interactions with an adherend to further enhance the adhesion to the adherend, the structural unit (A) is preferably at least one selected from the group consisting of the structural unit (A-1), the structural unit (A-1'), the structural unit (A-2), the structural unit (A-2'), the structural unit (A-3), and the structural unit (A-3'),

more preferably at least one selected from the group consisting of the structural unit (A-1) and the structural unit (A-1'). When the structural unit (A) is at least one selected from the group consisting of the structural unit (A-1) and the structural unit (A-1'), the interactions with an adherend can be further greatly enhanced. Moreover, such a structural unit (A) is preferred in terms of saving petroleum resources because the later-described monomers containing bio-derived material can be easily used to constitute the structural unit (A-1) and the structural unit (A-1'). Further, such a structural unit (A) allows the tackifier resin (T1) to have moderate polarity, and thus in the case that the base polymer (P1) is a (meth)acrylic copolymer, the tackifier resin (T1) can have better compatibility with the (meth)acrylic copolymer.

The tackifier resin (T1) may have the structural unit (A) in a side chain or in the backbone structure or at an end of the backbone structure. In particular, to achieve suitable physical properties required for use as a tackifier resin, the tackifier resin (T1) preferably has the structural unit (A) in the backbone structure or at an end of the backbone structure.

In the structural unit (A), $R^1$ to $R^7$ each represent a hydrogen atom, an aliphatic hydrocarbon group, an aromatic hydrocarbon group, a polar functional group, an aliphatic hydrocarbon group containing a polar functional group, or an aromatic hydrocarbon group containing a polar functional group.

Examples of the aliphatic hydrocarbon group include C1-C20 linear, branched, or cyclic alkyl groups. Examples of the aromatic hydrocarbon group include substituted or non-substituted C1-C20 aryl groups.

The polar functional group is not limited. $R^1$ may be a polar functional group other than a hydroxy group. $R^2$ may be a polar functional group other than a carboxy group. $R^3$ may be a polar functional group other than a group represented by $OR^4$. $R^5$ may be a polar functional group other than a group represented by $NR^6R^7$. Specific examples of the polar functional group include amino, carboxy, carbonyl, alkoxy, hydroxy, nitrile, and nitro groups.

Examples of the aliphatic hydrocarbon group containing a polar functional group include a group obtained by replacing one or more hydrogen atoms of any of the above aliphatic hydrocarbon groups with any of the above polar functional groups. Examples of the aromatic hydrocarbon group containing a polar functional group include a group obtained by replacing one or more hydrogen atoms of any of the above aromatic hydrocarbon groups with any of the above polar functional groups.

In the tackifier resin (T1), multiple $R^1$s contained in one structural unit (A-1) may be the same as or different from each other. Multiple $R^1$s contained in different structural units (A-1) may also be the same as or different from each other. Similarly, multiple $R^1$s contained in different structural units (A-1') may also be the same as or different from each other. Multiple $R^1$s contained in different structural units (A-1') may also be the same as or different from each other.

Similarly, multiple $R^2$s contained in one structural unit (A-2) may be the same as or different from each other. Multiple $R^2$s contained in different structural units (A-2) may also be the same as or different from each other. Similarly, multiple $R^2$s contained in one structural unit (A-2') may be the same as or different from each other. Multiple $R^2$s contained in different structural units (A-2') may also be the same as or different from each other.

Similarly, multiple $R^3$s contained in one structural unit (A-3) may be the same as or different from each other. Multiple $R^3$s contained in different structural units (A-3) may also be the same as or different from each other. Similarly, multiple $R^3$s contained in one structural unit (A-3') may be the same as or different from each other. Multiple $R^3$s contained in different structural units (A-3') may also be the same as or different from each other.

Similarly, multiple $R^4$s contained in one structural unit (A-3) may be the same as or different from each other. Multiple $R^4$s contained in different structural units (A-3) may also be the same as or different from each other. Similarly, multiple $R^4$s contained in one structural unit (A-3') may be the same as or different from each other. Multiple $R^4$s contained in different structural units (A-3') may also be the same as or different from each other.

Similarly, multiple $R^5$s contained in one structural unit (A-4) may be the same as or different from each other. Multiple $R^5$s contained in different structural units (A-4) may also be the same as or different from each other. Similarly, multiple $R^5$s contained in one structural unit (A-4') may be the same as or different from each other. Multiple $R^5$s contained in different structural units (A-4') may also be the same as or different from each other.

Similarly, multiple $R^6$s and $R^7$s contained in one structural unit (A-4) may be the same as or different from each other. Multiple $R^6$s and $R^7$s contained in different structural units (A-4) may also be the same as or different from each other. Similarly, multiple $R^6$s and $R^7$s contained in one structural unit (A-4') may be the same as or different from each other. Multiple $R^6$s and $R^7$s contained in different structural units (A-4') may also be the same as or different from each other.

In the structural unit (A), n and l each may be any integer of 2 or greater and 4 or less, and n' and l' are each may be any integer of 2 or greater and 5 or less. From the standpoint of easy availability of raw materials, n, l, n', and l' are preferably 2 or 3, and n, 1, n', and l' are more preferably 3 because then the adhesion of the first adhesive layer can be further enhanced.

In the structural unit (A), m and k each may be any integer of 1 or greater and 4 or less, and m' and k' each may be any integer of 1 or greater and 5 or less. From the standpoint of easy availability of raw materials, m, k, m', and k' are preferably 1, 2, or 3, and m, k, m', and k' are more preferably 1 because then the adhesion of the first adhesive layer can be further enhanced.

Specific examples of the structural unit (A-1) and the structural unit (A-1') include structural units derived from dihydroxybenzenes or their derivatives (n and n' are 2) and structural units derived from trihydroxybenzenes or their

derivatives (n and n' are 3). Each of these structural units may be used alone, or two or more of them may be used in combination.

Examples of the dihydroxybenzenes or their derivatives include resorcinol, pyrocatechol, hydroquinone, dihydroxytoluene, dihydroxyxylene, dihydroxyphenyl ethylamine hydrochloride, dihydroxybenzoic acid, dihydroxyphenylacetic acid, dihydroxyhydrocinnamic acid, dihydroxyphenylpropionic acid, dihydroxyphenylalanine, dihydroxybenzaldehyde, dihydroxyacetophenone, diacetyldihydroxybenzene, dihydroxyphenyl-2-butanone, methyl dihydroxyphenyl acetate, benzyl dihydroxyphenyl ketone, dihydroxybenzamide, dihydroxymethoxybenzene, dihydroxybenzyl alcohol, dihydroxyphenyl ethanol, dihydroxyphenyl glycol, dihydroxyphenyl acetonitrile, and dihydroxynitrobenzene. Preferred among these is pyrocatechol, which has less steric hindrance and easily interacts with adherends. Each of these dihydroxybenzenes or their derivatives may be used alone, or two or more of them may be used in combination.

Examples of the trihydroxybenzenes or their derivatives include pyrogallol, 1,2,4-trihydroxybenzene, phloroglucinol, trihydroxytoluene, trihydroxydiphenylmethane, 6-hydroxy-L-DOPA, gallic acid, methyl gallate, butyl gallate, isobutyl gallate, isoamyl gallate, hexadecyl gallate, stearyl gallate, trihydroxyacetophenone, trihydroxyphenylethanone, trihydroxyphenylbutanone, trihydroxybenzaldehyde, trihydroxybenzamide, and trihydroxynitrobenzene. Preferred among these is pyrogallol, which has less steric hindrance and easily interacts with adherends. Each of these trihydroxybenzenes or their derivatives may be used alone, or two or more of them may be used in combination.

Specific examples of the structural unit (A-2) and the structural unit (A-2') include structural units derived from benzoic acid, salicylic acid, dihydroxybenzoic acid, gallic acid, 2-methylbenzoic acid, 3-methylbenzoic acid, 4-methylbenzoic acid, 2-ethylbenzoic acid, 3-ethylbenzoic acid, 4-ethylbenzoic acid, 4-tert-butylbenzoic acid, 2-vinylbenzoic acid, 3-vinylbenzoic acid, 4-vinylbenzoic acid, 4,4'-stilbenedicarboxylic acid, or their derivatives. Preferred among these is 4-vinylbenzoic acid, which has less steric hindrance and easily interacts with adherends. Each of these structural units may be used alone, or two or more of them may be used in combination.

Specific examples of the structural unit (A-3) and the structural unit (A-3') include structural units derived from dialkoxybenzenes or their derivatives (1 and 1' are 2) and structural units derived from trialkoxybenzenes or their derivatives (1 and 1' are 3).

Examples of the dialkoxybenzenes or their derivatives include 1,2-dimethoxybenzene, 1,3-dimethoxybenzene, and 1,4-dimethoxybenzene. Examples of the trialkoxybenzenes or their derivatives include 1,2,3-trimethoxybenzene, 1,2,4-trimethoxybenzene, and 1,3,5-trimethoxybenzene. Preferred among these is 1,2,3-trimethoxybenzene, which has less steric hindrance and easily interacts with adherends. Each of these trialkoxybenzenes or their derivatives may be used alone, or two or more of them may be used in combination.

Specific examples of the structural unit (A-4) and the structural unit (A-4') include structural units derived from aminobenzenes or their derivatives (k and k' are 1). Examples of the aminobenzenes or their derivatives include aniline, methylaniline, ethylaniline, dimethylaniline, and diethylaniline. Each of these aminobenzenes or their derivatives may be used alone, or two or more of them may be used in combination.

The structural unit (A) may consist only of a petroleum-derived material but preferably contains a bio-derived material. The depletion of petroleum resources and the emission of carbon dioxide from the combustion of petroleum-derived products have been of concern. Attempts have been made to conserve petroleum resources by substituting bio-derived materials for petroleum-derived materials. The structural unit (A) containing a bio-derived material is preferable to save petroleum resources. The structural unit (A) containing a bio-derived material is also preferable to reduce carbon dioxide emissions because combusting bio-derived materials, which originally develop by incorporating atmospheric carbon dioxide therein, is not considered to increase the total amount of atmospheric carbon dioxide.

Examples of a monomer that constitutes the structural unit (A) containing a bio-derived material include resorcinol, dihydroxyphenyl ethylamine hydrochloride, dihydroxyhydrocinnamic acid, dihydroxyphenylalanine, dihydroxybenzaldehyde, dihydroxybenzyl alcohol, pyrogallol, 1,2,4-trihydroxybenzene, phloroglucinol, 6-hydroxy-L-DOPA, gallic acid, methyl gallate, butyl gallate, isobutyl gallate, isoamyl gallate, hexadecyl gallate, stearyl gallate, trihydroxyacetophenone, trihydroxybenzaldehyde, trihydroxybenzamide, and trihydroxynitrobenzene.

The structural unit (A) content (mole basis) of the tackifier resin (T1) is not limited. The lower limit thereof is preferably 1 mol%, and the upper limit thereof is preferably 60 mol%. When the structural unit (A) content is 1 mol% or more, adding the tackifier resin (T1) to the first adhesive layer can further enhance the adhesion of the first adhesive layer. When the structural unit (A) content is 60 mol% or less, the tackifier resin (T1) can have suitable physical properties required for use as a tackifier resin. The lower limit of the structural unit (A) content is more preferably 5 mol%, and the upper limit thereof is more preferably 50 mol%. The lower limit is still more preferably 10 mol%, and the upper limit is still more preferably 30 mol%.

The structural unit (A) content (mass basis) of the tackifier resin (T1) is not limited. The lower limit thereof is preferably 0.9% by mass, and the upper limit thereof is preferably 60% by mass. When the structural unit (A) content is 0.9% by mass or more, adding the tackifier resin (T1) to the first adhesive layer can further enhance the adhesion of the first adhesive layer. When the structural unit (A) content is 60 % by mass or less, the tackifier resin (T1) can have suitable physical properties required for use as a tackifier resin. The lower limit of the structural unit (A) content is more preferably 5

% by mass, and the upper limit thereof is more preferably 50 % by mass. The lower limit is still more preferably 10 % by mass, and the upper limit is still more preferably 30 % by mass.

The tackifier resin (T1) preferably contains a structural unit (B) derived from at least one monomer (b) selected from the group consisting of a terpene monomer and a vinyl monomer. When the tackifier resin (T1) contains the structural unit (B), the tackifier resin (T1) can have suitable physical properties required for use as a tackifier resin.

In particular, the structural unit (B) is preferably a structural unit derived from a terpene monomer or a structural unit derived from a vinyl monomer, or also preferably a combination of a structural unit derived from a terpene monomer and a structural unit derived from a vinyl monomer, because then the adhesion of the first adhesive layer can be further enhanced. To improve the compatibility of the tackifier resin (T1) and the base polymer, the structural unit (B) is preferably a structural unit derived from a terpene monomer. Structural units derived from terpene monomers contain aliphatic hydrocarbon groups with unsaturated double bonds. Thus, when the tackifier resin (T1) contains a structural unit derived from a terpene monomer, the compatibility of the tackifier resin (T1) with the base polymer is improved, reducing a decrease in adhesion caused by deterioration of the compatibility.

Examples of the terpene monomer include α-pinene, β-pinene, limonene, dipentene, δ-3-carene, dimethyl octatriene, allo-ocimene, myrcene, ocimene, linalool, and cosmene. In particular, the terpene monomer is preferably α-pinene, β-pinene, or limonene because then the adhesion of the first adhesive layer can be further enhanced.

The vinyl monomer is not limited. To improve the compatibility of the tackifier resin (T1) with the base polymer, the vinyl monomer is preferably free of a structure containing two or more aromatic rings in a molecule (e.g., a naphthalene structure, an anthracene structure, a biphenyl structure, an anthraquinone structure, a benzophenone structure). Examples of vinyl monomers free of a structure containing two or more aromatic rings in a molecule include ethylene, propylene, butylene, hexene, vinyl acetate, vinyl chloride, styrene, α-methylstyrene, coumarone, indene, vinyl toluene, divinylbenzene, divinyl toluene, and 2-phenyl-2-butene. In particular, the vinyl monomer is preferably styrene because then the adhesion of the first adhesive layer can be further enhanced.

Each of these monomers (b) may be used alone, or two or more of them may be used in combination.

The structural unit (B) may consist only of a petroleum-derived material but preferably contains a bio-derived material. The depletion of petroleum resources and the emission of carbon dioxide from the combustion of petroleum-derived products have been of concern. Attempts have been made to conserve petroleum resources by substituting bio-derived materials for petroleum-derived materials. The structural unit (B) containing a bio-derived material is preferable to save petroleum resources. The structural unit (B) containing a bio-derived material is also preferable to reduce carbon dioxide emissions because combusting bio-derived materials, which originally develop by incorporating atmospheric carbon dioxide therein, is not considered to increase the total amount of atmospheric carbon dioxide.

Examples of the monomer (b) that constitutes the structural unit (B) containing a bio-derived material include terpene monomers, ethylene, propylene, and hexene.

The structural unit (B) content of the tackifier resin (T1) is not limited. The lower limit thereof is preferably 40 mol%, and the upper limit thereof is preferably 99 mol%. When the structural unit (B) content is 40 mol% or more, the tackifier resin (T1) can have suitable physical properties required for use as a tackifier resin. When the structural unit (B) content is 99 mol% or less, the tackifier resin (T1) can have a sufficient structural unit (A) content, and thus can further enhance the adhesion of the first adhesive layer, particularly even to low-polarity adherends. The lower limit of the structural unit (B) content is more preferably 50 mol%, and the upper limit thereof is more preferably 90 mol%.

The tackifier resin (T1) may be any compound containing the structural unit (A), but is preferably a copolymer having a structure represented by the formula below. In the case of containing the structural unit (A) in the backbone structure or at an end of the backbone structure, the tackifier resin (T1) is preferably a copolymer having a structure represented by the formula below.

A copolymer having such a structure can be obtained by a method that uses cationic polymerization described later. The copolymer can further enhance the adhesion of the first adhesive layer, particularly even to low-polarity adherends.

[Chem. 5]

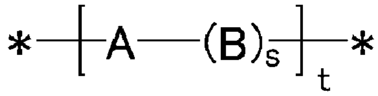

In the formula, A represents the structural unit (A); B represents the structural unit (B); and s and t each represent an integer of 1 or greater. Here, * represents a linking moiety.

The tackifier resin (T1) may be any compound containing the structural unit (A), but is preferably a copolymer containing the structural unit (A) and the structural unit (B), and may further contain a different structural unit. In the copolymer, the structural unit (A) and the structural unit (B) may be randomly copolymerized, or may be regularly or periodically copolymerized as in the case where, for example, they each form a block segment and the block segments

bond to each other.

The tackifier resin (T1) preferably further contains an aliphatic hydrocarbon group having an unsaturated double bond. In the tackifier resin (T1), the aliphatic hydrocarbon group having an unsaturated double bond may be in the structural unit (A) or the structural unit (B) or in a different structural unit. From the standpoint of ease of synthesis and improvement in the compatibility of the tackifier resin (T1) with the base polymer, particularly the compatibility of the tackifier resin (T1) with the styrene elastomer, the aliphatic hydrocarbon group having an unsaturated double bond is preferably in the structural unit (B) or in a different structural unit. Such a structural unit (B) or different structural unit that contains the aliphatic hydrocarbon group having an unsaturated double bond is not limited but is preferably a structural unit (B) derived from at least one monomer (b) selected from the group consisting of a terpene monomer and a vinyl monomer. In other words, in the tackifier resin (T1), the aliphatic hydrocarbon group having an unsaturated double bond is preferably in a structural unit (B) derived from at least one monomer (b) selected from the group consisting of a terpene monomer and a vinyl monomer. In particular, in the tackifier resin (T1), the aliphatic hydrocarbon group having an unsaturated double bond is preferably in a structural unit derived from a terpene monomer because then the adhesion of the first adhesive layer can be further enhanced.

Examples of the different structural unit include: a structural unit that is derived from a different phenol monomer and not encompassed by the structural unit (A); and a structural unit derived from maleic anhydride.

Examples of the different monomer include phenol, cresol, xylenol, propyl phenol, nonyl phenol, methoxy phenol, bromophenol, bisphenol A, bisphenol F, bisphenol S, and dihydroxynaphthalene. Each of these different phenol monomers may be used alone, or two or more of them may be used in combination.

The molecular weight of the tackifier resin (T1) is not limited. The lower limit of the weight average molecular weight (Mw) is preferably 400, and the upper limit thereof is preferably 10,000. When the weight average molecular weight (Mw) of the tackifier resin (T1) is in the range, the tackifier resin (T1) can have suitable physical properties required for use as a tackifier resin. The lower limit of the weight average molecular weight (Mw) of the tackifier resin (T1) is more preferably 500, and the upper limit thereof is more preferably 5,000. The lower limit is still more preferably 550, and the upper limit is still more preferably 3,000.

The weight average molecular weight (Mw) may be adjusted to the above range by, for example, adjusting the composition, polymerization method, or polymerization conditions of the tackifier resin (T1).

The lower limit of the Young's modulus at 25°C of the tackifier resin (T1) is preferably 10 MPa. When the Young's modulus at 25°C of the tackifier resin (T1) is 10 MPa or greater, the tackifier resin (T1) can have sufficient hardness and suitable physical properties required for use as a tackifier resin. The lower limit of the Young's modulus at 25°C of the tackifier resin (T1) is more preferably 50 MPa, still more preferably 70 MPa.

To reduce a decrease in adhesion caused by excessive hardness of the first adhesive layer, the upper limit of the Young's modulus at 25°C of the tackifier resin (T1) is preferably 10,000 MPa, more preferably 5,000 MPa.

The Young's modulus at 25°C of the tackifier resin (T1) can be measured using a tensile tester (e.g., Tensilon, available from Orientec) by a tensile test at a peeling rate of 200 mm/min, a grip distance of 15 mm, and 25°C. The measurement sample for the test may be prepared by, for example, filling a mold having a size of 10 × 50 mm with the tackifier resin (T1), melting the resin at a temperature 100°C higher than the glass transition temperature, and forming a specimen having a thickness of 1 mm.

The Young's modulus at 25°C of the tackifier resin (T1) may be adjusted to the above range by, for example, adjusting the molecular weight or weight average molecular weight of the tackifier resin (T1), the composition of the structural unit (A) and the structural unit (B) in the tackifier resin (T1), or the structural unit (A) and structural unit (B) contents.

The lower limit of the glass transition temperature of the tackifier resin (T1) is preferably 0°C, and the upper limit thereof is preferably 200°C. When the glass transition temperature of the tackifier resin (T1) is in the range, the Young's modulus at 25°C of the tackifier resin (T1) can be easily adjusted to the range described above, so that the tackifier resin (T1) can have suitable physical properties required for use as a tackifier resin. The lower limit of the glass transition temperature of the tackifier resin (T1) is more preferably 10°C, and the upper limit thereof is more preferably 150°C.

The lower limit of the iodine value of the tackifier resin (T1) is preferably 2 g/100 g, and the upper limit thereof is preferably 180 g/100 g. When the iodine value of the tackifier resin (T1) is 2 g/100 g or greater, it is possible to reduce a decrease in adhesion of the first adhesive layer caused by deterioration of the compatibility of the tackifier resin (T1) with the base polymer. When the iodine value is 180 g/100 g or less, the adhesion of the first adhesive layer, particularly even to low-polarity adherends, can be further enhanced. The lower limit of the iodine value of the tackifier resin (T1) is more preferably 70 g/100 g, and the upper limit thereof is more preferably 170 g/100 g.

The iodine value is an index of the amount of unsaturated double bonds (C=C bond content) and herein refers to an iodine value measured in conformity with the method described in JIS K 0070:1992.

The lower limit of the bio-derived carbon (carbon atom) content in the carbon (carbon atoms) in the tackifier resin (T1) is preferably 10%. A bio-derived carbon content of 10% or greater is an indicator of a "bio-based product".

The tackifier resin (T1) preferably has a bio-derived carbon content of 10% or greater to save petroleum

resources and reduce carbon dioxide emissions. The lower limit of the bio-derived carbon content of the tackifier resin (T1) is more preferably 30%, still more preferably 60%, further more preferably 70%, particularly preferably 90%. The upper limit of the bio-derived carbon content is not limited and may be 100%.

While bio-derived carbon contains a certain proportion of radioisotope (C-14), petroleum-derived carbon hardly contains C-14. Hence, the bio-derived carbon content of the tackifier resin (T1) can be calculated by measuring the C-14 concentration in the compound. Specifically, the bio-derived carbon content can be measured in conformity with ASTM D6866-22, a standard widely used in the bioplastics industry.

The tackifier resin (T1) encompasses hydrogenated products of the compounds described above. A hydrogenated product is a compound obtained by saturating at least some of the carbon-carbon double bonds in the above-described tackifier resin (T1) by hydrogenation. In other words, the first adhesive layer may contain a hydrogenated product in which some of the carbon-carbon double bonds of the tackifier resin (T1) have been hydrogenated, or the first adhesive layer may contain a hydrogenated product in which all the carbon-carbon double bonds in the tackifier resin (T1) have been hydrogenated. Such a hydrogenated product also can be suitably used as a tackifier resin to be added to the first adhesive layer and can enhance the adhesion of the first adhesive layer, particularly even to low-polarity adherends.

The tackifier resin (T1) may be produced by any method. The tackifier resin (T1) containing the structural unit (A) in the backbone structure or at an end of the backbone structure is preferably produced as follows, for example. Specifically, the tackifier resin (T1) is preferably produced by a method of copolymerizing a monomer (a) for constituting the structural unit (A) and at least one monomer (b) for constituting the structural unit (B), the at least one monomer (b) being selected from the group consisting of a terpene monomer and a vinyl monomer (hereinafter this method is also referred to as the production method [I]).

The monomer (a) is preferably at least one selected from the group consisting of a monomer (a-1), a monomer (a-2), a monomer (a-3), and a monomer (a-4) that are represented by the following formulas.

[Chem. 6]

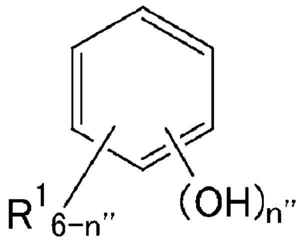

(a-1)

[Chem. 7]

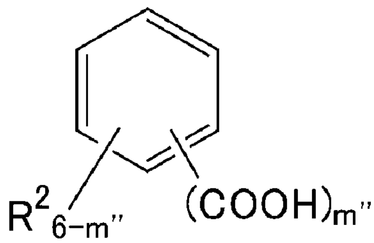

(a-2)

[Chem. 8]

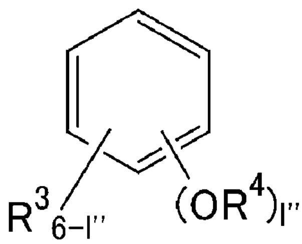

(a-3)

[Chem. 9]

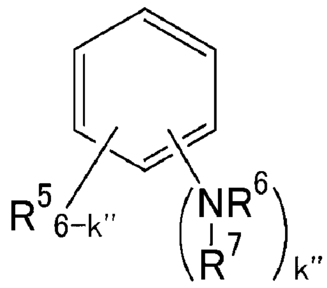

(a-4)

In the formulas (a-1) to (a-4), $R^1$ to $R^7$ each represent a hydrogen atom, an aliphatic hydrocarbon group, an aromatic hydrocarbon group, a polar functional group, an aliphatic hydrocarbon group containing a polar functional group, or an aromatic hydrocarbon group containing a polar functional group; n" represents an integer of 2 or greater and 5 or less, particularly preferably 2 or 3, more preferably 3; m" is an integer of 1 or greater and 5 or less; 1" represents an integer of 2 or greater and 5 or less; and k" represents an integer of 1 or greater and 5 or less.

In the production method [I] of the tackifier resin (T1), the monomer (a) and the monomer (b) are preferably copolymerized by cationic polymerization.

Cationic polymerization enables the copolymerization of the monomer (a) and the monomer (b) without the need for prior protection of the functional groups of the monomer (a), such as a phenolic hydroxy group, a carboxy group, an alkoxy group, or an amino group, by chemical modification, thus eliminating the need for later deprotection. The monomer (a) and the monomer (b) thus can be copolymerized by a simpler, one-stage reaction process, leading to fewer impurities and higher yield.

The monomer (a) and the monomer (b) are cationically copolymerized preferably by a method including reacting the monomer (a) and the monomer (b) in the presence of a Lewis acid. With such a method, presumably, a cation of the monomer (b) is generated and causes cationic polymerization of the molecules of the monomer (b), while Fridel-Crafts alkylation of the monomer (a) and the monomer (b) proceeds. These reactions repeatedly occur to produce the copolymer including the structural unit (A) derived from the monomer (a) and the structural unit (B) derived from the monomer (b).

The Lewis acid is not limited. A conventionally known Lewis acid may be used. Examples thereof include aluminum chloride ($AlCl_3$), diethylaluminum chloride ($Et_2AlCl_2$), tin(IV) chloride ($SnCl_4$), titanium(IV) chloride ($TiCl_4$), boron trichloride ($BCl_3$), and a boron trifluoride ether complex ($BF_3 \cdot EtO$). Preferred among these is aluminum chloride ($AlCl_3$), which enables the production of the copolymer with higher yield.

More specifically, for example, when pyrogallol as the monomer (a) and α-pinene as the monomer (b) are reacted in the presence of the Lewis acid aluminum chloride ($AlCl_3$), the reaction shown in the scheme below is considered to proceed.

Specifically, a cation of α-pinene as the monomer (b) is generated and causes cationic polymerization of molecules of α-pinene (the upper section of the scheme below), while Fridel-Crafts alkylation of pyrogallol as the monomer (a) and α-pinene as the monomer (b) proceeds (the middle section of the scheme below). These reactions repeatedly occur to produce a copolymer including a structural unit derived from pyrogallol and a structural unit derived from α-pinene (the lower section of the scheme below). Here, in such a copolymer, the structural unit derived from pyrogallol is in the backbone structure or at an end of the backbone structure.

[Chem. 10]

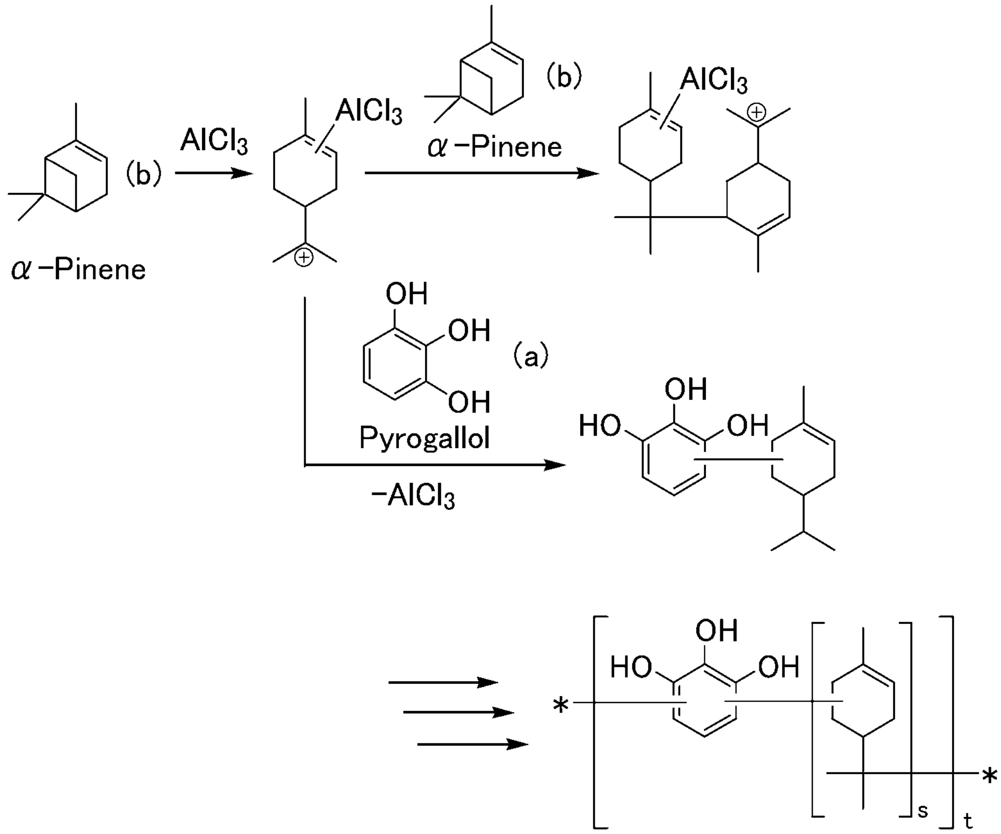


In the formula, s and t each represent an integer of 1 or greater, and * represents a linking moiety.

The tackifier resin (T1) containing the structural unit (A) in a side chain is preferably produced as follows, for example. Specifically, the tackifier resin (T1) is preferably produced by a method of copolymerizing a monomer (a') for constituting the structural unit (A), the monomer (a') being obtained by further introducing a unsaturated double bond to the monomer (a), and at least one monomer (b) for constituting the structural unit (B), the at least one monomer (b) being selected from the group consisting of a terpene monomer and a vinyl monomer (hereinafter this method is also referred to as the production method [II]).

Examples of the monomer (a') include 2-vinylbenzoic acid, 3-vinylbenzoic acid, 4-vinylbenzoic acid, and 4,4'-stilbenedicarboxylic acid. Preferred among these is 4-vinylbenzoic acid, which has less steric hindrance and easily interacts with adherends. Each of these monomers (a') may be used alone, or two or more of them may be used in combination.

Also in the production method [II] of the tackifier resin (T1), the monomer (a') and the monomer (b) are preferably copolymerized by cationic polymerization as in the production method [I] of the tackifier resin (T1).

The monomer (a') and the monomer (b) are cationically copolymerized preferably by a method including reacting the monomer (a') and the monomer (b) in the presence of a Lewis acid as described above. With such a method, cationic polymerization of the unsaturated double bonds in the monomer (a') and monomer (b) proceeds, resulting in a copolymer containing a structural unit (A) derived from the monomer (a') and a structural unit (B) derived from the monomer (b).

The tackifier resin (T1) can enhance the adhesion of the first adhesive layer even when used in smaller amounts than conventional tackifier resins. The lower limit of the amount of the tackifier resin (T1) relative to 100 parts by mass of the base polymer (P1) is preferably 5 parts by mass, and the upper limit thereof is preferably 50 parts by mass. When the amount of the tackifier resin (T1) is 5 parts by mass or more, the adhesion of the first adhesive layer, particularly adhesion to low-polarity adherends (e.g., fluororesins), can be further enhanced. When the amount of the tackifier resin (T1) is 50 parts by mass or less, a decrease in adhesion caused by excessive hardness of the first adhesive layer can be reduced. The lower limit of the amount of the tackifier resin (T1) is more preferably 10 parts by mass, and the upper limit thereof is more preferably 35 parts by mass.

The tackifier resin preferably includes at least one tackifier resin (T2) selected from the group consisting of a rosin ester resin, a terpene resin, a terpene phenol resin, and a petroleum resin. When the tackifier resin includes the tackifier resin (T2), the resulting adhesive tape can have higher adhesion.

The rosin ester resin is obtained by esterifying, with an alcohol, rosin resin mainly composed of abietic acid,

disproportionated rosin resin, hydrogenated rosin resin, a dimer (polymerized rosin resin) of a resin acid (e.g., abietic acid), or the like. Some of the hydroxy groups of the alcohol used in the esterification remain unused and are incorporated in the resin, resulting in the hydroxy value adjusted to the range described above. Examples of the alcohol include polyalcohols such as ethylene glycol, glycerol, and pentaerythritol.

Examples of the rosin ester resin include Pinecrystal KE-359, Ester Gum AA-V, and Ester Gum H (all available from Arakawa Chemical Industries Ltd.).

The terpene resin contains a structural unit derived from a monoterpene compound and contains no structural unit derived from an aromatic compound.

Examples of the terpene resin include YS Resin PX1250 (available from Yasuhara Chemical Co., Ltd.).

The terpene phenol resin contains a structural unit derived from a monoterpene compound and a structural unit derived from a phenol compound. Herein, the "phenol compound" in the terpene phenol resin refers to a compound that contains an aromatic structure containing only one phenolic hydroxy group and contains no aromatic ring structure containing two or more phenolic hydroxy groups. The structural units (A-1) and (A-1') described above do not correspond to the structural unit derived from a phenol compound in the terpene phenol resin.

Examples of the terpene phenol resin include YS Polyster G150 (available from Yasuhara Chemical Co., Ltd.).

Examples of the petroleum resin include ARKON P-140 (available from Arakawa Chemical Industries Ltd.).

The lower limit of the softening temperature of the tackifier resin (T2) is preferably 50°C, and the upper limit thereof is preferably 200°C. When the softening temperature of the tackifier resin (T2) is 50°C or higher, a decrease in adhesion caused by excessive softening of the first adhesive layer can be reduced. When the softening temperature of the tackifier resin (T2) is 200°C or lower, the first adhesive layer can have improved interfacial wettability and be less prone to interfacial delamination. Moreover, the glass transition temperature (Tg) of the (meth)acrylic copolymer is further decreased. As a result, the shear storage modulus at 25°C of the first adhesive layer can be moderately lowered, and the flexibility of the first adhesive layer can be further improved. The first adhesive layer thus can have improved adhesion to fluororesins and also more closely adhere to the substrate. The lower limit of the softening temperature of the tackifier resin (T2) is more preferably 60°C, and the upper limit thereof is more preferably 150°C. The lower limit is still more preferably 70°C, and the upper limit is still more preferably 90°C.

The softening temperature is measured in conformity with JIS K2207 (ring and ball method).

The lower limit of the hydroxy value of the tackifier resin (T2) is preferably 0 mg KOH/g, and the upper limit thereof is preferably 200 mg KOH/g. When the hydroxy value of the tackifier resin (T2) is in the range, the first adhesive layer can have improved interfacial wettability and be less prone to interfacial delamination. The lower limit of the hydroxy value of the tackifier resin (T2) is more preferably 30 mg KOH/g, and the upper limit thereof is more preferably 130 mg KOH/g.

The hydroxy value can be measured in conformity with JIS K1557 (phthalic anhydride method).

The lower limit of the amount of the tackifier resin (T2) relative to 100 parts by mass of the base polymer (P1) is preferably 10 parts by mass, and the upper limit thereof is preferably 200 parts by mass. When the amount of the tackifier resin (T2) is 10 parts by mass or more, the first adhesive layer can have higher adhesion. When the amount of the tackifier resin (T2) is 200 parts by mass or less, a decrease in adhesion caused by excessive hardness of the first adhesive layer can be reduced. The lower limit of the amount of the tackifier resin (T2) is more preferably 15 parts by mass, and the upper limit thereof is more preferably 160 parts by mass, still more preferably 50 parts by mass, further more preferably 140 parts by mass.

To further reduce the potential of the adhesive tape for contaminating adherends, preferably, the first adhesive layer contains no organosilicon compound or contains an organosilicon compound in a proportion of 3.0% by mass or less. When the first adhesive layer contains the organosilicon compound, the upper limit of the proportion of the organosilicon compound is more preferably 1.0% by mass. The first adhesive layer paritularly preferably contains no organosilicon compound.

The organosilicon compound herein may be any organic compound containing a silicon atom. Examples thereof include commercially available silicone adhesives, silane coupling agents, and silicone oils.

When the base polymer (P1) includes a (meth)acrylic copolymer, the first adhesive layer preferably further contains a curing agent. The curing agent contained in the first adhesive allows the (meth)acrylic copolymer to form a chemically crosslinked structure, which further improves the bulk cohesion of the first adhesive layer and also increases the later-described gel fraction of the first adhesive layer, leading to further improved adhesion and holding performance of the resulting adhesive tape

Examples of the curing agent include isocyanate curing agents, aziridine curing agents, epoxy curing agents, and metal chelate curing agents. In particular, the first adhesive layer preferably contains an isocyanate curing agent to allow moderate chemical crosslinking of the (meth)acrylic copolymer and further improve the adhesion and holding performance of the resulting adhesive tape.

Examples of the isocyanate curing agent include Coronate L-45 (available from Tosoh Corporation), Takenate 500 (available from Mitsui Chemicals, Inc.), and Desmodur L-75 (available from Covestro).

The lower limit of the amount of the curing agent relative to 100 parts by mass of the (meth)acrylic copolymer is

preferably 0.01 parts by mass, and the upper limit thereof is preferably 10 parts by mass. When the amount of the curing agent is in the range, the (meth)acrylic copolymer can be chemically crosslinked moderately, and the adhesion and holding performance of the resulting adhesive tape can be further improved. The lower limit of the amount of the curing agent is more preferably 0.1 parts by mass, and the upper limit is more preferably 5.0 parts by mass. The lower limit is still more preferably 0.5 parts by mass, and the upper limit is still more preferably 2.0 parts by mass.

The first adhesive layer may further contain a colorant to impart light shielding properties. Examples of the colorant include carbon black, aniline black, and titanium oxide. Preferred among these is carbon black, which is relatively inexpensive and chemically stable.

The first adhesive layer may contain conventionally known fine particles and additives such as inorganic fine particles, conductive fine particles, antioxidants, foaming agents, organic fillers, or inorganic fillers, if necessary.

The lower limit of the 180° peeling force at 23°C of the first adhesive layer for the substrate is preferably 2.5 N/25 mm. When the 180° peeling force at 23°C of the first adhesive layer for the substrate is 2.5 N/25 mm or greater, the first adhesive layer can more closely adhere to the substrate. The lower limit of the 180° peeling force at 23°C of the first adhesive layer for the substrate is more preferably 3.0 N/25 mm, still more preferably 3.5 N/25 mm.

There is no particular preferable upper limit of the 180° peeling force at 23°C of the first adhesive layer for the substrate, but the upper limit is practically about 100 N/25 mm.

The 180° peeling force at 23°C of the first adhesive layer for the substrate can be measured by the following method.

Specifically, the adhesive tape is cut into a size of 25 mm in width × 100 mm in length and then pressure-bonded to a 23-μm-thick PET film by moving a 2-kg rubber roller back and forth once thereon at a speed of 300 mm/min. The resulting laminate is left to stand for aging in an environment at 23°C and 50% RH for 20 minutes, whereby a test sample is prepared. The obtained test sample is subjected to a 180° peel test in conformity with JIS Z0237 using a tensile tester (e.g., Tensilon, available from Orientec) at 23°C, 50% RH, and a peel rate of 300 mm/min. The first adhesive layer is peeled off from the substrate, whereby the 180° peeling force at 23°C of the first adhesive layer for the substrate can be measured.

The first adhesive layer preferably has a loss tangent (tanδ) that has a peak in the temperature range from -30°C to 15°C as measured by dynamic viscoelasticity measurement at a frequency of 10 Hz (hereinafter the loss tangent is also referred to as "the loss tangent of the first adhesive layer as measured at a frequency of 10 Hz"). When the loss tangent (tanδ) of the first adhesive layer as measured at a frequency of 10 Hz has a peak in a temperature range of -30°C or higher, the first adhesive layer can more closely adhere to the substrate. When the loss tangent (tanδ) of the first adhesive layer as measured at a frequency of 10 Hz has a peak in a temperature range of 15°C or lower, the zipping phenomena in removing a protecting film of the adhesive layer of the adhesive tape can be reduced, preventing a loss of adhesion of the resulting adhesive tape before use.

The lower limit of the temperature of the first adhesive layer as measured at a frequency of 10 Hz shows the peak (hereinafter also simply referred to as "the loss tangent peak temperature") is more preferably -25°C, and the upper limit thereof is more preferably 13°C. The lower limit is still more preferably -20°C, and the upper limit is still more preferably 11°C.

The lower limit of the shear storage modulus at 25°C of the first adhesive layer as measured by dynamic viscoelasticity measurement at a frequency of 10 Hz is preferably $1.0 \times 10^4$ Pa, and the upper limit thereof is preferably $5.0 \times 10^5$ Pa. When the shear storage modulus at 25°C of the first adhesive layer is in the range, the resulting adhesive tape can have better adhesion and better holding performance. Moreover, the first adhesive layer can have improved flexibility, and thus can have improved adhesion to fluororesins and also more closely adhere to the substrate. The lower limit of the shear storage modulus at 25°C of the first adhesive layer is more preferably $3.0 \times 10^4$ Pa, and the upper limit thereof is more preferably $4.0 \times 10^5$ Pa. The lower limit is still more preferably $5.0 \times 10^4$ Pa, and the upper limit is still more preferably $3.5 \times 10^5$ Pa.

The peak temperature of the loss tangent of the first adhesive layer as measured at a frequency of 10 Hz and the shear storage modulus at 25°C of the first adhesive layer can be measured by dynamic viscoelasticity measurement.

Specifically, the shear storage modulus of the first adhesive layer can be measured, for example, by laminating multiple adhesive layers to a thickness of about 1 mm to prepare a measurement sample consisting only of the adhesive layers, and subjecting the measurement sample to measurement of a dynamic viscoelastic spectrum from -50°C to 200°C using a viscoelastic spectrometer (e.g., DVA-200 available from IT Keisoku Seigyo Co., Ltd.) in a shear mode at a temperature increase rate of 5°C/min and a measurement frequency of 10 Hz. Further, from the dynamic viscoelastic spectrum obtained at this time, the loss tangent peak temperature of the first adhesive layer can be obtained.

The peak temperature of the loss tangent (tanδ) of the first adhesive layer as measured at a frequency of 10 Hz and the shear storage modulus at 25°C of the first adhesive layer can be adjusted by, for example, adjusting the types or proportions of the monomers constituting the (meth)acrylic copolymer, the weight average molecular weight of the (meth)acrylic copolymer, the presence or absence of the tackifier resin (T2), the types or proportions of the tackifier resin (T1) and the tackifier resin (T2), or the gel fraction of the first adhesive layer described below.

The lower limit of the gel fraction of the first adhesive layer is preferably 15% by mass, and the upper limit thereof is

preferably 70% by mass. When the gel fraction of the first adhesive layer is 15% by mass or greater, the first adhesive layer can have higher bulk strength, and the resulting adhesive tape can have improved holding performance. When the gel fraction of the first adhesive layer is 70% by mass or less, the above-described shear storage modulus at 25°C of the first adhesive layer can be moderately lowered, so that the flexibility of the first adhesive layer can be further improved. The first adhesive layer thus can have improved adhesion to fluororesins and also more closely adhere to the substrate. The lower limit of the gel fraction of the first adhesive layer is more preferably 20% by mass, and the upper limit thereof is more preferably 65% by mass. The lower limit is still more preferably 25% by mass, and the upper limit is still more preferably 60% by mass.

The gel fraction of the first adhesive layer can be measured by the following method, for example.

The adhesive tape is cut into a flat rectangular shape with a size of 50 mm in width × 100 mm in length to prepare a specimen. The specimen is immersed in an organic solvent at 23°C for 24 hours, then taken out of the organic solvent, and dried at 110°C for 1 hour. The organic solvent may be ethyl acetate, for example, when the base polymer (P1) is a (meth) acrylic copolymer. The organic solvent may be toluene, for example, when the base polymer (P1) is a styrene elastomer. The mass of the dried specimen is measured, and the gel fraction is calculated using the following equation (1). No release film for protecting the adhesive layer is laminated on the specimen.

$$\text{Gel fraction (\% by mass)} = 100 \times (W_2 - W_0)/(W_1 - W_0) \qquad (1)$$

($W_0$: mass of substrate, $W_1$: mass of specimen before immersion, $W_2$: mass of specimen after immersion and drying)

The gel fraction of the first adhesive layer can be adjusted to the above range by, for example, adjusting the types or proportions of the monomers constituting the (meth)acrylic copolymer, the weight average molecular weight of the (meth)acrylic copolymer, or the type or proportion of the curing agent.

The lower limit of the thickness of the first adhesive layer is preferably 20 μm, and the upper limit thereof is preferably 500 μm. When the thickness of the first adhesive layer is within the range, the first adhesive layer can have sufficient adhesion. The lower limit of the thickness of the first adhesive layer is more preferably 25 μm, and the upper limit thereof is more preferably 300 μm, still more preferably 100 μm, further more preferably 80 μm.

The adhesive tape of the present invention may include other layer(s) than the first adhesive layer and the substrate, as necessary.

From the standpoint of reworkability, the adhesive tape of the present invention preferably includes an intermediate layer and a second adhesive layer in this order on the surface of the first adhesive layer opposite to the surface adjacent to substrate. In other words, the adhesive tape of the present invention preferably includes the substrate, the first adhesive layer, an intermediate layer, and a second adhesive layer in this order.

Generally, an adhesive tape attached to an adherend of metal or high-polarity resin (e.g., polyester or polyimide) tends to have higher adhesion between the adhesive layer and the adherend than between the adhesive layer and a fluororesin-containing substrate such as the above-described substrate. Thus, the adhesive tape may break between the fluororesin-containing substrate and the adhesive layer when the adhesive tape is attempted to be peeled off.

When the adhesive tape of the present invention includes the intermediate layer, breaking between the substrate and the first adhesive layer can be further reduced, thus facilitating peeling of the adhesive tape and improving the reworkability. In addition, when the adhesive tape of the present invention includes the second adhesive layer at the outermost surface, the adhesive tape can have lower adherend selectivity and thus can be attached to various adherends.

The second adhesive layer may have a single-layer structure or a multilayer structure. To prevent the interlayer failure between adhesive layers, the second adhesive layer preferably has a single-layer structure.

The second adhesive layer preferably contains a base polymer (P2).

The base polymer (P2) preferably includes at least one selected from the group consisting of a (meth)acrylic copolymer and a styrene elastomer.

The styrene elastomer in the base polymer (P2) may be the same as that in the base polymer (P1) described above.

The (meth)acrylic copolymer in the base polymer (P2) may be the same as that in the base polymer (P1) described above.

To further reduce the potential of the adhesive tape for contaminating adherends, preferably, the second adhesive layer contains no organosilicon compound or contains an organosilicon compound in a proportion of 3.0% by mass or less. When the second adhesive layer contains an organosilicon compound, the upper limit of the proportion of the organosilicon compound is more preferably 1.0% by mass. The second adhesive layer particularly preferably contains no organosilicon compound.

The second adhesive layer preferably further contains a tackifier resin (T3) to further improve the adhesion. Examples of the tackifier resin (T3) include the same tackifier resin as the tackifier resin (T2).

When the base polymer (P2) includes the (meth)acrylic copolymer, the second adhesive layer preferably further

contains a curing agent. The curing agent contained in the second adhesive layer allows the (meth)acrylic copolymer to form a chemically crosslinked structure, which can further improve the adhesion and holding performance of the resulting adhesive tape.

The curing agent contained in the second adhesive layer may be the same as that contained in the first adhesive layer, for example.

The upper limit of the probe tack value of the second adhesive layer as measured at 23°C, a pressuring pressure of 98 gf, a pressuring speed of 100 mm/sec, a pressuring time of 10 seconds, and a withdrawal speed of 5 mm/sec (hereinafter also referred to as "the probe tack value at 23°C of the second adhesive layer") is preferably 20 N/5 mmφ. When the probe tack value at 23°C of the second adhesive layer is 20 N/5 mmφ or less, the second adhesive layer can be less sticky, so that the adhesive tape of the present invention can have better workability during attachment. The upper limit of the probe tack value at 23°C of the second adhesive layer is more preferably 15 N/5 mmφ, still more preferably 10 N/5 mmφ. The lower limit of the probe tack value at 23°C of the second adhesive layer is preferably 0.01 N/5 mmφ. When the probe tack value at 23°C of the second adhesive layer is 0.01 N/5 mmφ or more, the second adhesive layer can have moderate adhesion, which makes it easier to adjust the attachment position of the adhesive tape of the present invention, leading to better workability during attachment. The lower limit of the probe tack value at 23°C of the second adhesive layer is more preferably 0.1 N/5 mmφ, still more preferably 1.0 N/5 mmφ. The probe tack value at 23°C of the second adhesive layer can be measured by a probe tack test in conformity with JIS Z3284. Specifically, for example, the adhesive tape of the present invention is cut into a specimen with a size of 30 mm in width × 30 mm in length. The probe tack test is performed on the second adhesive layer of the specimen using a probe tack tester (e.g., TAC-2 available from RHESCA) at 23°C, a pressuring pressure of 98 gf, a pressuring speed of 100 mm/sec, a pressuring time of 10 seconds, and a withdrawal speed of 5 mm/sec, whereby the probe tack value can be measured.

The probe tack value at 23°C of the second adhesive layer can be adjusted by, for example, a method of changing the composition, weight average molecular weight, or molecular weight distribution of the base polymer (P2), a method of changing the type or proportion of the tackifier resin (T3), a method of changing the types or amounts of fine particles and additives to be compounded, a method of changing the thickness of the second adhesive layer, a method of changing the storage modulus or the glass transition temperature, a method of changing the crosslinking density, or a method of changing the surface roughness.

The upper limit of the 180° peeling force at 23°C of the second adhesive layer for SUS is preferably 8.0 N/25 mm. When the 180° peeling force at 23°C of the second adhesive layer for SUS is 8.0 N/25 mm or less, the resulting adhesive tape can have further improved reworkability. The upper limit of the 180° peeling force at 23°C of the second adhesive layer for SUS is more preferably 7.0 N/25 mm, still more preferably 5.0 N/25 mm.

The lower limit of the 180° peeling force at 23°C of the second adhesive layer for SUS is preferably 2.0 N/25 mm. When the 180° peeling force at 23°C of the second adhesive layer for SUS is 2.0 N/25 mm or greater, the resulting adhesive tape can have further improved adhesion. The lower limit of the 180° peeling force at 23°C of the second adhesive layer for SUS is more preferably 2.5 N/25 mm, still more preferably 3.0 N/25 mm.

The 180° peeling force at 23°C of the second adhesive layer for SUS can be measured by the following method, for example.

Specifically, the adhesive tape is cut into a size of 25 mm in width × 100 mm in length and then pressure-bonded to a SUS plate (SUS304 plate washed with ethanol and then wiped dry) by moving a 2-kg rubber roller back and forth once thereon at a speed of 300 mm/min. The adhesive tape is then left to stand for aging in an environment at 23°C and 50% RH for 20 minutes, whereby a test sample is prepared. The obtained test sample is subjected to a 180° peel test in conformity with JIS Z0237 using a tensile tester (e.g., Tensilon, available from Orientec) at 23°C, 50% RH, and a peel rate of 300 mm/min. The adhesive tape is peeled off from the SUS plate, whereby the 180° peeling force at 23°C of the second adhesive layer for SUS can be measured.

The lower limit of the thickness of the second adhesive layer is preferably 20 μm, and the upper limit thereof is preferably 500 μm. When the thickness of the second adhesive layer is in the range, the second adhesive layer can have sufficient adhesion. The lower limit of the thickness of the second adhesive layer is more preferably 25 μm, and the upper limit thereof is more preferably 300 μm, still more preferably 100 μm, further more preferably 80 μm.

The intermediate layer preferably contains at least one selected from the group consisting of a polyester resin, a polyimide resin, a polyolefin resin, a polyurethane resin, a glass fiber, a carbon fiber, or a metal, so as to have high adhesion with the first and second adhesive layers. In particular, to have higher adhesion, the intermediate layer more preferably contains at least one selected from the group consisting of a polyester resin and a polyolefin resin.

Examples of the polyester resin include polyethylene terephthalate (PET), polytrimethylene terephthalate (PTT), polybutylene terephthalate (PBT), polyethylene furanoate (PEF), polylactic acid (PLA), and polybutylene succinate (PBS).

Examples of the polyimide resin include Kapton (available from Du Pont) and Upilex (available from UBE).

Examples of the polyolefin resin include polyethylene (PE), polypropylene (PP), and ethylene-vinyl acetate copolymer (EVA).

The polyurethane resin is a resin composition containing a polyisocyanate and a polyol. Examples of the polyisocyanate include 4,4'-diphenylmethane diisocyanate (MDI). Examples of the polyol include polypropylene glycol (PPG).

Examples of the metal include SUS, copper, and aluminum.

The intermediate layer may be in a film form, a non-woven fabric form, or a woven fabric form, for example. In particular, for the adhesive layer to have high adhesion to the first and second adhesive layers, at least one selected from the group consisting of a non-woven fabric form and a woven fabric form is preferred.

Examples of a substrate in a non-woven fabric form include G2260-1S (available from Toray International, Inc.).

Examples of a substrate in a woven fabric form include glass cloth and carbon cloth. Specific examples of the glass cloth include KS2770 (available from Nitto Boseki Co., Ltd.). Specific examples of the carbon cloth include C-540 (available from Hagihara Industries Inc.)

The intermediate layer may have a foam structure. When the intermediate layer has a foam structure, the intermediate layer can have improved flexibility, and the resulting adhesive tape can have further improved holding performance and reworkability.

Examples of the intermediate layer having a foam structure include foams such as foams of the above polyolefin resins and foams of the above polyurethane resins.

The lower limit of the thickness of the intermediate layer is preferably 4 μm, and the upper limit thereof is preferably 500 μm. When the thickness of the intermediate layer is within the range, the resulting adhesive tape can have further improved reworkability. The lower limit of the thickness of the intermediate layer is more preferably 12 μm, and the upper limit thereof is more preferably 300 μm. The lower limit is still more preferably 23 μm, and the upper limit is still more preferably 200 μm.

From the standpoint of the workability during attachment, the adhesive tape of the present invention preferably includes the substrate, the first adhesive layer, and a hot-melt adhesive layer in this order.

The "hot-melt adhesive layer" herein refers to an adhesive layer that is melted by heating and applied in a molten state to an adherend.

If a conventional adhesive used in attaching fluororesin has too high adhesion to an adherend at room temperature, the adhesive may have poor workability due to stickiness and also make it difficult to adjust the fluororesin attachment position on the adherend. Therefore, adhesives used for bonding fluororesin are preferably less sticky and have excellent workability during attachment, allowing easy adjustment of the fluororesin attachment position on an adherend.

When the adhesive tape of the present invention includes the hot-melt adhesive layer at the outermost surface, the stickiness of the adhesive tape of the present invention at room temperature can be further reduced, leading to excellent workability during attachment.

The hot-melt adhesive layer may have a single-layer structure or a multilayer structure. To prevent the interlayer failure between adhesive layers, the hot-melt adhesive layer preferably has a single-layer structure.

The lower limit of the 180° peeling force at 23°C of the hot-melt adhesive layer for SUS when the hot-melt adhesive layer is pressured-bonded by pressurization at 0.1 MPa for 10 minutes in an environment at 150°C (hereinafter also simply referred to as "the 180° peeling force at 23°C of the hot-melt adhesive layer after heating for SUS") is preferably 5.0 N/25 mm. When the 180° peeling force at 23°C of the hot-melt adhesive layer after heating for SUS is 5.0 N/25 mm or greater, the adhesive tape can exhibit excellent adhesion when heated, and thus can achieve both excellent workability during attachment and excellent adhesion. The lower limit of the 180° peeling force at 23°C of the hot-melt adhesive layer after heating for SUS is preferably 7.0 N/25 mm, more preferably 10.0 N/25 mm.

The upper limit of the 180° peeling force at 23°C of the hot-melt adhesive layer after heating for SUS is not limited, but the upper limit is practically 500 N/25 mm.

The 180° peeling force at 23°C of the hot-melt adhesive layer after heating for SUS can be measured by the following method, for example.

Specifically, the adhesive tape is cut into a size of 25 mm in width × 100 mm in length, and then the first adhesive layer is backed with a 23-μm-thick PET film (e.g., FE2002 available from Futamura Chemical Co., Ltd.). The hot-melt adhesive layer is pressure-bonded to a SUS plate (SUS304 plate washed with ethanol and then wiped dry) by pressurization at 0.1 MPa for 10 minutes in an environment at 150°C. The workpiece is then air-cooled to prepare a test sample. The obtained test sample is subjected to a 180° peel test in conformity with JIS Z0237 using a tensile tester (e.g., Tensilon, available from Orientec) at 23°C, 50% RH, and a peel rate of 300 mm/min. The adhesive tape is peeled off from the SUS plate, whereby the 180° peeling force at 23°C of the hot-melt adhesive layer for SUS can be measured.

The 180° peeling force at 23°C of the hot-melt adhesive layer after heating for SUS may be adjusted by, for example, a method of changing the composition of the later-described base polymer (P3) or a method of changing the thickness of the hot-melt adhesive layer.

The upper limit of the 180° peeling force at 23°C of the hot-melt adhesive layer for SUS is preferably 15 N/25 mm. When the 180° peeling force at 23°C of the hot-melt adhesive layer for SUS is 15 N/25 mm or less, the resulting adhesive

tape can have further improved workability during attachment. The upper limit of the 180° peeling force at 23°C of the hot-melt adhesive layer for SUS is more preferably 12 N/25 mm, still more preferably 10 N/25 mm.

Specifically, the adhesive tape is cut into a size of 25 mm in width × 100 mm in length and then pressure-bonded to a SUS plate (SUS304 plate washed with ethanol and then wiped dry) by moving a 2-kg rubber roller back and forth once thereon at a speed of 300 mm/min. The adhesive tape is then left to stand for aging in an environment at 23°C and 50% RH for 20 minutes, whereby a test sample is prepared. The obtained test sample is subjected to a 180° peel test in conformity with JIS Z0237 using a tensile tester (e.g., Tensilon, available from Orientec) at 23°C, 50% RH, and a peel rate of 300 mm/min. The adhesive tape is peeled off from the SUS plate, whereby the 180° peeling force at 23°C of the hot-melt adhesive layer for SUS can be measured.

The 180° peeling force at 23°C of the hot-melt adhesive layer for SUS may be adjusted by, for example, a method of changing the composition of the base polymer (P3) or a method of changing the thickness of the hot-melt adhesive layer.

The hot-melt adhesive layer preferably contains a base polymer (P3).

The base polymer (P3) preferably includes at least one selected from the group consisting of a (meth)acrylic copolymer, a styrene elastomer, an ethylene-vinyl acetate copolymer, a chloroprene rubber, a nitrile rubber, a polyurethane resin, a polyamide resin, a polyolefin resin, a polyester resin, and an epoxy resin. In particular, from the standpoint of tackiness control and heat resistance, preferred are a (meth)acrylic copolymer, a styrene elastomer, a chloroprene rubber, a nitrile rubber, a polyurethane resin, a polyamide resin, a polyolefin resin, and a polyester resin.

The (meth)acrylic copolymer and styrene elastomer in the base polymer (P3) may be the same as those in the base polymer (P1) or base polymer (P2) described above.

Specific examples of the (meth)acrylic copolymer in the base polymer (P3) include SK-Dyne 1717DT (available from Soken Chemical & Engineering Co., Ltd.).

Examples of the ethylene-vinyl acetate copolymer include HM200 (available from Cemedine Co., Ltd.).

Examples of the chloroprene rubber include 575F (available from Cemedine Co., Ltd.) and G17 (available from Konishi Co., Ltd.).

Examples of the nitrile rubber include 501F (available from Cemedine Co., Ltd.).

Examples of the polyurethane resin include SHM107-PUR (available from Sheedom Co., Ltd.)

Examples of the polyamide include SHM301-PAD (Sheedom Co., Ltd.).

Examples of the polyolefin resin include PPET1401SG (available from Toagosei Co., Ltd.).

Examples of the epoxy resin include 1500 (Sheedom Co., Ltd.).

Examples of the polyester resin include PH-413 (available from Nihon Matai Co., Ltd.).

To further reduce the potential of the adhesive tape for contaminating adherends, preferably, the hot-melt adhesive layer contains no organosilicon compound or contains an organosilicon compound in a proportion of 3.0% by mass or less. When the hot-melt adhesive layer contains an organosilicon compound, the upper limit of the proportion of the organosilicon compound is more preferably 1.0% by mass. The hot-melt adhesive layer particularly preferably contains no organosilicon compound.

The hot-melt adhesive layer preferably further contains a tackifier resin (T4) to further improve the adhesion. Examples of the tackifier resin (T4) include the same tackifier resins as the tackifier resin (T2) and the tackifier resin (T3).

When the base polymer (P3) includes the (meth)acrylic copolymer, the hot-melt adhesive layer preferably further contains a curing agent. The curing agent contained in the hot-melt adhesive layer allows the (meth)acrylic copolymer to form a chemically crosslinked structure, which can further improve the adhesion of the resulting adhesive tape.

The curing agent contained in the hot-melt adhesive layer may be the same as that contained in the first adhesive layer or the second adhesive layer, for example.

The hot-melt adhesive layer may contain conventionally known fine particles and additives such as inorganic fine particles, conductive fine particles, antioxidants, foaming agents, organic fillers, or inorganic fillers, if necessary.

The upper limit of the probe tack value of the hot-melt adhesive layer as measured at 23°C, a pressuring pressure of 98 gf, a pressuring speed of 100 mm/sec, a pressuring time of 10 seconds, and a withdrawal speed of 5 mm/sec (hereinafter also simply referred to as "the probe tack value at 23°C of the hot-melt adhesive layer") is preferably 20 N/5 mmφ. When the probe tack value at 23°C of the hot-melt adhesive layer is 20 N/5 mmφ or less, the hot-melt adhesive layer can be less sticky, so that the adhesive tape of the present invention can have better workability during attachment. The upper limit of the probe tack value at 23°C of the hot-melt adhesive layer is more preferably 15 N/5 mmφ, still more preferably 10 N/5 mmφ.

The lower limit of the probe tack value at 23°C of the hot-melt adhesive layer is preferably 0.01 N/5 mmφ. When the probe tack value at 23°C of the hot-melt adhesive layer is 0.01 N/5 mmφ or greater, the hot-melt adhesive layer can have moderate adhesion, which makes it easier to adjust the attachment position of the adhesive tape, leading to better workability during attachment. The lower limit of the probe tack value at 23°C of the hot-melt adhesive layer is more preferably 0.1 N/5 mmφ, still more preferably 1.0 N/5 mmφ.

The probe tack value at 23°C of the hot-melt adhesive layer can be measured by the same method as the probe tack value at 23°C of the second adhesive layer described above.

The probe tack value at 23°C of the hot-melt adhesive layer can be adjusted by, for example, a method of changing the composition, weight average molecular weight, or molecular weight distribution of the base polymer (P3), a method of changing the type or proportion of the tackifier resin (T4), a method of changing the types or amounts of fine particles and additives to be compounded, a method of changing the thickness of the hot-melt adhesive layer, a method of changing the storage modulus or the glass transition temperature, a method of changing the crosslinking density, or a method of changing the surface roughness.

The lower limit of the thickness of the hot-melt adhesive layer is preferably 20 μm, and the upper limit thereof is preferably 500 μm. When the thickness of the hot-melt adhesive layer is in the range, the hot-melt adhesive layer can have sufficient adhesion. The lower limit of the thickness of the hot-melt adhesive layer is more preferably 25 μm, and the upper limit thereof is more preferably 300 μm, still more preferably 100 μm, further more preferably 80 μm.

When the adhesive tape of the present invention includes the substrate, the first adhesive layer, and the hot-melt adhesive layer in this order, the adhesive tape may include an intermediate layer between the first adhesive layer and the hot-melt adhesive layer. The intermediate layer can improve the reworkability of the resulting adhesive tape.

The intermediate layer may be the same as that of the above-described adhesive tape including the substrate, the first adhesive layer, the intermediate layer, and the second adhesive layer in this order, for example.

The method for producing the adhesive tape of the present invention is not limited. For example, the adhesive tape including a substrate and a first adhesive layer adjacent to one surface of the substrate may be produced by the following method.

First, a solvent is added to materials such as the (meth)acrylic copolymer, the tackifier resin (T1), the tackifier resin (T2), and the curing agent to prepare an adhesive solution (a). This adhesive solution is applied to one surface of the substrate, and the solvent in the solution is completely removed by drying, whereby a first adhesive layer is formed.

Next, a release film is placed on the formed adhesive layer such that the release-treated side of the release film faces the adhesive layer, whereby an adhesive tape can be obtained that includes the substrate and the first adhesive layer adjacent to one surface of the substrate.

The step of applying the adhesive solution to one surface of the substrate may be completed in one time, or may be performed multiple times in such a manner that the adhesive solution is applied to the previously formed layer of the adhesive solution. The thickness of the first adhesive layer can be easily adjusted by adjusting the number of times of performing the application step.

Similarly, the thickness of the second adhesive layer or the hot-melt adhesive layer can be easily adjusted by adjusting the number of times of performing the step of applying the adhesive during the production process of the adhesive tape.

The adhesive tape of the present invention may be in a roll form. In a roll form, the adhesive tape of the present invention in an elongated shape can be shipped in the form of a wound roll. As a result, the adhesive tape can be appropriately unwound from the roll and cut into an appropriate shape before use.

The adhesive tape of the present invention in a roll form can be produced by, for example, a method including winding the adhesive tape around the core after steps such as applying the adhesive, cutting with a slitter, or rewinding.

The adhesive tape of the present invention can be used in any applications. Since the adhesive tape includes the substrate including a fluororesin-containing film, the adhesive tape is suitably used for bonding fluororesin to a different type of component for various purposes. Specific examples of various purposes include sliding enhancement on friction surfaces, prevention of wear of sliding parts, insulation covering, and protection of adherends from high temperature, chemical liquids, or the like. In particular, the adhesive tape is suitably used for protection of adherends, particularly protection of adherends from chemical liquids. Examples of adherends to be protected from chemical liquids include, but are not limited to, tank bodies, trays, and walls.

Specifically, the adhesive tape can be suitably used as a covering material for chemical tanks for semiconductors, chemical tanks for chemical industries, or piping for chemical liquid transportation, a covering material for electronic device components, or a building material. In particular, the adhesive tape of the present invention is preferably used for lining of a tank body (surface treatment to cover an inner surface of a tank body) of a chemical tank for a semiconductor or of a chemical tank for a chemical industry. In particular, the adhesive tape of the present invention including a hot-melt adhesive layer at the outermost surface has excellent workability during attachment, and thus is more preferably used for lining of a tank body of a chemical tank for a semiconductor or of a chemical tank for a chemical industry. The present invention also encompasses a chemical tank including a tank body and the adhesive tape of the present invention attached to an inner surface of the tank body.

The present invention also encompasses a method for producing a chemical tank for a semiconductor or a chemical tank for a chemical industry, the method including a step of attaching the adhesive tape of the present invention to an inner surface of a tank body of a chemical tank. The adhesive tape includes the substrate including a fluororesin-containing resin film. Thus, the chemical tank production method of the present invention, including the step of attaching the adhesive tape to the inner surface of the tank body of the chemical tank, enables bonding of fluororesin to the tank body of the chemical tank without the need for adhesion enhancement treatment on the fluororesin. The production method thus

enables easy bonding of the fluororesin.

Moreover, the adhesive tape including a hot-melt adhesive layer at the outermost surface has excellent workability during attachment. Thus, the chemical tank production method of the present invention, including the step of attaching the adhesive tape to the inner surface of the tank body of the chemical tank, makes it easy to adjust the fluororesin bonding position on the tank body of the chemical tank.

- Advantageous Effects of Invention

The present invention can provide an adhesive tape that has excellent holding performance and low potential for contaminating adherends and that can facilitate fluororesin bonding. The present invention can also provide a chemical tank including the adhesive tape attached thereto. The present invention can also provide a method for producing a chemical tank using the adhesive tape.

BRIEF DESCRIPTION OF DRAWINGS

FIG. 1 is a schematic view illustrating a holding test method.

DESCRIPTION OF EMBODIMENTS

The embodiments of the present invention are more specifically described in the following with reference to examples. These examples are not intended to limit the present invention.

(Preparation of acrylic copolymer)

(Synthesis Example 1)

A reactor equipped with a thermometer, a stirrer, and a condenser was charged with 100 parts by mass of ethyl acetate, purged with nitrogen, and then heated to start reflux. Thirty minutes after the ethyl acetate came to a boil, 0.08 parts by mass of azobisisobutyronitrile as a polymerization initiator was added. The monomer mixture of the structural unit monomers shown in Table 1 was then uniformly and gradually dropped to the mixture over 1.5 hours for reaction. Thirty minutes after the termination of dropping, 0.1 parts by mass of azobisisobutyronitrile was added to continue the polymerization reaction for an additional 5 hours. The contents of the reactor were then cooled while being diluted by adding ethyl acetate into the reactor, whereby an acrylic copolymer solution having a solid content of 25% by mass was obtained.

The obtained acrylic copolymer solution was passed through a filter (material: polytetrafluoroethylene, pore size: 0.2 μm). The obtained filtrate was supplied to a gel permeation chromatograph (2690 Separations Module, available from Waters) and subjected to GPC measurement at a sample flow rate of 1 mL/min and a column temperature of 40°C. The molecular weight of the acrylic copolymer in terms of polystyrene was measured, and the weight average molecular weight (Mw) and the molecular weight distribution (Mw/Mn) were determined. The column used was GPC KF-806L (available from Showa Denko K.K.). The detector used was a differential refractometer. Table 1 shows the results.

(Synthesis Examples 2 to 10)

Acrylic copolymers were obtained as in Example 1 except that the monomer mixture was changed as shown in Table 1. Table 1 shows the results.

The structural unit monomers shown in Table 1 are as follows.

BA: n-butyl acrylate
2EHA: 2-ethylhexyl acrylate
LA: lauryl acrylate
nHA: n-heptyl acrylate
HEA: 2-hydroxyethyl acrylate
AAc: acrylic acid

[Table 1]

| Acrylic copolymer | | Synthesis Example 1 | 2 | 3 | 4 | 5 | 6 | 7 | 8 | 9 | 10 |
|---|---|---|---|---|---|---|---|---|---|---|---|
| Structural unit monomer (parts by mass) | BA | 96.9 | - | - | - | - | - | - | 50 | 45.9 | 90 |
| | 2EHA | - | 96.9 | 86.9 | - | 95 | 95 | 98.9 | - | - | - |
| | LA | - | - | 10 | - | - | - | - | - | - | - |
| | nHA | - | - | - | 96.9 | - | - | - | 45.9 | 50 | - |
| | HEA | 0.1 | 0.1 | 0.1 | 0.1 | - | 5 | 0.1 | 0.1 | 0.1 | - |
| | AAc | 3 | 3 | 3 | 3 | 5 | - | 1 | 3 | 3 | 10 |
| Weight average molecular weight (Mw) | | 1000000 | 900000 | 950000 | 1000000 | 950000 | 900000 | 300000 | 900000 | 900000 | 1200000 |
| Molecular weight distribution (Mw/Mn) | | 3.8 | 4.5 | 4.7 | 3.9 | 4.5 | 4.9 | 6.2 | 4.8 | 4.8 | 4.2 |

(Preparation of tackifier resin (T1))

(Synthesis Example A)

A reactor equipped with a thermometer, a stirrer, and a condenser was charged with 50 parts by mass of toluene, purged with nitrogen, and then heated to start reflux. After 30 minutes, while the toluene was kept at 75°C, 2 parts by mass of aluminum chloride ($AlCl_3$) was added. Then, a solution of a total of 50 parts by mass of catechol (pyrocatechol) (n = 2) and α-pinene (the molar ratio was as shown in Table 2) in 50 parts by mass of toluene was gradually dropped to the mixture over 1.5 hours for reaction. After 4 hours of polymerization reaction, the contents of the reactor were cooled while 0.1 parts by mass of pyridine was added into the reactor to neutralize hydrochloric acid produced from aluminum chloride ($AlCl_3$). The precipitate resulting from neutralization was filtered out, and the obtained filtrate was subjected to liquid separation. Toluene was then evaporated off, whereby a solid tackifier resin (T1) was obtained.

$^1$H-NMR measurement of the obtained tackifier resin (T1) showed that the tackifier resin (T1) was a copolymer containing a structural unit (A) derived from catechol (pyrocatechol) and a structural unit (B) derived from α-pinene (copolymer containing a structural unit (A) in the backbone structure or an end of the backbone structure).

A solution of the tackifier resin (T1) in tetrahydrofuran was passed through a filter (material: polytetrafluoroethylene, pore size: 0.2 μm). The obtained filtrate was supplied to a gel permeation chromatograph (2690 Separations Module, available from Waters) and subjected to GPC measurement at a sample flow rate of 1 mL/min and a column temperature of 40°C. The molecular weight of the tackifier resin (T1) in terms of polystyrene was measured to determine the weight average molecular weight (Mw). The column used was GPC KF-802.5L (available from Showa Denko K.K.). The detector used was a differential refractometer. Table 2 shows the results.

(Measurement of bio-derived carbon content in tackifier resin (T1))

The bio-derived carbon content of the obtained tackifier resin (T1) was measured in conformity with ASTM D6866-22. Table 2 shows the results.

(Synthesis Examples B to C and E)

Tackifier resins (T1) were synthesized and subjected to measurements as in Synthesis Example A except that the monomers were changed as shown in Table 2 in (Preparation of tackifier resin (T1)) described above. Table 2 shows the results.

(Synthesis Example D)

(Preparation of tackifier resin (T1))

A reactor equipped with a thermometer, a stirrer, and a condenser was charged with 50 parts by mass of toluene, purged with nitrogen, and then heated to start reflux. After 30 minutes, while the toluene was kept at 75°C, 2 parts by mass of aluminum chloride ($AlCl_3$) was added. Then, a solution of a total of 70 parts by mass of 4-vinyl benzoic acid (m = 1) and α-pinene (the molar ratio was as shown in Table 2) in 50 parts by mass of toluene was gradually dropped to the mixture over 1.5 hours for reaction. After 4 hours of polymerization reaction, the contents of the reactor were cooled while 0.1 parts by mass of pyridine was added into the reactor to neutralize hydrochloric acid produced from aluminum chloride ($AlCl_3$). The precipitate resulting from neutralization was filtered out, and the obtained filtrate was subjected to liquid separation. Toluene was then evaporated off, whereby a solid tackifier resin (T1) was obtained.

$^1$H-NMR measurement of the obtained tackifier resin (T1) showed that the tackifier resin (T1) was a copolymer containing a structural unit (A) derived from 4-vinyl benzoic acid and a structural unit (B) derived from α-pinene (copolymer containing a structural unit (A) in a side chain).

A solution of the tackifier resin (T1) in tetrahydrofuran was passed through a filter (material: polytetrafluoroethylene, pore size: 0.2 μm). The obtained filtrate was supplied to a gel permeation chromatograph (2690 Separations Module, available from Waters) and subjected to GPC measurement at a sample flow rate of 1 mL/min and a column temperature of 40°C. The molecular weight of the tackifier resin (T1) in terms of polystyrene was measured to determine the weight average molecular weight (Mw). The column used was GPC KF-802.5L (available from Showa Denko K.K.). The detector used was a differential refractometer. Table 2 shows the results.

(Measurement of bio-derived carbon content in tackifier resin (T1))

The bio-derived carbon content of the obtained tackifier resin (T1) was measured in conformity with ASTM

D6866-22. Table 2 shows the results.

[Table 2]

| Tackifier resin (T1) | | | Synthesis Example | | | | |
|---|---|---|---|---|---|---|---|
| | | | A | B | C | D | E |
| Structural unit monomer (mol%) | Structural unit (A) | Catechol (n = 2) | 10 | - | - | - | - |
| | | Pyrogallol (n = 3) | - | 10 | 10 | - | - |
| | | 4-Vinylbenzoic acid (m = 1) | - | - | - | 10 | - |
| | | 1,2,3-Trimethoxybenzene (l = 3) | - | - | - | - | 10 |
| | Structural unit (B) | α-Pinene | 90 | 90 | 80 | 90 | 90 |
| | | Styrene | - | - | 10 | - | - |
| Weight average molecular weight (Mw) | | | 770 | 560 | 900 | 800 | 810 |
| Structural unit (A) content (% by mass) | | | 8.2 | 9.3 | 9.6 | 10.8 | 12.1 |
| Bio-derived carbon content (% by mass) | | | 90 | 100 | 90 | 90 | 90 |

(1) Preparation of adhesive tape

Twenty parts by mass of a tackifier resin (T2) (Pinecrystal KE-359, available from Arakawa Chemical Industries Ltd.) was added to 100 parts by mass of the solids of an acrylic copolymer (Synthesis Example 1). Further, 30 parts by mass of ethyl acetate (available from Fuji Chemicals Ltd.) and 1.0 parts by mass of an isocyanate curing agent (Coronate L45, available from Tosoh Corporation) were added and sufficiently stirred, whereby an adhesive solution was obtained.

The adhesive solution was applied to a 50-μm-thick PTFE sheet (Yodoflon, available from Yodogawa Hu-Tech Co., Ltd.) and dried at 100°C for five minutes to form a 50-μm-thick first adhesive layer. A 150-μm-thick PET release film was provided. The release-treated side thereof was placed on the first adhesive layer, followed by heating at 40°C for 48 hours for aging. This produced an adhesive tape including a substrate, a first adhesive layer on one side of the substrate, and a PET release film covering the surface of the first adhesive layer.

(2) Measurement of 180° peeling force at 23°C of first adhesive layer for substrate

The obtained adhesive tape was cut into a size of 25 mm in width × 100 mm in length. The PET release film was removed, and then the cut adhesive tape was pressure-bonded to a 50-μm-thick PET film by moving a 2-kg rubber roller back and forth once thereon at a speed of 300 mm/min. The adhesive tape was then left to stand in an environment at 23°C and 50% RH for aging for 20 minutes, whereby a test sample was prepared.

The obtained test sample was subjected to a 180° peel test in conformity with JIS Z0237 using a tensile tester (Tensilon, available from Orientec Co., Ltd.) at 23°C, 50% RH, and a peel rate of 300 mm/min. The first adhesive layer was peeled off from the substrate, and the 180° peeling force (N/25 mm) at 23°C of the first adhesive layer for the substrate was measured. Table 3 shows the results.

(3) Measurement of peak temperature of loss tangent (tanδ) of first adhesive layer at frequency of 10 Hz

In (1) Preparation of adhesive tape described above, the adhesive solution prepared was applied to a 50-μm-thick PET release film and dried at 100°C for five minutes to form a 50-μm-thick first adhesive layer. Multiple first adhesive layers formed in this manner were laminated to a thickness of 1 mm to prepare a measurement sample consisting only of the adhesive layers. A dynamic viscoelastic spectrum from -100°C to 200°C of the obtained measurement sample was measured using a viscoelastic spectrometer (DVA-200, available from IT Measurement Co., Ltd.) in a shear mode at a temperature increase rate of 5°C/min and a measurement frequency of 10 Hz. From the obtained dynamic viscoelastic spectrum, the peak temperature (°C) of the loss tangent (tanδ) was determined. Table 3 shows the results.

(4) Measurement of shear storage modulus at 25°C of first adhesive layer

In (1) Preparation of adhesive tape described above, the adhesive solution prepared was applied to a 50-μm-thick PET release film and dried at 100°C for five minutes to form a 50-μm-thick first adhesive layer. Multiple first adhesive layers formed in this manner were laminated to a thickness of 1 mm to prepare a measurement sample consisting only of

the first adhesive layers. A dynamic viscoelastic spectrum from -100°C to 200°C of the obtained measurement sample was measured using a viscoelastic spectrometer (DVA-200, available from IT Measurement Co., Ltd.) in a shear mode at a temperature increase rate of 5°C/min and a measurement frequency of 10 Hz. From the obtained dynamic viscoelastic spectrum, the shear storage modulus ($\times 10^4$ Pa) at 25°C was determined. Table 3 shows the results.

(5) Measurement of gel fraction of first adhesive layer

The adhesive tape was cut into a flat rectangular shape with a size of 50 mm in width × 100 mm in length to prepare a specimen. The specimen was immersed in ethyl acetate at 23°C for 24 hours, then taken out of the ethyl acetate, and dried at 110°C for 1 hour. The mass of the dried specimen was measured, and the gel fraction (% by mass) was calculated using the following equation (1). No release film for protecting the first adhesive layer was laminated on the specimen. Table 3 shows the results.

$$\text{Gel fraction (\% by mass)} = 100 \times (W_2 - W_0)/(W_1 - W_0) \qquad (1)$$

($W_0$: mass of substrate, $W_1$: mass of specimen before immersion, $W_2$: mass of specimen after immersion and drying)

(Examples 2 to 46 and Comparative Examples 1 to 4)

Adhesive tapes were prepared and subjected to measurements as in Example 1 except that in (1) Preparation of adhesive tape described above, the composition of the first adhesive layer and the type and thickness of the substrate were changed as shown in Tables 3 to 5 and 9. Tables 3 to 5 and 9 show the results.

(Example 47)

(1) Preparation of adhesive tape

Twenty parts by mass of a tackifier resin (T2) (Pinecrystal KE-359, available from Arakawa Chemical Industries Ltd.) was added to 100 parts by mass of the solids of an acrylic copolymer (Synthesis Example 1). Further, 30 parts by mass of ethyl acetate (available from Fuji Chemicals Ltd.) and 1.0 parts by mass of an isocyanate curing agent (Coronate L45, available from Tosoh Corporation) were added and sufficiently stirred, whereby an adhesive solution (a) was obtained.

The obtained adhesive solution (a) was applied to a 50-μm-thick PTFE sheet (Yodoflon, available from Yodogawa Hu-Tech Co., Ltd.) and dried at 100°C for five minutes, whereby a laminate film (a) including a 50-μm-thick first adhesive layer was prepared. The laminate film (a) was then placed on a 50-μm-thick PET film (FE2002, available from Futamura Chemical Co., Ltd.) such that the first adhesive layer faced the PET film, whereby a laminate was obtained.

Similarly, 10 parts by mass of a tackifier resin (T3) (YS Polyster G150, available from Yasuhara Chemical Co., Ltd.) was added to 100 parts by mass of the solids of an acrylic copolymer (Synthesis Example 1). Further, 30 parts by mass of ethyl acetate (available from Fuji Chemicals Ltd.) and 1.0 parts by mass of an isocyanate curing agent (Coronate L45, available from Tosoh Corporation) were added and sufficiently stirred, whereby an adhesive solution (b) was obtained.

The adhesive solution (b) was applied to the release-treated side of a 50-μm-thick PET release film and dried at 100°C for five minutes, whereby a laminate film (b) including a 20-μm-thick second adhesive layer was obtained. Further, the laminate film (b) was placed on the laminate such that the second adhesive layer faced the PET film of the laminate, and aged at 40°C for 48 hours, whereby an adhesive tape was obtained that included a substrate, a first adhesive layer, an intermediate layer, and a second adhesive layer in this order.

(2) Measurement of 180° peeling force at 23°C of first adhesive layer for substrate

The 180° peeling force (N/25 mm) at 23°C of the first adhesive layer for the substrate was measured as in Example 1 except that the laminate in (1) Preparation of adhesive tape described above was used as the test sample. Table 6 shows the results.

(3) Measurement of peak temperature of loss tangent (tanδ) of first adhesive layer at frequency of 10 Hz

The peak temperature (°C) of the loss tangent (tanδ) of the first adhesive layer at a frequency of 10 Hz was measured as in Example 1. Table 6 shows the results.

(4) Measurement of shear storage modulus at 25°C of first adhesive layer

The shear storage modulus ($\times 10^4$ Pa) at 25°C of the first adhesive layer was measured as in Example 1. Table 6 shows the results.

(5) Measurement of gel fraction of first adhesive layer

The gel fraction (% by mass) of the first adhesive layer was measured as in Example 1 except that instead of the adhesive tape, the laminate film (a) in (1) Preparation of adhesive tape described above was cut into the test sample. Table 6 shows the results.

(6) Measurement of 180° peeling force at 23°C of second adhesive layer

The obtained adhesive tape was cut into a size of 25 mm in width × 100 mm in length. The cut adhesive tape was pressure-bonded to a SUS plate (SUS304 plate washed with ethanol and then wiped dry) by moving a 2-kg rubber roller back and forth once thereon at a speed of 300 mm/min. The adhesive tape was then left to stand in an environment at 23°C and 50% RH for aging for 20 minutes, whereby a test sample was prepared.

The obtained test sample was subjected to a 180° peel test in conformity with JIS Z0237 using a tensile tester (Tensilon, available from Orientec) at 23°C, 50% RH, and a peel rate of 300 mm/min. The adhesive tape was peeled off from the substrate, whereby the 180° peeling force (N/25 mm) at 23°C of the second adhesive layer for SUS was measured. Table 6 shows the results.

(7) Measurement of probe tack value at 23°C of second adhesive layer

The obtained adhesive tape was cut into a size of 30 mm in width × 30 mm in length to prepare a specimen. A probe tack test was performed on the second adhesive layer of the prepared specimen using a probe tack tester (TAC-2 available from RHESCA) at 23°C, a pressuring pressure of 98 gf, a pressuring speed of 100 mm/sec, a pressuring time of 10 seconds, and a withdrawal speed of 5 mm/sec, whereby the probe tack value at 23°C of the second adhesive layer was measured. Table 6 shows the results.

(Examples 48 to 80 and Comparative Examples 5 to 7)

Adhesive tapes were prepared and subjected to measurements as in Example 47 except that in (1) Preparation of adhesive tape described above, the composition and the thickness of each layer were changed as shown in Tables 6, 7 and 9. Tables 6, 7, and 9 show the results.

(Example 81)

An adhesive tape was prepared and subjected to measurements as in Example 45 except that in (1) Preparation of adhesive tape described above, the intermediate layer was changed to a closed-cell PE foam (WL02, available from Sekisui Chemical Co., Ltd.). Table 7 shows the results.

(Example 82)

An adhesive tape was prepared and subjected to measurements as in Example 47 except that in (1) Preparation of adhesive tape described above, the laminate film (a) and the laminate film (b) were laminated such that the first adhesive layer faced the second adhesive layer and the resulting workpiece was aged at 40°C for 48 hours to prepare the adhesive tape, and that in (2) Measurement of 180° peeling force at 23°C of first adhesive layer for substrate described above, the measurement was performed as in Example 1 using the laminate film (a) instead of the adhesive tape. Table 7 shows the results.

(Example 83)

(1) Preparation of adhesive tape

Ten parts by mass of a tackifier resin (T1) (Synthesis Example B) was added to 100 parts by mass of the solids of an acrylic copolymer (Synthesis Example 2). Further, 30 parts by mass of ethyl acetate (available from Fuji Chemicals Ltd.) and 0.5 parts by mass of an isocyanate curing agent (Desmodur L-75, available from Covestro) were added and sufficiently

stirred, whereby an adhesive solution (a) was obtained.

The obtained adhesive solution (a) was applied to a 50-μm-thick PTFE sheet (Yodoflon, available from Yodogawa Hu-Tech Co., Ltd.) and dried at 100°C for five minutes, whereby a laminate film (a) including a 50-μm-thick first adhesive layer was prepared. The laminate film (a) was then placed on a 50-μm-thick PET film (FE2002, available from Futamura Chemical Co., Ltd.) such that the first adhesive layer faced the PET film, whereby a laminate was obtained.

Similarly, 10 parts by mass of a tackifier resin (T4) (YS Polyster G150, available from Yasuhara Chemical Co., Ltd.) was added to 100 parts by mass of the solids of an acrylic copolymer (Synthesis Example 10). Further, 30 parts by mass of ethyl acetate (available from Fuji Chemicals Ltd.) and 1.0 parts by mass of an isocyanate curing agent (Coronate L45, available from Tosoh Corporation) were added and sufficiently stirred, whereby an adhesive solution (c) was obtained.

The adhesive solution (c) was applied to the release-treated side of a 50-μm-thick PET release film and dried at 100°C for five minutes, whereby a laminate film (c) including a 20-μm-thick hot-melt adhesive layer was obtained. Further, the laminate film (c) was placed on the laminate such that the hot-melt adhesive layer faced the PET film of the laminate, and the resulting workpiece was aged at 40°C for 48 hours, whereby an adhesive tape was obtained that included a substrate, a first adhesive layer, an intermediate layer, and a hot-melt adhesive layer in this order.

(2) Measurement of 180° peeling force at 23°C of first adhesive layer for substrate

The 180° peeling force (N/25 mm) at 23°C of the first adhesive layer for the substrate was measured as in Example 1 except that the laminate in (1) Preparation of adhesive tape described above was used as the test sample. Table 8 shows the results.

(3) Measurement of peak temperature of loss tangent (tanδ) of first adhesive layer at frequency of 10 Hz

The peak temperature (°C) of the loss tangent (tanδ) of the first adhesive layer at a frequency of 10 Hz was measured as in Example 1. Table 8 shows the results.

(4) Measurement shear storage modulus at 25°C of first adhesive layer

The shear storage modulus ($\times 10^4$ Pa) at 25°C of the first adhesive layer was measured as in Example 1. Table 8 shows the results.

(5) Measurement of gel fraction of first adhesive layer

The gel fraction (% by mass) of the first adhesive layer was measured as in Example 45. Table 8 shows the results.

(6) Measurement of 180° peeling force at 23°C of hot-melt adhesive layer for SUS

The 180° peeling force at 23°C of the hot-melt adhesive layer (N/25 mm) for SUS was measured as in Example 45 except that the measurement subject was changed to the hot-melt adhesive layer. Table 8 shows the results.

(7) Measurement of 180° peeling force at 23°C of hot-melt adhesive layer after heating for SUS

The adhesive tape was cut into a size of 25 mm in width × 100 mm in length and then the first adhesive layer was backed with a 23-μm-thick PET film (FE2002 available from Futamura Chemical Co., Ltd.). The hot-melt adhesive layer was pressure-bonded to a SUS plate (SUS304 plate washed with ethanol and then wiped dry) by pressurization at 0.1 MPa for 10 minutes in an environment at 150°C. The workpiece was then air-cooled to prepare a test sample. The obtained test sample was subjected to a 180° peel test in conformity with JIS Z0237 using a tensile tester (Tensilon, available from Orientec) at 23°C, 50% RH, and a peel rate of 300 mm/min. The adhesive tape was peeled off from the SUS plate, whereby the 180° peeling force (N/25 mm) at 23°C of the hot-melt adhesive layer after heating for SUS was measured. Table 8 shows the results.

(Examples 84 and 85)

Adhesive tapes were prepared and subjected to measurements as in Example 83 except that in (1) Preparation of adhesive tape described above, the composition and the thickness of each layer were changed as shown in Table 8. Table 8 shows the results. In Example 85, 100 parts by mass of a chloroprene rubber (575F, available from Cemedine) was

directly applied to the release-treated side of a 50-μm-thick PET release film to form a hot-melt adhesive layer, thereby providing the laminate film (c).

(Examples 86 to 88)

Adhesive tapes were prepared and subjected to measurements as in Example 83 except that in (1) Preparation of adhesive tape described above, the laminate film (a) and the laminate film (c) were laminated such that the first adhesive layer faced the hot-melt adhesive layer and the resulting workpiece was aged at 40°C for 48 hours to prepare the adhesive tape, and that in (2) Measurement of 180° peeling force at 23°C of first adhesive layer for substrate described above, the measurement was performed as in Example 1 using the laminate film (a) instead of the adhesive tape. Table 8 shows the results. The base polymers of the hot-melt adhesive layers shown in Table 8 were each directly applied to the release-treated side of a 50-μm-thick PET release film to form a hot-melt adhesive layer, thereby providing the laminate film (c).

[Table 3]

| | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Substrate | PTFE sheet (Yodoflon, Yodogawa Hu-Tech Co., Ltd.) | Thickness (μm) | 50 | 50 | 50 | 50 | 50 | 50 | 50 | 50 | 100 | 500 | 2000 | 5000 |

(continued)

| | | | | Example | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| First adhesive layer | Thickness (μm) | | | 50 | 50 | 50 | 50 | 50 | 50 | 50 | 50 | 50 | 50 | 50 | 50 |
| | Base polymer (P1) | Acrylic copolymer | Type | 1 | 1 | 1 | 1 | 1 | 1 | 1 | 1 | 1 | 1 | 1 | 1 |
| | | | Parts by mass | 100 | 100 | 100 | 100 | 100 | 100 | 100 | 100 | 100 | 100 | 100 | 100 |
| | | Styrene elastomer (parts by mass) | SIS block copolymer (Quintac 3421, Zeon Corporation) | - | - | - | - | - | - | - | - | - | - | - | - |
| | | Silicone adhesive (KR-3700, Shin-Etsu Silicone) (parts by mass) | | - | - | - | - | - | - | - | - | - | - | - | - |
| | Tackifier resin (T1) | Type | | - | A | B | C | D | E | B | B | B | B | B | B |
| | | Parts by mass | | - | 10 | 10 | 10 | 10 | 10 | 10 | 10 | 10 | 10 | 10 | 10 |
| | Tackifier resin (T2) (parts by mass) | Rosin ester resin (softening point 100°C, hydroxy value 40 mg KOH/g) (Pinecrystal KE-359, Arakawa Chemical Industries Ltd.) | | 20 | - | - | - | - | - | 10 | - | - | - | - | - |
| | | Rosin ester resin (softening point 88°C, hydroxy value 29 mg KOH/g) (Ester Gum AA-V, Arakawa Chemical Industries Ltd.) | | - | - | - | - | - | - | - | - | - | - | - | - |
| | | Rosin ester resin (softening point 72°C, hydroxy value 29 mg KOH/g) (Ester Gum H, Arakawa Chemical Industries Ltd.) | | - | - | - | - | - | - | - | - | - | - | - | - |
| | | Terpene resin (softening point 125°C, hydroxy value 0 mg KOH/g) (YS Resin PX1250, Yasuhara Chemical Co., Ltd.) | | - | - | - | - | - | - | - | - | - | - | - | - |
| | | Terpene phenol resin (softening point 150 °C, hydroxy value 120 mg KOH/g) (YS Polyster G150, Yasuhara Chemical Co., Ltd.) | | - | - | - | - | - | - | - | 10 | - | - | - | - |
| | | Petroleum resin (softening point 140°C, hydroxy value 0 mg KOH/g) (ARKON P-140, Arakawa Chemical Industries Ltd.) | | - | - | - | - | - | - | - | - | - | - | - | - |
| | Curing agent (parts by mass) | Isocyanate curing agent (Coronate L-45. Tosoh Corporation) | | 1.0 | 0.5 | 0.5 | 0.5 | 0.5 | 0.5 | 0.5 | 0.5 | 0.5 | 0.5 | 0.5 | 0.5 |
| | Additive (parts by mass) | Silane coupling agent (KBM-403. Shin-Etsu Silicone) | | - | - | - | - | - | - | - | - | - | - | - | - |
| | | Silicone oil (KF-96. Shin-Etsu Silicone) | | - | - | - | - | - | - | - | - | - | - | - | - |
| | Proportion of organocilicon compound in first adhesive layer (% by mass) | | | 0 | 0 | 0 | 0 | 0 | 0 | 0 | 0 | 0 | 0 | 0 | 0 |

(continued)

| | | Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Physical property | 180° Peeling force at 23°C of first adhesive layer for substrate (N/25 mm) | 3.5 | 3.8 | 4.1 | 4.2 | 4.1 | 3.3 | 4.5 | 4.3 | 4.1 | 4.1 | 4.1 | 4.1 |
| | Peak temperature of loss tangent (tanδ) of first adhesive layer measured at frequency of 10 Hz (°C) | -10 | -16 | -20 | -18 | -18 | -23 | -15 | -13 | -20 | -20 | -20 | -20 |
| | Shear storage modulus at 25°C of first adhesive layer ($\times 10^4$ Pa) | 5.9 | 4.9 | 5.3 | 5.3 | 5.3 | 5.3 | 5.1 | 5.1 | 5.3 | 5.3 | 5.3 | 5.3 |
| | Gel fraction of first adhesive layer (% by mass) | 35 | 35 | 35 | 35 | 35 | 35 | 20 | 30 | 35 | 35 | 35 | 35 |

[Table 4]

| | | | | Example | | | | | | | | | | | | | |
|---|---|---|---|---|---|---|---|---|---|---|---|---|---|---|---|---|---|
| | | | | 13 | 14 | 15 | 16 | 17 | 18 | 19 | 20 | 21 | 22 | 23 | 24 | 25 | 26 |
| Substrate | PTFE sheet (Yodoflon, Yodogawa Hu-Tech Co., Ltd.) | | Thickness (μm) | 50 | 50 | 50 | 50 | 50 | 50 | 50 | 50 | 50 | 50 | 50 | 50 | 50 | 50 |
| First adhesive layer | Thickness (μm) | | | 50 | 50 | 50 | 50 | 50 | 50 | 50 | 50 | 50 | 50 | 50 | 50 | 50 | 50 |
| | Base polymer (P1) | Acrylic copolymer | Type | 1 | 1 | 1 | 2 | 3 | 4 | 5 | 6 | 1 | 1 | 7 | 1 | - | - |
| | | | Parts by mass | 100 | 100 | 100 | 100 | 100 | 100 | 100 | 100 | 100 | 100 | 100 | 100 | - | - |
| | | Styrene elastomer (parts by mass) | SIS block copolymer (Quintac 3421, Zeon Corporation) | - | - | - | - | - | - | - | - | - | - | - | - | 100 | 100 |
| | | Silicone adhesive (KR-3700, Shin-Etsu Silicone) (parts by mass) | | - | - | - | - | - | - | - | - | - | - | - | - | - | - |
| | Tackifier resin (T1) | Type | | B | B | B | B | B | B | B | B | B | B | B | B | B | B |
| | | Parts by mass | | 10 | 10 | 10 | 10 | 10 | 10 | 10 | 10 | 10 | 10 | 10 | 10 | 10 | 10 |
| | Tackifier resin (T2) (parts by mass) | Rosin ester resin (softening point 100°C, hydroxy value 40 mg KOH/g) (Pinecrystal KE-359, Arakawa Chemical Industries Ltd.) | | - | - | - | - | - | - | - | - | - | - | - | - | - | - |
| | | Rosin ester resin (softening point 88°C, hydroxy value 29 mg KOH/g) (Ester Gum AA-V, Arakawa Chemical Industries Ltd.) | | - | - | - | - | - | - | - | - | - | - | - | - | - | - |
| | | Rosin ester resin (softening point 72°C, hydroxy value 29 mg KOH/g) (Ester Gum H, Arakawa Chemical Industries Ltd.) | | - | - | - | - | - | - | - | - | - | - | - | - | - | - |
| | | Terpene resin (softening point 125°C, hydroxy value 0 mg KOH/g) (YS Resin PX1250, Yasuhara Chemical Co., Ltd.) | | - | - | - | - | - | - | - | - | - | - | - | - | 60 | - |
| | | Terpene phenol resin (softening point 150 °C, hydroxy value 120 mg KOH/g) (YS Polyster G150. Yasuhara Chemical Co., Ltd.) | | - | - | - | - | - | - | - | - | - | - | - | 40 | - | - |
| | | Petroleum resin (softening point 140°C, hydroxy value 0 mg KOH/g) (ARKON P-140, Arakawa Chemical Industries Ltd.) | | - | - | - | - | - | - | - | - | - | - | - | - | - | 60 |

(continued)

| | | | Example | | | | | | | | | | | | | |
|---|---|---|---|---|---|---|---|---|---|---|---|---|---|---|---|---|
| | | | 13 | 14 | 15 | 16 | 17 | 18 | 19 | 20 | 21 | 22 | 23 | 24 | 25 | 26 |
| | Curing agent (parts by mass) | Isocyanate curing agent (Coronate L-45, Tosoh Corporation) | 0.1 | 1.0 | 1.5 | 0.5 | 0.5 | 0.5 | 0.5 | 0.2 | 0.5 | 0.5 | 1.0 | 0.5 | - | - |
| | Additive (parts by mass) | Silane coupling agent (KBM-403. Shin-Etsu Silicone) | - | - | - | - | - | - | - | - | 1.0 | - | - | - | - | - |
| | | Silicone oil (KF-96, Shin-Etsu Silicone) | - | - | - | - | - | - | - | - | - | 4.0 | - | - | - | - |
| | Proportion of organocilicon compound in first adhesive layer (% by mass) | | 0 | 0 | 0 | 0 | 0 | 0 | 0 | 0 | 1.0 | 3.5 | 0 | 0 | 0 | 0 |
| Physical property | 180° Peeling force at 23°C of first adhesive layer for substrate (N/25 mm) | | 4.1 | 2.9 | 3.1 | 4.5 | 4.5 | 4.8 | 3.7 | 3.3 | 4.2 | 4.4 | 5.8 | 3.0 | 9.5 | 8.0 |
| | Peak temperature of loss tangent (tanδ) of first adhesive layer measured at frequency of 10 Hz (°C) | | -20 | -20 | -20 | -27 | -26 | -25 | -15 | -19 | -25 | -27 | -31 | 16 | 15 | 11 |
| | Shear storage modulus at 25°C of first adhesive layer ($\times 10^4$ Pa) | | 5.5 | 5.5 | 5.5 | 4.6 | 4.1 | 5.0 | 4.8 | 4.2 | 5.5 | 5.5 | 4.1 | 9.1 | 9.2 | 8.8 |
| | Gel fraction of first adhesive layer (% by mass) | | 10 | 60 | 65 | 30 | 30 | 30 | 15 | 60 | 30 | 30 | 15 | 30 | 0 | 0 |

[Table 5]

| | | | Example | | | | | | | | | | | | | | | | | | | |
|---|---|---|---|---|---|---|---|---|---|---|---|---|---|---|---|---|---|---|---|---|---|---|
| | | | 27 | 28 | 29 | 30 | 31 | 32 | 33 | 34 | 35 | 36 | 37 | 38 | 39 | 40 | 41 | 42 | 43 | 44 | 45 | 46 |
| Substrate | PTFE sheet (Yodoflon, Yodogawa Hu-Tech Co., Ltd.) | Thickness (µm) | 50 | 50 | 50 | 50 | 50 | 50 | 50 | 50 | 50 | 50 | 50 | 50 | 50 | 50 | 50 | 50 | 50 | 50 | - | - |
| | Laminate film including fluororesin layer and glass cloth layer (Glass Backed Sheet, Yodogawa Hu-Tech Co., Ltd.) | Thickness (µm) | - | - | - | - | - | - | - | - | - | - | - | - | - | - | - | - | - | - | 2000 | 2000 |
| First adhesive layer | Thickness (µm) | | 50 | 50 | 50 | 50 | 50 | 50 | 50 | 50 | 50 | 50 | 50 | 50 | 50 | 50 | 50 | 50 | 50 | 50 | 200 | 200 |
| | Base polymer (P1) | Acrylic copolymer: Type | 4 | 4 | 4 | 4 | 4 | 4 | 4 | 4 | 4 | 4 | 4 | 4 | 4 | 4 | 4 | 4 | 8 | 9 | 1 | 1 |
| | | Acrylic copolymer: Parts by mass | 100 | 100 | 100 | 100 | 100 | 100 | 100 | 100 | 100 | 100 | 100 | 100 | 100 | 100 | 100 | 100 | 100 | 100 | 100 | 100 |
| | | Styrene elastomer (parts by mass): SIS block copolymer (Quintac 3421, Zeon Corporation) | - | - | - | - | - | - | - | - | - | - | - | - | - | - | - | - | - | - | - | - |
| | | Silicone adhesive (KR-3700, Shin-Etsu Silicone) (parts by mass) | - | - | - | - | - | - | - | - | - | - | - | - | - | - | - | - | - | - | - | - |
| | Tackifier resin (T1) | Type | - | - | - | - | A | C | D | E | B | B | B | B | B | B | B | B | B | B | B | - |
| | | Parts by mass | - | - | - | - | 10 | 10 | 10 | 10 | 3 | 5 | 20 | 35 | 10 | 10 | 10 | 10 | 10 | 10 | 10 | - |
| | Tackifier resin (T2) (parts by mass) | Rosin ester resin (softening point 100°C, hydroxy value 40 mg KOH/g) (Pinecrystal KE-359, Arakawa Chemical Industries Ltd.) | 10 | - | - | - | - | - | - | - | - | - | - | - | - | - | - | - | - | - | - | 20 |
| | | Rosin ester resin (softening point 88°C, hydroxy value 29 mg KOH/g) (Ester Gum AA-V, Arakawa Chemical Industries Ltd.) | - | 10 | - | - | - | - | - | - | - | - | - | - | - | - | - | - | - | - | - | - |
| | | Rosin ester resin (softening point 72°C, hydroxy value 29 mg KOH/g) (Ester Gum H, Arakawa Chemical Industries Ltd.) | - | - | 10 | - | - | - | - | - | - | - | - | - | - | - | - | - | - | - | - | - |
| | | Terpene resin (softening point 125°C, hydroxy value 0 mg KOH/g) (YS Resin PX1250, Yasuhara Chemical Co., Ltd.) | - | - | - | - | - | - | - | - | - | - | - | - | - | - | - | - | - | - | - | - |
| | | Terpene phenol resin (softening point 150 °C, hydroxy value 120 mg KOH/g) (YS Polyster G150, Yasuhara Chemical Co., Ltd.) | - | - | - | 10 | - | - | - | - | - | - | - | - | - | - | - | - | - | - | - | - |
| | | Petroleum resin (softening point 140°C, hydroxy value 0 mg KOH/g) (ARKON P-140, Arakawa Chemical Industries Ltd.) | - | - | - | - | - | - | - | - | - | - | - | - | - | - | - | - | - | - | - | - |
| | Curing agent (parts by mass) | Isocyanate curing agent (Coronate L-45, Tosoh Corporation) | 0.5 | 0.5 | 0.5 | 0.5 | 0.5 | 0.5 | 0.5 | 0.5 | 0.5 | 0.5 | 0.5 | 0.5 | 0.1 | 1.0 | 1.0 | 1.0 | 0.5 | 0.5 | 0.5 | 1.0 |
| | Additive (parts by mass) | Silane coupling agent (KBM-403, Shin-Etsu Silicone) | - | - | - | - | - | - | - | - | - | - | - | - | - | - | 1.0 | - | - | - | - | - |
| | | Silicone oil (KF-96, Shin-Etsu Silicone) | - | - | - | - | - | - | - | - | - | - | - | - | - | - | - | 5.0 | - | - | - | - |
| | Proportion of organocilicon compound in first adhesive layer (% by mass) | | 0 | 0 | 0 | 0 | 0 | 0 | 0 | 0 | 0 | 0 | 0 | 0 | 0 | 0 | 1.0 | 3.5 | 0 | 0 | 0 | 0 |
| Physical property | 180° Peeling force at 23°C of first adhesive layer for substrate (N/25 mm) | | 2.1 | 2.9 | 3.1 | 1.9 | 4.1 | 4.4 | 4.9 | 4.2 | 3.1 | 3.6 | 5.3 | 5.6 | 5.3 | 5.1 | 5.0 | 5.3 | 4.8 | 5.2 | 4.5 | 4.1 |
| | Peak temperature of loss tangent (tanδ) of first adhesive layer measured at frequency of 10 Hz (°C) | | -22 | -25 | -23 | -23 | -28 | -23 | -23 | -18 | -22 | -22 | -20 | -17 | -22 | -22 | -25 | -25 | -25 | -27 | -20 | -10 |
| | Shear storage modulus at 25°C of first adhesive layer (× $10^4$ Pa) | | 5.0 | 5.0 | 5.0 | 5.0 | 5.0 | 5.0 | 5.0 | 5.0 | 6.0 | 6.0 | 4.0 | 4.0 | 5.0 | 5.0 | 3.0 | 5.0 | 5.0 | 5.0 | 5.3 | 5.1 |
| | Gel fraction of first adhesive layer (% by mass) | | 35 | 35 | 35 | 35 | 35 | 35 | 35 | 30 | 35 | 35 | 35 | 35 | 10 | 60 | 35 | 35 | 30 | 30 | 35 | 35 |

[Table 6]

| | | | | Example | | | | | | | | | | | | | | | | |
|---|---|---|---|---|---|---|---|---|---|---|---|---|---|---|---|---|---|---|---|---|
| | | | | 47 | 48 | 49 | 50 | 51 | 52 | 53 | 54 | 55 | 56 | 57 | 58 | 59 | 60 | 61 | 62 | 63 |
| Substrate | PTFE sheet (Yodoflon, Yodogawa Hu-Tech Co., Ltd.) | | Thickness (μm) | 50 | 50 | 50 | 50 | 50 | 50 | 50 | 50 | 100 | 500 | 2000 | 5000 | - | - | 50 | 50 | 50 |
| | Laminate film including fluororesin layer and glass cloth layer (Glass Backed Sheet, Yodogawa Hu-Tech Co., Ltd.) | | Thickness (μm) | - | - | - | - | - | - | - | - | - | - | - | - | 2000 | 2000 | | | |
| First adhesive layer | Thickness (μm) | | | 50 | 50 | 50 | 50 | 50 | 50 | 50 | 50 | 50 | 50 | 50 | 50 | 200 | 200 | 50 | 50 | 50 |
| | Base polymer (P1) | Acrylic copolymer | Type | 1 | 1 | 1 | 1 | 1 | 1 | 1 | 1 | 1 | 1 | 1 | 1 | 1 | 1 | 1 | 1 | 1 |
| | | | Parts by mass | 100 | 100 | 100 | 100 | 100 | 100 | 100 | 100 | 100 | 100 | 100 | 100 | 100 | 100 | 100 | 100 | 100 |
| | | Styrene elastomer (parts by mass) | SIS block copolymer (Quintac 3421, Zeon Corporation) | - | - | - | - | - | - | - | - | - | - | - | - | - | - | - | - | - |
| | Tackifier resin (T1) | Type | | - | A | B | C | D | E | B | B | B | B | B | B | B | - | B | B | B |
| | | Parts by mass | | - | 10 | 10 | 10 | 10 | 10 | 10 | 10 | 10 | 10 | 10 | 10 | 10 | - | 10 | 10 | 10 |
| | Tackifier resin (T2) (parts by mass) | Rosin ester resin (softening point 100°C, hydroxy value 40 mg KOH/g) (Pinecrystal KE-359, Arakawa Chemical Industries Ltd.) | | 20 | - | - | - | - | - | 10 | - | - | - | - | - | - | 20 | - | - | - |
| | | Terpene resin (softening point 125°C, hydroxy value 0 mg KOH/g) (YS Resin PX1250, Yasuhara Chemical Co., Ltd.) | | - | - | - | - | - | - | - | - | - | - | - | - | - | - | - | - | - |
| | | Terpene phenol resin (softening point 150 °C, hydroxy value 120 mg KOH/g) (YS Polyster G150, Yasuhara Chemical Co., Ltd.) | | - | - | - | - | - | - | - | 10 | - | - | - | - | - | - | - | - | - |
| | | Petroleum resin (softening point 140°C, hydroxy value 0 mg KOH/g) (ARKON P-140, Arakawa Chemical Industries Ltd.) | | - | - | - | - | - | - | - | - | - | - | - | - | - | - | - | - | - |
| | Curing agent (parts by mass) | Isocyanate curing agent (Coronate L-45, Tosoh Corporation) | | 1.0 | 0.5 | 0.5 | 0.5 | 0.5 | 0.5 | 0.5 | 0.5 | 0.5 | 0.5 | 0.5 | 0.5 | 0.5 | 1.0 | 0.1 | 1.0 | 1.5 |
| | Additive (parts by mass) | Silane coupling agent (KBM-403, Shin-Etsu Silicone) | | - | - | - | - | - | - | - | - | - | - | - | - | - | - | - | - | - |
| | | Silicone oil (KF-96, Shin-Etsu Silicone) | | - | - | - | - | - | - | - | - | - | - | - | - | - | - | - | - | - |
| | Proportion of organocilicon compound in first adhesive layer (% by mass) | | | 0 | 0 | 0 | 0 | 0 | 0 | 0 | 0 | 0 | 0 | 0 | 0 | 0 | 0 | 0 | 0 | 0 |
| Intermediate layer | PET film (FE2002, Futamura Chemical Co., Ltd.) | | Thickness (μm) | 50 | 50 | 50 | 50 | 50 | 50 | 50 | 50 | 50 | 50 | 50 | 50 | 50 | 50 | 50 | 50 | 50 |
| | PP film (FOS-BT, Futamura Chemical Co., Ltd.) | | Thickness (μm) | - | - | - | - | - | - | - | - | - | - | - | - | - | - | - | - | - |
| | Polyimide film (Kapton H, Du Pont-Toray Co., Ltd.) | | Thickness (μm) | - | - | - | - | - | - | - | - | - | - | - | - | - | - | - | - | - |
| | Closed-cell PE foam (WL02, Sekisui Chemical Co.,Ltd.) | | Thickness (μm) | - | - | - | - | - | - | - | - | - | - | - | - | - | - | - | - | - |
| Second adhesive layer | Thickness (μm) | | | 50 | 50 | 50 | 50 | 50 | 50 | 50 | 50 | 50 | 50 | 50 | 50 | 50 | 50 | 50 | 50 | 50 |
| | Base polymer (P2) (parts by mass) | Acryliccopolymer | Synthesis Example1 | 100 | 100 | 100 | 100 | 100 | 100 | 100 | 100 | 100 | 100 | 100 | 100 | 100 | 100 | 100 | 100 | 100 |
| | | Styrene elastomer | SEBS block copolymer (DYNARON 8300P, ENEOS Materials Corporation) | - | - | - | - | - | - | - | - | - | - | - | - | - | - | - | - | - |
| | Tackifier resin (T3) (parts by mass) | Terpene phenol resin (softening point 150 °C, hydroxy value 120 mg KOH/g) (YS Polyster G150, Yasuhara Chemical Co., Ltd.) | | 10 | 10 | 10 | 10 | 10 | 10 | 10 | 10 | 10 | 10 | 10 | 10 | 10 | 10 | 10 | 10 | 10 |
| | | Petroleum resin (softening point 140°C, hydroxy value 0 mg KOH/g) (ARKON P-140, Arakawa Chemical Industries Ltd.) | | - | - | - | - | - | - | - | - | - | - | - | - | - | - | - | - | - |
| | Curing agent (parts by mass) | Isocyanate curing agent (Coronate L-45, Tosoh Corporation) | | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Physical property | 180° Peeling force at 23°C of first adhesive layer for substrate (N/25 mm) | | | 3.5 | 3.8 | 4.1 | 4.2 | 4.1 | 3.3 | 4.5 | 4.3 | 4.1 | 4.1 | 4.1 | 4.1 | 4.5 | 4.1 | 4.1 | 2.9 | 3.1 |
| | Peak temperature of loss tangent (tanδ) of first adhesive layer measured at frequency of 10 Hz (°C) | | | -10 | -16 | -20 | -18 | -18 | -23 | -15 | -13 | -20 | -20 | -20 | -20 | -20 | -10 | -20 | -20 | -20 |
| | Shear storage modulus at 25°C of first adhesive layer (× $10^4$ Pa) | | | 5.1 | 5.1 | 5.3 | 5.3 | 5.3 | 5.3 | 5.1 | 5.1 | 5.3 | 5.3 | 5.3 | 5.3 | 5.3 | 5.1 | 5.3 | 5.3 | 5.3 |
| | Gel fraction of first adhesive layer (% by mass) | | | 35 | 35 | 35 | 35 | 35 | 35 | 20 | 30 | 35 | 35 | 35 | 35 | 35 | 35 | 10 | 60 | 65 |
| | 180° Peeling force at 23°C of second adhesive layer for SUS (N/25 mm) | | | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| | Probe tack value at 23°C of second adhesive layer (N/5 mmφ) | | | 33.9 | 33.9 | 33.9 | 33.9 | 33.9 | 33.9 | 33.9 | 33.9 | 33.9 | 33.9 | 33.9 | 33.9 | 33.9 | 33.9 | 33.9 | 33.9 | 33.9 |

[Table 7]

| | | | Example | | | | | | | | | | | | | | | | | | |
|---|---|---|---|---|---|---|---|---|---|---|---|---|---|---|---|---|---|---|---|---|---|
| | | | 64 | 65 | 66 | 67 | 68 | 69 | 70 | 71 | 72 | 73 | 74 | 75 | 76 | 77 | 78 | 79 | 80 | 81 | 82 |
| Substrate | PTFE sheet (Yodoflon, Yodogawa Hu-Tech Co., Ltd.) | Thickness (µm) | 50 | 50 | 50 | 50 | 50 | 50 | 50 | 50 | 50 | 50 | 50 | 50 | 50 | 50 | 50 | 50 | 50 | 50 | 50 |
| First adhesive layer | Thickness (µm) | | 50 | 50 | 50 | 50 | 50 | 50 | 50 | 50 | 50 | 50 | 50 | 50 | 50 | 50 | 50 | 50 | 50 | 50 | 50 |
| | Base polymer (P1) / Acrylic copolymer | Type | 2 | 3 | 4 | 5 | 6 | 1 | 1 | 7 | 1 | - | - | - | 1 | 1 | 1 | 1 | 1 | 1 | 1 |
| | | Parts by mass | 100 | 100 | 100 | 100 | 100 | 100 | 100 | 100 | 100 | - | - | - | 100 | 100 | 100 | 100 | 100 | 100 | 100 |
| | Styrene elastomer (parts by mass) | SIS block copolymer (Quintac 3421, Zeon Corporation) | - | - | - | - | - | - | - | - | - | 100 | 100 | 100 | - | - | - | - | - | - | - |
| | Tackifier resin (T1) | Type | B | B | B | B | B | B | B | B | B | B | B | B | B | B | B | B | B | B | B |
| | | Parts by mass | 10 | 10 | 10 | 10 | 10 | 10 | 10 | 10 | 10 | 10 | 10 | 10 | 10 | 10 | 10 | 10 | 10 | 10 | 10 |
| | Tackifier resin (T2) (parts by mass) | Rosin ester resin (softening point 100°C, hydroxy value 40 mg KOH/g) (Pinecrystal KE-359, Arakawa Chemical Industries Ltd.) | - | - | - | - | - | - | - | - | - | - | - | - | - | - | - | - | - | - | - |
| | | Terpene resin (softening point 125°C, hydroxy value 0 mg KOH/g) (YS Resin PX1250, Yasuhara Chemical Co., Ltd.) | - | - | - | - | - | - | - | - | - | 60 | - | - | - | - | - | - | - | - | - |
| | | Terpene phenol resin (softening point 150 °C, hydroxy value 120 mg KOH/g) (YS Polyster G150, Yasuhara Chemical Co., Ltd.) | - | - | - | - | - | - | - | - | 40 | - | - | - | - | - | - | - | - | - | - |
| | | Petroleum resin (softening point 140°C, hydroxy value 0 mg KOH/g) (ARKON P-140, Arakawa Chemical Industries Ltd.) | - | - | - | - | - | - | - | - | - | - | 60 | 60 | - | - | - | - | - | - | - |
| | Curing agent (parts by mass) | Isocyanate curing agent (Coronate L-45, Tosoh Corporation) | 0.5 | 0.5 | 0.5 | 0.5 | 0.2 | 0.5 | 0.5 | 1.0 | 0.5 | - | - | - | 0.5 | 0.5 | 0.5 | 0.5 | 0.5 | 0.5 | 0.5 |
| | Additive (parts by mass) | Silane coupling agent (KBM-403, Shin-Etsu Silicone) | - | - | - | - | - | 1.0 | - | - | - | - | - | - | - | - | - | - | - | - | - |
| | | Silicone oil (KF-96, Shin-Etsu Silicone) | - | - | - | - | - | - | 4.0 | - | - | - | - | - | - | - | - | - | - | - | - |
| | Proportion of organocilicon compound in first adhesive layer (% by mass) | | 0 | 0 | 0 | 0 | 0 | 0.9 | 3.5 | 0 | 0 | 0 | 0 | 0 | 0 | 0 | 0 | 0 | 0 | 0 | 0 |
| Intermediate layer | PET film (FE2002, Futamura Chemical Co., Ltd.) | Thickness (µm) | 50 | 50 | 50 | 50 | 50 | 50 | 50 | 50 | 50 | 50 | 50 | 50 | 50 | 50 | 50 | - | - | - | - |
| | PP film (FOS-BT, Futamura Chemical Co., Ltd.) | Thickness (µm) | - | - | - | - | - | - | - | - | - | - | - | - | - | - | - | 50 | - | - | - |
| | Polyimide film (Kapton H, Du Pont-Toray Co., Ltd.) | Thickness (µm) | - | - | - | - | - | - | - | - | - | - | - | - | - | - | - | - | 50 | - | - |
| | Closed-cell PE foam (WL02, Sekisui Chemical Co.,Ltd.) | Thickness (µm) | - | - | - | - | - | - | - | - | - | - | - | - | - | - | - | - | - | 150 | - |
| Second adhesive layer | Thickness (µm) | | 50 | 50 | 50 | 50 | 50 | 50 | 50 | 50 | 50 | 50 | 50 | 50 | 50 | 50 | 50 | 50 | 50 | 50 | 50 |
| | Base polymer (P2) (parts by mass) / Acryliccopolymer | Synthesis Example1 | 100 | 100 | 100 | 100 | 100 | 100 | 100 | 100 | 100 | 100 | 100 | - | - | 100 | - | 100 | 100 | 100 | 100 |
| | Styrene elastomer | SEBS block copolymer (DYNARON 8300P, ENEOS Materials Corporation) | - | - | - | - | - | - | - | - | - | - | - | 100 | 100 | - | 100 | - | - | - | - |
| | Tackifier resin (T3) (parts by mass) | Terpene phenol resin (softening point 150 °C, hydroxy value 120 mg KOH/g) (YS Polyster G150, Yasuhara Chemical Co., Ltd.) | 10 | 10 | 10 | 10 | 10 | 10 | 10 | 10 | 10 | 10 | 10 | - | - | 10 | - | 10 | 10 | 10 | 10 |
| | | Petroleum resin (softening point 140°C, hydroxy value 0 mg KOH/g) (ARKON P-140, Arakawa Chemical Industries Ltd.) | - | - | - | - | - | - | - | - | - | - | - | 10 | 10 | - | 20 | - | - | - | - |
| | Curing agent (parts by mass) | Isocyanate curing agent (Coronate L-45, Tosoh Corporation) | 1.0 | 1.0 | 1.0 | 1.0 | 1.0 | 1.0 | 1.0 | 1.0 | 1.0 | 1.0 | 1.0 | - | - | - | - | 1.0 | 1.0 | 1.0 | 1.0 |
| Physical property | 180° Peeling force at 23°C of first adhesive layer for substrate (N/25 mm) | | 4.5 | 4.5 | 4.8 | 3.7 | 3.3 | 4.4 | 3.6 | 5.8 | 3.0 | 9.5 | 8.0 | 8.0 | 4.1 | 4.1 | 4.1 | 4.1 | 4.1 | 4.1 | 4.1 |
| | Peak temperature of loss tangent (tanδ) of first adhesive layer measured at frequency of 10 Hz (°C) | | -27 | -26 | -25 | -15 | -19 | -25 | -27 | -31 | 16 | 15 | 11 | 11 | -20 | -20 | -20 | -20 | -20 | -20 | -20 |
| | Shear storage modulus at 25°C of first adhesive layer ($\times 10^4$ Pa) | | 4.6 | 4.1 | 5.0 | 4.8 | 4.2 | 5.5 | 5.5 | 4.1 | 9.1 | 21.1 | 22.2 | 22.2 | 5.5 | 5.5 | 5.5 | 5.5 | 5.5 | 5.5 | 5.5 |
| | Gel fraction of first adhesive layer (% by mass) | | 30 | 30 | 30 | 15 | 60 | 30 | 30 | 15 | 30 | 0 | 0 | 0 | 35 | 35 | 35 | 35 | 35 | 35 | 35 |
| | 180° Peeling force at 23°C of second adhesive layer for substrate (N/25 mm) | | 4.5 | 4.5 | 4.5 | 4.5 | 4.5 | 4.5 | 4.5 | 4.5 | 4.5 | 4.5 | 4.5 | 4.8 | 4.8 | 5.2 | 6.6 | 4.5 | 4.5 | 4.7 | 4.5 |
| | Probe tack value at 23°C of second adhesive layer (N/5 mmφ) | | 33.9 | 33.9 | 33.9 | 33.9 | 33.9 | 33.9 | 33.9 | 33.9 | 33.9 | 33.9 | 33.9 | 8.4 | 8.4 | 33.9 | 11.3 | 33.9 | 33.9 | 33.9 | 33.9 |

[Table 8]

| | | | | Example | | | | | |
|---|---|---|---|---|---|---|---|---|---|
| | | | | 83 | 84 | 85 | 86 | 87 | 88 |
| Substrate | PTFE sheet (Yodoflon, Yodogawa Hu-Tech Co., Ltd.) | | Thickness (μm) | 50 | 50 | 50 | 50 | 50 | 50 |
| First adhesive layer | Thickness (μm) | | | 50 | 50 | 50 | 50 | 50 | 50 |
| | Base polymer (P1) | Acrylic copolymer | Type | 2 | 2 | 2 | 2 | 2 | 2 |
| | | | Parts by mass | 100 | 100 | 100 | 100 | 100 | 100 |
| | Tackifier resin (T1) | Type | | B | B | B | B | B | B |
| | | Parts by mass | | 10 | 10 | 10 | 10 | 10 | 10 |
| | Tackifier resin (T2) (parts by mass) | Rosin ester resin (softening point 100°C, hydroxy value 40 mg KOH/g) (Pinecrystal KE-359, Arakawa Chemical Industries Ltd.) | | - | - | - | - | - | - |
| | | Terpene resin (softening point 125°C, hydroxy value 0 mg KOH/g) (YS Resin PX1250, Yasuhara Chemical Co., Ltd.) | | - | - | - | - | - | - |
| | | Terpene phenol resin (softening point 150 °C, hydroxy value 120 mg KOH/g) (YS Polyster G150, Yasuhara Chemical Co., Ltd.) | | - | - | - | - | - | - |
| | | Petroleum resin (softening point 140°C, hydroxy value 0 mg KOH/g) (ARKON P-140, Arakawa Chemical Industries Ltd.) | | - | - | - | - | - | - |
| | Curing agent (parts by mass) | Isocyanate curing agent (Desmodur L-75, available from Covestro) | | 0.5 | 0.5 | 0.5 | 0.5 | 0.5 | 0.5 |
| | Proportion of organocilicon compound in first adhesive layer (% by mass) | | | 0 | 0 | 0 | 0 | 0 | 0 |
| Intermediate layer | PET film (FE2002, Futamura Chemical Co., Ltd.) | | Thickness (μm) | 50 | 50 | 50 | - | - | - |

(continued)

| | | | | Example | | | | | |
|---|---|---|---|---|---|---|---|---|---|
| | | | | 83 | 84 | 85 | 86 | 87 | 88 |
| Hot-melt adhesive layer | Thickness ($\mu$m) | | | 20 | 50 | 50 | 100 | 100 | 100 |
| | Base polymer (P3) | Acryliccopolymer | Synthesis Example10 | 100 | - | - | - | - | - |
| | | Styrene elastomer | SEBS block copolymer (DYNARON 8300P, ENEOS Materials Corporation) | - | 100 | - | - | - | - |
| | | Chloroprene rubber (575F, Cemedine Co., Ltd.) | | - | - | 100 | - | - | - |
| | | Polyurethane resin (SHM101-PUR, Sheedom Co., Ltd.) | | - | - | - | 100 | - | - |
| | | Polyamide resin (SHM301-PAD, Sheedom Co., Ltd.) | | - | - | - | - | 100 | - |
| | | Polyolefin resin (PPET1200F, Toagosei Co., Ltd.) | | - | - | - | - | - | 100 |
| | Tackifier resin (T4) (parts by mass) | Terpene phenol resin (softening point 150 °C, hydroxy value 120 mg KOH/g) (YS Polyster G150, Yasuhara Chemical Co., Ltd.) | | 10 | - | - | - | - | - |
| | | Petroleum resin (softening point 140°C, hydroxy value 0 mg KOH/g) (ARKON P-140, Arakawa Chemical Industries Ltd.) | | - | 50 | - | - | - | - |
| | Curing agent (parts by mass) | Isocyanate curing agent (Coronate L-45, Tosoh Corporation) | | 1.0 | - | - | - | - | - |
| Physical property | 180° Peeling force at 23°C of first adhesive layer for substrate (N/25 mm) | | | 4.5 | 4.5 | 4.5 | 4.5 | 4.5 | 4.5 |
| | Peak temperature of loss tangent (tan$\delta$) of first adhesive layer measured at frequency of 10 Hz (°C) | | | -27 | -27 | -27 | -27 | -27 | -27 |
| | Shear storage modulus at 25°C of first adhesive layer ($\times 10^4$ Pa) | | | 4.6 | 4.6 | 4.6 | 4.6 | 4.6 | 4.6 |
| | Gel fraction of first adhesive layer (% by mass) | | | 30 | 30 | 30 | 30 | 30 | 30 |
| | 180° Peeling force at 23°C of hot-melt adhesive layer for SUS (N/25 mm) | | | 0.1 | 0.1 | 0 | 0 | 0 | 0 |
| | 180° Peeling force at 23°C of hot-melt adhesive layer after heating for SUS (N/25 mm) | | | 20.5 | 8.9 | 31.5 | 8.1 | 24.5 | 25.6 |

[Table 9]

| | | | | Comparative Example | | | | | | |
|---|---|---|---|---|---|---|---|---|---|---|
| | | | | 1 | 2 | 3 | 4 | 5 | 6 | 7 |
| Substrate | PTFE sheet (Yodoflon, Yodogawa Hu-Tech Co., Ltd.) | | Thickness (μm) | 50 | 50 | 50 | 50 | 50 | 50 | 50 |
| First adhesive layer | Thickness (μm) | | | 50 | 50 | 50 | 50 | 50 | 50 | 50 |
| | Base polymer (P1) | Acrylic copolymer | Type | - | - | 1 | - | - | 1 | - |
| | | | Parts by mass | - | - | 100 | - | - | 100 | - |
| | | Styrene elastomer (parts by mass) | SIS block copolymer (Quintac 3421, Zeon Corporation) | - | - | - | 100 | - | - | 100 |
| | | Silicone adhesive (KR-3700, Shin-Etsu Silicone) (parts by mass) | | 100 | 100 | - | - | 100 | - | - |
| | Tackifier resin (T1) | Type | | - | B | - | - | - | - | - |
| | | Parts by mass | | - | 10 | - | - | - | - | - |
| | Tackifier resin (T2) (parts by mass) | Rosin ester resin (softening point 100°C, hydroxy value 40 mg KOH/g) (Pinecrystal KE-359, Arakawa Chemical Industries Ltd.) | | - | - | - | - | - | - | - |
| | | Rosin ester resin (softening point 88°C, hydroxy value 29 mg KOH/g) (Ester Gum AA-V, Arakawa Chemical Industries Ltd.) | | - | - | - | - | - | - | - |
| | | Rosin ester resin (softening point 72°C, hydroxy value 29 mg KOH/g) (Ester Gum H, Arakawa Chemical Industries Ltd.) | | - | - | - | - | - | - | - |
| | | Terpene resin (softening point 125°C, hydroxy value 0 mg KOH/g) (YS Resin PX1250, Yasuhara Chemical Co., Ltd.) | | - | - | - | - | - | - | - |
| | | Terpene phenol resin (softening point 150 °C, hydroxy value 120 mg KOH/g) (YS Polyster G150, Yasuhara Chemical Co., Ltd.) | | - | - | - | - | - | - | - |
| | | Petroleum resin (softening point 140°C, hydroxy value 0 mg KOH/g) (ARKON P-140, Arakawa Chemical Industries Ltd.) | | - | - | - | - | - | - | - |
| | Curing agent (parts by mass) | Isocyanate curing agent (Coronate L-45, Tosoh Corporation) | | - | - | 0.5 | - | - | 0.5 | - |
| | Additive (parts by mass) | Silane coupling agent (KBM-403, Shin-Etsu Silicone) | | - | - | - | - | - | - | - |

(continued)

| | | | | Comparative Example | | | | | | |
|---|---|---|---|---|---|---|---|---|---|---|
| | | | | 1 | 2 | 3 | 4 | 5 | 6 | 7 |
| | | Silicone oil (KF-96, Shin-Etsu Silicone) | | - | - | - | - | - | - | - |
| | Proportion of organocilicon compound in first adhesive layer (% by mass) | | | 100 | 90.9 | 0 | 0 | 100 | 0 | 0 |
| Intermediate layer | PET film (FE2002, Futamura Chemical Co., Ltd.) | | Thickness (μm) | - | - | - | - | 50 | 50 | 50 |
| | PP film (FOS-BT, Futamura Chemical Co., Ltd.) | | Thickness (μm) | - | - | - | - | - | - | - |
| | Polyimide film (Kapton H, Du Pont-Toray Co.. Ltd.) | | Thickness (μm) | - | - | - | - | - | - | - |
| | Closed-cell PE foam (WL02, Sekisui Chemical Co.,Ltd.) | | Thickness (μm) | - | - | - | - | - | - | - |
| Second adhesive layer | Thickness (μm) | | | - | - | - | - | 50 | 50 | 50 |
| | Base polymer(P2) (parts by mass) | Acryliccopolymer | Synthesis Example 1 | - | - | - | - | - | 100 | 100 |
| | | Styrene elastomer | SEBS block copolymer (DYNARON 8300P, ENEOS Materials Corporation) | - | - | - | - | - | - | - |
| | | Silicone adhesive (KR-3700, Shin-Etsu Silicone) | | - | - | - | - | 100 | - | - |
| | Tackifier resin (T3) (parts by mass) | Terpene phenol resin (softening point 150 °C, hydroxy value 120 mg KOH/g) (YS Polyster G150, Yasuhara Chemical Co., Ltd.) | | - | - | - | - | - | 10 | 10 |
| | | Petroleum resin (softening point 140°C, hydroxy value 0 mg KOH/g) (ARKON P-140, Arakawa Chemical Industries Ltd.) | | - | - | - | - | - | - | - |
| | Curing agent (parts by mass) | Isocyanate curing agent (Coronate L-45, Tosoh Corporation) | | - | - | - | - | - | 1.0 | 1.0 |
| Physical property | 180° Peeling force at 23°C of first adhesive layer for substrate (N/25 mm) | | | 5.5 | 5.6 | 2.2 | 0.1 | 5.5 | 2.2 | 0.1 |
| | Peak temperature of loss tangent (tanδ) of first adhesive layer measured at frequency of 10 Hz (°C) | | | Lower than -50 | Lower than -50 | -22 | -43 | Lower than -50 | -22 | -43 |
| | Shear storage modulus at 25°C of first adhesive layer (× $10^4$ Pa) | | | 4.5 | 4.7 | 6.1 | 190 | 4.5 | 6.1 | 190 |
| | Gel fraction of first adhesive layer (% by mass) | | | 40 | 40 | 45 | 0 | 40 | 45 | 0 |
| | 180° Peeling force at 23°C of second adhesive layer for substrate (N/25 mm) | | | - | - | - | - | 4.9 | 4.5 | 4.5 |

(continued)

| | | Comparative Example | | | | | | |
|---|---|---|---|---|---|---|---|---|
| | | 1 | 2 | 3 | 4 | 5 | 6 | 7 |
| | Probe tack value at 23°C of second adhesive layer (N/5 mmφ) | - | - | - | - | 10.6 | 33.9 | 33.9 |

<Evaluation>

The adhesive tapes obtained in the examples and the comparative examples were evaluated as follows. Tables 10 to 15 show the results.

(1) Holding performance

(1-1) Amount of displacement

The obtained adhesive tape was cut into a strip (25 mm in width) and then attached to a SUS plate (SUS304 plate washed with ethanol and then wiped dry) by moving a 2-kg rubber roller back and forth once thereon at a speed of 300 mm/min. Next, a cut was made in the adhesive tape such that a bonding area of 25 mm × 25 mm was obtained. The workpiece was left to stand at 23°C for 20 minutes, whereby a test sample was obtained. The test sample prepared was put in an 80°C oven and heated for 20 minutes. Then, as shown in FIG. 1, a 1-kg weight was attached to the sample to apply a shear load thereto at 80°C and 50% RH. After one hour from the application of the load, the amount of displacement (shift) (mm) from the position of the cut was measured with a scale magnifier. In Examples 83 to 88, in which the hot-melt adhesive layer was at the outermost surface, the test sample was prepared by making the cut in the adhesive tape and then heat-aging the adhesive tape for 10 minutes at 150°C and 0.1 MPa.

Using the obtained amount of displacement (mm), the holding performance of the adhesive tape was evaluated in accordance with the following criteria.

◦◦: The amount of displacement was 0.5 mm or less.
◦: The amount of displacement was greater than 0.5 mm and 1.0 mm or less.
△: The amount of displacement was greater than 1.0 mm and 2.0 mm or less.
×: The amount of displacement was greater than 2.0 mm.

(2-1) Site of displacement

After the holding test of the adhesive tape in (1-1) Amount of displacement described above, the adhesive tape of the test sample was visually observed, and the site of displacement was determined in accordance with the following criteria.

A: Displacement occurred between the SUS and the adhesive layer in contact with the SUS.
B: Displacement occurred between the substrate and the first adhesive layer.
C: Displacement occurred in the first adhesive layer or the second adhesive layer.

From the standpoint of the adhesion reliability to substrates and adherends at high temperature, the adhesive tape in this evaluation is preferably rated "C". However, even if rated "B" in this evaluation, the adhesive tape of the present invention still can be used without problems.

(2) Potential for contaminating adherend

After the holding test of the adhesive tape in (1) Holding performance described above, the adhesive tape was peeled off from the surface. The surface was analyzed using an X-ray photoelectron spectrometer (PHI 5000 VersaProbe II, available from ULVAC-PHI, Inc.), and the silicon atom concentration (at%) was measured on the adhesive tape peel surface of the SUS plate. The XPS measurement was performed under the following conditions.

<Measurement conditions>

X-ray source: monochromatic Al Kα (1486.6 eV)
Analyzer: electrostatic concentric hemispherical analyzer
Photoelectron take-off angle: 45 degrees
Charge neutralization: applied
X-ray beam diameter: 200 μm
Pass energy: 117 eV

Using the obtained silicon atom concentration (at%), the potential of the adhesive tape for contaminating adherends was evaluated in accordance with the following criteria.

◦: The silicon atom concentration was 0.1 at% or less.
△: The silicon atom concentration was greater than 0.1 at% and 1.0 at% or less.
×: The silicon atom concentration was greater than 1.0 at%.

(3) Reworkability

The obtained adhesive tape was cut into a size of 25 mm in width × 100 mm in length. The second adhesive layer was pressure-bonded to a SUS plate (SUS304 plate washed with ethanol and then wiped dry) by moving a 2-kg rubber roller back and forth once thereon at a speed of 300 mm/min. The adhesive tape was then left to stand in an environment at 23°C and 50% RH for aging for 20 minutes, whereby a test sample was prepared.
The obtained test sample was subjected to a 180° peel test in conformity with JIS Z0237 using a tensile tester (e.g., Tensilon, available from Orientec) at 23°C, 50% RH, and a peel rate of 300 mm/min. The adhesive tape was peeled off from the SUS plate, and the reworkability of the adhesive tape was evaluated in accordance with the following criteria.

◦: The adhesive tape was peeled off without breaking, leaving no residue on the SUS.
△: The adhesive tape was peeled off without breaking but left residue on the SUS.
×: The adhesive tape broke during peeling of the adhesive tape.

Even if rated "×" in this evaluation, the adhesive tape of the present invention still can be used without problems depending on the application. This evaluation was performed only in Examples 47 to 85 and Comparative Examples 5 to 7.

(4) Workability during attachment

The obtained adhesive tape was cut into a size of 25 mm in width × 100 mm in length. The PET release film protecting the first adhesive layer of the cut adhesive tape was removed. The first adhesive layer was pressure-bonded to a polytetrafluoroethylene plate (Yodoflon, available from Yodogawa Hu-Tech Co., Ltd., 50 mm in width × 200 mm in length × 2 mm in thickness) by moving a 2-kg rubber roller back and forth once thereon at a speed of 300 mm/min. Thus, a laminate was prepared. The PET release film protecting the hot-melt adhesive layer of the obtained laminate was removed. The hot-melt adhesive layer was pressure-bonded to a SUS probe (5 mmφ) at 23°C, a pressuring pressure of 98 gf, a pressuring speed of 100 mm/sec, and a pressuring time of 10 seconds. The laminate was left to stand in an environment at 23°C and 50% RH for 10 minutes, and then the hot-melt adhesive layer was peeled off from the SUS at a withdrawal speed of 5 mm/sec. Subsequently, the surface of the hot-melt adhesive layer and the bonding surface between the polytetrafluoroethylene plate and the first adhesive layer were observed visually and with an optical microscope.
The workability during attachment was evaluated as "◦" when the observed surface of the hot-melt adhesive layer was not rough and the adhesive tape did not peel off from the polytetrafluoroethylene plate, and evaluated as "×" when the first adhesive layer peeled off from the polytetrafluoroethylene plate in the attaching operation.
This evaluation was performed only on the adhesive tapes including a hot-melt adhesive layer, that is, only in Examples 83 to 88.

[Table 10]

[Table 11]

| | | Example 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|---|---|---|---|---|---|---|---|---|---|---|---|---|---|---|
| Evaluation | Holding performance: Amount of displacement (mm) | ○ | ○ | ○○ | ○○ | ○○ | ○○ | ○○ | ○○ | ○○ | ○○ | ○○ | ○○ | △ | △ | △ | ○○ | ○○ | ○○ | ○○ | ○○ | ○ | △ |
| | Holding performance: Peel surface | C | C | C | C | C | C | C | C | C | C | C | C | C | B | B | C | C | C | C | C | C | C |
| | Potential for contaminating adherend | ○ | ○ | ○ | ○ | ○ | ○ | ○ | ○ | ○ | ○ | ○ | ○ | ○ | ○ | ○ | ○ | ○ | ○ | ○ | ○ | ○ | △ |
| | Reworkability | - | - | - | - | - | - | - | - | - | - | - | - | - | - | - | - | - | - | - | - | - | - |
| | Workability during attachment | - | - | - | - | - | - | - | - | - | - | - | - | - | - | - | - | - | - | - | - | - | - |

[Table 12]

| | | Example | | | | | | | | | | | | | | | | | | | | | | | |
|---|---|---|---|---|---|---|---|---|---|---|---|---|---|---|---|---|---|---|---|---|---|---|---|---|---|
| | | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 |
| Evaluation | Holding performance - Amount of displacement (mm) | △ | △ | △ | △ | ○○ | ○○ | ○○ | ○○ | ○○ | ○○ | ○○ | ○○ | ○○ | ○○ | ○○ | ○○ | △ | ○ | ○ | △ | ○○ | ○○ | ○○ | ○○ |
| | Holding performance - Peel surface | C | B | C | C | B | B | B | B | C | C | C | C | B | C | C | C | C | C | C | C | C | C | C | C |
| | Potential for contaminating adherend | ○ | ○ | ○ | ○ | ○ | ○ | ○ | ○ | ○ | ○ | ○ | ○ | ○ | ○ | ○ | ○ | ○ | ○ | ○ | △ | ○ | ○ | ○ | ○ |
| | Reworkability | - | - | - | - | - | - | - | - | - | - | - | - | - | - | - | - | - | - | - | - | - | - | - | - |
| | Workability during attachment | - | - | - | - | - | - | - | - | - | - | - | - | - | - | - | - | - | - | - | - | - | - | - | - |

| | | | Example | | | | | | | | | | | | | | | | | |
|---|---|---|---|---|---|---|---|---|---|---|---|---|---|---|---|---|---|---|---|---|
| | | | 47 | 48 | 49 | 50 | 51 | 52 | 53 | 54 | 55 | 56 | 57 | 58 | 59 | 60 | 61 | 62 | 63 | 64 |
| Evaluation | Holding performance | Amount of displacement (mm) | ○○ | ○○ | ○○ | ○○ | ○○ | ○○ | ○○ | ○○ | ○○ | ○○ | ○○ | ○○ | ○○ | ○○ | ○○ | △ | △ | ○○ |
| | | Peel surface | C | C | C | C | C | C | C | C | C | C | C | C | C | C | C | B | B | C |
| | Potential for contaminating adherend | | ○ | ○ | ○ | ○ | ○ | ○ | ○ | ○ | ○ | ○ | ○ | ○ | ○ | ○ | ○ | ○ | ○ | ○ |
| | Reworkability | | ○ | ○ | ○ | ○ | ○ | ○ | ○ | ○ | ○ | ○ | ○ | ○ | ○ | ○ | ○ | ○ | ○ | ○ |
| | Workability during attachment | | - | - | - | - | - | - | - | - | - | - | - | - | - | - | - | - | - | - |

[Table 13]

| | | | Example | | | | | | | | | | | | | | | | | |
|---|---|---|---|---|---|---|---|---|---|---|---|---|---|---|---|---|---|---|---|---|
| | | | 65 | 66 | 67 | 68 | 69 | 70 | 71 | 72 | 73 | 74 | 75 | 76 | 77 | 78 | 79 | 80 | 81 | 82 |
| Evaluation | Holding performance | Amount of displacement (mm) | ○○ | ○○ | ○○ | ○○ | ○○ | ○○ | ○○ | △ | ○○ | ○○ | ○○ | ○○ | ○○ | ○○ | ○○ | ○○ | ○○ | ○○ |
| | | Peel surface | C | C | C | C | C | C | C | B | C | C | C | C | C | C | C | C | C | C |
| | Potential for contaminating adherend | | ○ | ○ | ○ | ○ | ○ | △ | ○ | ○ | ○ | ○ | ○ | ○ | ○ | ○ | ○ | ○ | ○ | ○ |
| | Reworkability | | ○ | ○ | ○ | ○ | ○ | ○ | ○ | ○ | ○ | ○ | ○ | ○ | △ | △ | ○ | ○ | ○ | × |
| | Workability during attachment | | - | - | - | - | - | - | - | - | - | - | - | - | - | - | - | - | - | - |

[Table 14]

| | | | Example | | | | | |
|---|---|---|---|---|---|---|---|---|
| | | | 83 | 84 | 85 | 86 | 87 | 88 |
| Evaluation | Holding performance | Amount of displacement (mm) | ○○ | ○○ | ○○ | ○○ | ○○ | ○○ |
| | | Peel surface | B | C | B | C | B | B |
| | Potential for contaminating adherend | | ○ | ○ | ○ | ○ | ○ | ○ |
| | Reworkability | | ○ | ○ | ○ | - | - | - |
| | Workability during attachment | | ○ | ○ | ○ | ○ | ○ | ○ |

[Table 15]

| | | | Comparative Example | | | | | | |
|---|---|---|---|---|---|---|---|---|---|
| | | | 1 | 2 | 3 | 4 | 5 | 6 | 7 |
| Evaluation | Holding performance | Amount of displacement (mm) | ○○ | ○○ | × | × | ○○ | × | × |
| | | Peel surface | A | A | B | B | C | B | B |
| | Potential for contaminating adherend | | × | × | ○ | ○ | × | ○ | ○ |
| | Reworkability | | - | - | - | - | ○ | ○ | ○ |
| | Workability during attachment | | - | - | - | - | - | - | - |

INDUSTRIAL APPLICABILITY

The present invention can provide an adhesive tape that has excellent holding performance and low potential for contaminating adherends and that can facilitate fluororesin bonding. The present invention can also provide a chemical tank including the adhesive tape attached thereto. The present invention can also provide a method for producing a chemical tank using the adhesive tape.

REFERENCE SIGNS LIST

1 adhesive tape
2 SUS 304 plate
3 1-kg weight

**Claims**

**1.** An adhesive tape, comprising:

a substrate; and
a first adhesive layer adjacent to one surface of the substrate,
the substrate including a fluororesin-containing resin film,
the first adhesive layer containing a base polymer (P1) and a tackifier resin,
the base polymer (P1) including at least one selected from the group consisting of a (meth)acrylic copolymer and a styrene elastomer.

**2.** The adhesive tape according to claim 1,

wherein the adhesive tape includes the substrate, the first adhesive layer, an intermediate layer, and a second adhesive layer in this order,
the second adhesive layer contains a base polymer (P2), and
the base polymer (P2) includes at least one selected from the group consisting of a (meth)acrylic copolymer and a styrene elastomer.

3. The adhesive tape according to claim 2, wherein the second adhesive layer has a probe tack value of 20 N/5 mmφ or less as measured at 23°C, a pressuring pressure of 98 gf, a pressuring speed of 100 mm/sec, a pressuring time of 10 seconds, and a withdrawal speed of 5 mm/sec.

4. The adhesive tape according to claim 1, wherein the adhesive tape includes the substrate, the first adhesive layer, and a hot-melt adhesive layer in this order.

5. The adhesive tape according to claim 1, 2, 3, or 4, wherein the (meth)acrylic copolymer in the base polymer (P1) contains a structural unit derived from an alkyl (meth) acrylate containing a C4-C12 alkyl group at an ester end and at least one structural unit selected from the group consisting of a structural unit derived from a carboxy group-containing (meth)acrylate and a structural unit derived from a hydroxy group-containing (meth)acrylate.

6. The adhesive tape according to claim 5, wherein the alkyl (meth)acrylate containing a C4-C12 alkyl group at an ester end includes an alkyl (meth)acrylate containing a C6-C8 alkyl group at an ester end.

7. The adhesive tape according to claim 5 or 6, wherein the alkyl (meth)acrylate containing a C4-C12 alkyl group at an ester end includes n-heptyl (meth)acrylate.

8. The adhesive tape according to claim 6 or 7, wherein in the (meth)acrylic copolymer, a structural unit derived from the alkyl (meth)acrylate containing a C6-C8 alkyl group at an ester end is contained in a proportion of 50% by mass or more and 99.5% by mass or less.

9. The adhesive tape according to claim 1, 2, 3, 4, 5, 6, 7, or 8,

wherein the tackifier resin includes a tackifier resin (T1) that contains at least one structural unit (A) selected from the group consisting of a structural unit (A-1), a structural unit (A-1'), a structural unit (A-2), a structural unit (A-2'), a structural unit (A-3), a structural unit (A-3'), a structural unit (A-4), and a structural unit (A-4') that are represented by the following formulas:

[Chem. 1]

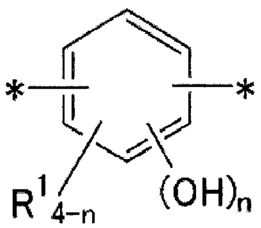

(A-1)

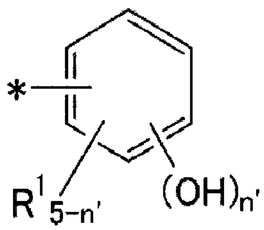

(A-1')

[Chem. 2]

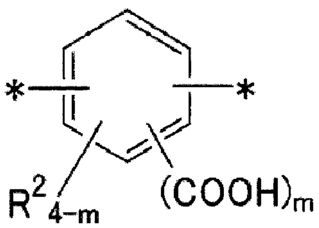

(A-2)

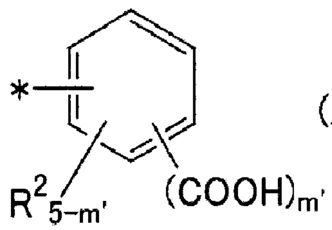

(A-2')

[Chem. 3]

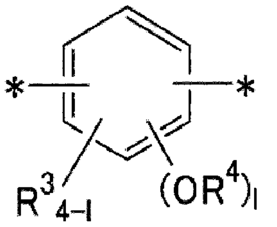

(A-3)

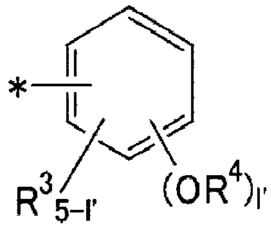

(A-3')

[Chem. 4]

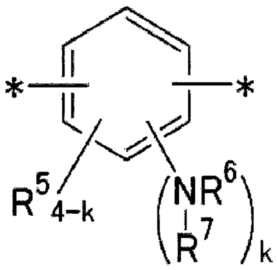

(A-4)

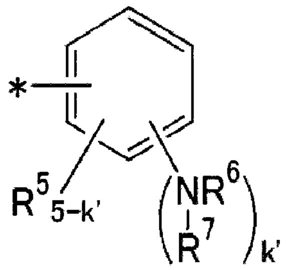

(A-4')

wherein $R^1$ to $R^7$ each represent a hydrogen atom, an aliphatic hydrocarbon group, an aromatic hydrocarbon group, a polar functional group, an aliphatic hydrocarbon group containing a polar functional group, or an aromatic hydrocarbon group containing a polar functional group; n and l each represent an integer of 2 or greater and 4 or less; n' and l' each represent an integer of 2 or greater and 5 or less; m and k each represent an integer of 1 or greater and 4 or less; m' and k' each represent an integer of 1 or greater and 5 or less; and * represents a linking moiety.

**10.** The adhesive tape according to claim 9,
wherein the tackifier resin (T1) further contains a structural unit (B) derived from at least one monomer (b) selected from the group consisting of a terpene monomer and a vinyl monomer.

**11.** The adhesive tape according to the disclosure 9 or 10,
wherein the tackifier resin (T1) is contained in an amount of 5 parts by mass or more and 50 parts by mass or less relative to 100 parts by mass of the base polymer (P1).

**12.** The adhesive tape according to claim 1, 2, 3, 4, 5, 6, 7, 8, 9, 10, or 11,
wherein the tackifier resin includes at least one tackifier resin (T2) selected from the group consisting of a rosin ester resin, a terpene resin, a terpene phenol resin, and a petroleum resin.

**13.** The adhesive tape according to claim 12,
wherein the tackifier resin (T2) includes a rosin ester resin.

**14.** The adhesive tape according to claim 12 or 13,
wherein the tackifier resin (T2) has a softening temperature of 50°C or higher and 200°C or lower.

**15.** The adhesive tape according to claim 1, 2, 3, 4, 5, 6, 7, 8, 9, 10, 11, 12, 13, or 14,
wherein the first adhesive layer contains no organosilicon compound or contains an organosilicon compound in a proportion of 3.0% by mass or less.

**16.** The adhesive tape according to claim 1, 2, 3, 4, 5, 6, 7, 8, 9, 10, 11, 12, 13, 14, or 15,
wherein the first adhesive layer has a 180° peeling force at 23°C for the substrate of 2.5 N/25 mm or greater.

**17.** The adhesive tape according to claim 1, 2, 3, 4, 5, 6, 7, 8, 9, 10, 11, 12, 13, 14, 15, or 16,
wherein the first adhesive layer has a loss tangent (tanδ) that has a peak in a temperature range from -30°C to 15°C as measured by dynamic viscoelasticity measurement at a frequency of 10 Hz.

**18.** The adhesive tape according to claim 17,
wherein the first adhesive layer has a shear storage modulus at 25°C of $1.0 \times 10^4$ Pa or greater and $5.0 \times 10^5$ Pa or less as measured by dynamic viscoelasticity measurement at a frequency of 10 Hz, and has a loss tangent (tanδ) that has a peak in a temperature range from -30°C to 15°C as measured by dynamic viscoelasticity measurement at a frequency of 10 Hz.

**19.** The adhesive tape according to claim 1, 2, 3, 4, 5, 6, 7, 8, 9, 10, 11, 12, 13, 14, 15, 16, 17, or 18,
wherein the first adhesive layer has a gel fraction of 15% by mass or greater and 70% by mass or less.

**20.** The adhesive tape according to claim 1, 2, 3, 4, 5, 6, 7, 8, 9, 10, 11, 12, 13, 14, 15, 16, 17, 18, or 19,
wherein the first adhesive layer has a thickness of 20 μm or greater and 500 μm or less.

**21.** The adhesive tape according to claim 1, 2, 3, 4, 5, 6, 7, 8, 9, 10, 11, 12, 13, 14, 15, 16, 17, 18, 19, or 20,
wherein the fluororesin-containing resin film includes at least one selected from the group consisting of a fluororesin-impregnated glass cloth and a laminate film including a fluororesin layer and a glass cloth layer.

**22.** The adhesive tape according to claim 1, 2, 3, 4, 5, 6, 7, 8, 9, 10, 11, 12, 13, 14, 15, 16, 17, 18, 19, 20, or 21,
wherein the substrate has a thickness of 50 μm or greater and 5,000 μm or less.

**23.** The adhesive tape according to claim 2 or 3,
wherein the second adhesive layer has a 180° peeling force at 23°C for SUS of 8.0 N/25 mm or less.

**24.** The adhesive tape according to claim 2, 3, or 23,
wherein the second adhesive layer has a thickness of 20 μm or greater and 500 μm or less.

**25.** The adhesive tape according to claim 2, 3, 23, or 24,
wherein the intermediate layer contains at least one selected from the group consisting of a polyester resin, a polyimide resin, a polyolefin resin, a polyurethane resin, a glass fiber, a carbon fiber, and a metal.

**26.** The adhesive tape according to claim 2, 3, 23, 24, or 25,
wherein the intermediate layer has a foam structure.

**27.** The adhesive tape according to claim 4,
wherein the adhesive tape has a 180° peeling force at 23°C for SUS of 5.0 N/25 mm or greater when the hot-melt adhesive layer is pressure-bonded to SUS by pressurization at 0.1 MPa for 10 minutes in an environment at 150°C.

**28.** The adhesive tape according to claim 4 or 27,

wherein the hot-melt adhesive layer contains a base polymer (P3), and
the base polymer (P3) contains at least one selected from the group consisting of a (meth)acrylic copolymer, a styrene elastomer, an ethylene-vinyl acetate copolymer, a chloroprene rubber, a nitrile rubber, a polyurethane resin, a polyamide resin, a polyolefin resin, a polyester resin, and an epoxy resin.

**29.** The adhesive tape according to claim 1, 2, 3, 4, 5, 6, 7, 8, 9, 10, 11, 12, 13, 14, 15, 16, 17, 18, 19, 20, 21, 22, 23, 24, 25, 26, 27, or 28, which is used for protecting an adherend.

**30.** The adhesive tape according to claim 29, which is used for protecting an adherend from a chemical liquid.

**31.** The adhesive tape according to claim 30, which is used for lining a tank body of a chemical tank for a semiconductor or of a chemical tank for a chemical industry.

**32.** A chemical tank comprising:

a tank body; and
the adhesive tape according to claim 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, or 31 attached to an inner surface of the tank body.

**33.** A method for producing a chemical tank for a semiconductor or a chemical tank for a chemical industry, the method

comprising
a step of attaching the adhesive tape according to claim 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, or 31 to an inner surface of a tank body of a chemical tank.

FIG.1

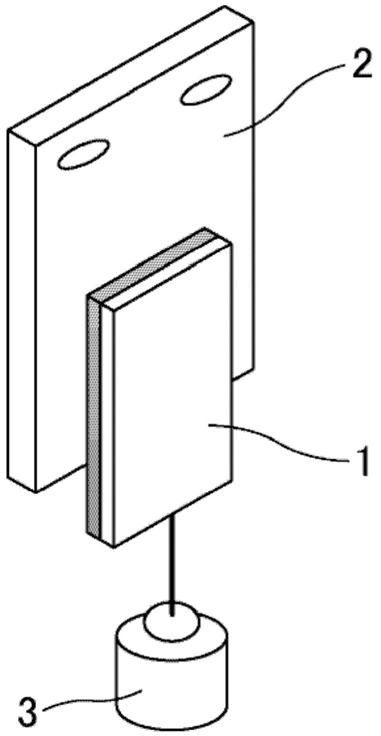

## INTERNATIONAL SEARCH REPORT

International application No.
**PCT/JP2024/017302**

**A. CLASSIFICATION OF SUBJECT MATTER**

***C09J 7/38***(2018.01)i; ***B32B 27/00***(2006.01)i; ***C08L 33/04***(2006.01)i; ***C08L 101/00***(2006.01)i; ***C09J 7/22***(2018.01)i; ***C09J 109/06***(2006.01)i; ***C09J 133/00***(2006.01)i; ***C09J 133/02***(2006.01)i; ***C09J 133/04***(2006.01)i; ***C09J 133/06***(2006.01)i; ***C09J 133/14***(2006.01)i; ***C09J 153/02***(2006.01)i
FI: C09J7/38; B32B27/00 M; C08L33/04; C08L101/00; C09J7/22; C09J109/06; C09J133/00; C09J133/02; C09J133/04; C09J133/06; C09J133/14; C09J153/02

According to International Patent Classification (IPC) or to both national classification and IPC

**B. FIELDS SEARCHED**

Minimum documentation searched (classification system followed by classification symbols)

C09J1/00-201/10, B32B1/00-43/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 4-202280 A (SHIN-ETSU CHEMICAL CO., LTD.) 23 July 1992 (1992-07-23) claims, p. 1, right column, lines 5, 6, p. 2, upper right column, lines 11-20, p. 3, lower right column, lines 9-12, p. 4, upper left column, line 16 to upper right column, line 5 | 1, 12-16, 20, 29-33<br>2-4, 12-14, 23-28 |
| X<br>Y | JP 2013-177549 A (NITTO DENKO CORPORATION) 09 September 2013 (2013-09-09) claims, paragraphs [0027], [0039], [0042], [0044], [0062], [0074], examples | 1, 5-7, 12-16, 20, 22, 29<br>12-14 |
| X<br>Y | WO 2012/063810 A1 (NITTO DENKO CORPORATION) 18 May 2012 (2012-05-18) claims, paragraphs [0024], [0045], [0052], [0055], [0124], [0132], [0161], examples | 1, 5-8, 15-16, 20-22, 29<br>12-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 July 2024** | **06 August 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/017302**

**C. DOCUMENTS CONSIDERED TO BE RELEVANT**

| Category* | Citation of document, with indication, where appropriate, of the relevant passages | Relevant to claim No. |
|---|---|---|
| Y | JP 59-19151 A (TOYO TIRE & RUBBER CO., LTD.) 31 January 1984 (1984-01-31) claims, p. 3, lower left column, lines 4-8 | 2-4, 23-24, 27-28 |
| Y | JP 61-182939 A (DAI-ICHI HIGH FREQUENCY CO., LTD.) 15 August 1986 (1986-08-15) claims, p. 2, lower left column, lines 6-9, example 2 | 2-4, 23-28 |
| A | WO 2022/045308 A1 (SEKISUI CHEMICAL CO., LTD.) 03 March 2022 (2022-03-03) entire text | 1-33 |

Form PCT/ISA/210 (second sheet) (July 2022)

**INTERNATIONAL SEARCH REPORT**
**Information on patent family members**

International application No.
**PCT/JP2024/017302**

| Patent document cited in search report | Publication date (day/month/year) | Patent family member(s) | Publication date (day/month/year) |
|---|---|---|---|
| JP 4-202280 A | 23 July 1992 | (Family: none) | |
| JP 2013-177549 A | 09 September 2013 | WO 2013/114955 A1 | |
| | | WO 2013/114956 A1 | |
| WO 2012/063810 A1 | 18 May 2012 | US 2013/0224475 A1 claims | |
| | | EP 2639276 A1 | |
| | | CN 103201351 A | |
| JP 59-19151 A | 31 January 1984 | (Family: none) | |
| JP 61-182939 A | 15 August 1986 | (Family: none) | |
| WO 2022/045308 A1 | 03 March 2022 | US 2023/0340307 A1 | |
| | | EP 4206174 A1 | |
| | | CN 115516002 A | |
| | | KR 10-2023-0058002 A | |
| | | TW 202219223 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015052050 A
- JP 2015021067 A
- JP 2015120876 A